# EUROPEAN PATENT APPLICATION

(11) **EP 4 692 589 A1**
(43) Date of publication of application: **11.02.2026**
(21) Application number: 24777926.7
(22) Date of filing: 22.03.2024
(51) Int. Cl.: F16F 9/34, F16F 9/32

(54) **DAMPING VALVE APPARATUS AND SHOCK ABSORBER**

(30) Priority: 28.03.2023 CN 202310316750; 28.03.2023 CN 202320649001 U; 30.05.2023 CN 202321350640 U; 12.03.2024 CN 202420482546 U
(71) Applicant: Lanxun Auto Air Suspension System (Chuzhou) Co., Ltd., Chuzhou, Anhui 239064 (CN)
(72) Inventor: JIA, Dehuai, Chuzhou, Anhui 239064 (CN); DAI, James, Chuzhou, Anhui 239064 (CN); LUO, Xiang, Chuzhou, Anhui 239064 (CN); YUAN, Feng, Chuzhou, Anhui 239064 (CN)
(74) Representative: EIP
(86) International application number: PCT/CN2024/083358
(87) International publication number: WO 2024/199137

(57) **Abstract**

A damping valve apparatus, comprising a valve sleeve (1110), a first valve core (1120), and a second valve core (1130). The first valve core and second valve core are each located in the valve sleeve, the first valve core is configured to move axially relative to the second valve core, and the second valve core comprises an annular main body part and an end cover part; the end cover part is located on the side of the annular main body part closest to the first valve core, and the end cover part is provided with a through hole axially passing through the end cover; an orthographic projection of an end face of the first valve core closest to the second valve core onto a reference plane at least partially falls within an orthographic projection of the end cover part onto the reference plane, an orthographic projection of the end surface onto the reference plane encircles an orthographic projection of the through hole onto the reference plane, the reference plane is perpendicular to the axial direction, and the annular main body part and the end cover part are fixedly connected or integrally formed. Additionally comprised is a shock absorber. The damping valve apparatus and the shock absorber are simple in structure and convenient to assemble.

## Description

The present application claims the priorities of Chinese Patent Application No. 202310316750.9 filed on March 28, 2023, Chinese Patent Application No. 202321350640.6 filed on May 30, 2023, Chinese Patent Application No. 202320649001.3 filed on March 28, 2023 and Chinese Patent Application No. 202420482546.4 filed on March 12, 2024, the disclosures of which are incorporated by reference herein in their entireties as part of the present application.

### TECHNICAL FIELD

Embodiments of the present disclosure relate to a damping valve device and a shock absorber.

### BACKGROUND

In an automobile suspension system, because a spring may experience reciprocating motion itself when filtering road shocks, in order to improve the ride comfort of automobile, a shock absorber may be usually installed in the suspension system to inhibit the rebounding oscillation of the spring after absorbing shocks. Therefore, the shock absorber can reduce the shocks of the automobile frame and the automobile body to improve the ride comfort of automobile.

On the other hand, with the rapid development of the automobile industry and the continuous improvement of people's living standards, people have increasingly high requirements on the ride comfort of automobile. A shock absorber with a single damping value can no longer meet people's requirements. Accordingly, damping value adjustable shock absorbers come into being.

### SUMMARY

In order to meet different road conditions and driving modes and improve driving comfort experience, automobile shock absorbers are usually designed with adjustable damping size. The present disclosure provides a damping valve device with simpler structure, which is convenient for assembling and can reduce the costs.

Embodiments of the present disclosure provide a damping valve device and a shock absorber.

At least one embodiment of the present disclosure provides a damping valve device, which includes: a valve sleeve, including a first end and a second end that are opposite to each other in an axial direction of the valve sleeve; a first valve core, located within the valve sleeve; and a second valve core, located within the valve sleeve, the second valve core being closer to the second end of the valve sleeve than the first valve core; the first valve core is configured to move along the axial direction relative to the second valve core; the second valve core includes an annular main body part and an end cap part; the end cap part is located at a side of the annular main body part close to the first valve core; the end cap part is provided with a through hole penetrating through the end cap part along the axial direction; an orthographic projection of an end face of the first valve core close to the second valve core on a reference plane at least partially falls within an orthographic projection of the end cap part on the reference plane; the orthographic projection of the end face on the reference plane surrounds an orthographic projection of the through hole on the reference plane; the reference plane is perpendicular to the axial direction X; and the annular main body part and the end cap part are fixedly connected or integrally formed.

For example, in the damping valve device provided by an embodiment of the present disclosure, a shape of the end face includes a ring shape.

For example, in the damping valve device provided by an embodiment of the present disclosure, the orthographic projection of the end face on the reference plane completely falls within the orthographic projection of the end cap part on the reference plane.

For example, in the damping valve device provided by an embodiment of the present disclosure, the orthographic projection of the end face on the reference plane at least partially falls within an orthographic projection of the annular main body part on the reference plane.

For example, in the damping valve device provided by an embodiment of the present disclosure, the end face is parallel to the end cap part.

For example, in the damping valve device provided by an embodiment of the present disclosure, a peripheral radial dimension of the end face is smaller than a peripheral radial dimension of the end cap part.

For example, in the damping valve device provided by an embodiment of the present disclosure, the peripheral radial dimension of the end cap part is smaller than a peripheral radial dimension of the annular main body part, and the peripheral radial dimension of the end face is smaller than a maximum peripheral radial dimension of the first valve core.

For example, in the damping valve device provided by an embodiment of the present disclosure, an end of the first valve core close to the second valve core includes a third end; a shape of the third end is a ring shape; the end face is a surface of the third end facing the second valve core; and the third end includes an opening penetrating through an outer sidewall and an inner sidewall of the third end.

For example, the damping valve device provided by an embodiment of the present disclosure further includes: an elastic element, located between the first valve core and the second valve core, one end of the elastic element is attached with the first valve core, and the other end of the elastic element is attached with the end cap part.

For example, in the damping valve device provided by an embodiment of the present disclosure, the first valve core further includes a guide shaft extending along the axial direction; the end cap part includes a guide hole; the guide shaft is located within the guide hole; and the elastic element is sleeved on the guide shaft.

For example, in the damping valve device provided by an embodiment of the present disclosure, the valve sleeve includes a circulation hole penetrating through an outer sidewall and an inner sidewall of the valve sleeve; and the circulation hole at least partially overlaps with the first valve core and the second valve core in a radial direction of the valve sleeve.

For example, the damping valve device provided by an embodiment of the present disclosure further includes: a third valve core, located at a side of the first valve core away from the second valve core in the axial direction and configured to move along the axial direction relative to the first valve core, the first valve core includes a first body part and a second body part; the second body part is closer to the second valve core than the first body part; an outer diameter of the second body part is greater than an outer diameter of the first body part; a surface of a portion of the second body part, that is not overlaid by the first body part, close to the third valve core, a lateral surface of the first body part, and an inner wall of the valve sleeve to form an accommodating cavity; the first body part includes a pressure relief channel; a first port of the pressure relief channel faces the third valve core; the third valve core is configured to cover or open the first port; a second port of the pressure relief channel is communicated with the accommodating cavity; the second body part includes an intercepting channel; and the accommodating cavity is communicated with the circulation hole through the intercepting channel.

For example, in the damping valve device provided by an embodiment of the present disclosure, the intercepting channel is located on an outer lateral surface of the second body part; or the intercepting channel is located within the second body part.

For example, in the damping valve device provided by an embodiment of the present disclosure, a cross-sectional dimension of the intercepting channel along an extension direction of the intercepting channel is uniform; or the cross-sectional dimension of the intercepting channel along the extension direction of the intercepting channel is gradually varied.

For example, in the damping valve device provided by an embodiment of the present disclosure, the intercepting channel is located on an outer lateral surface of the second body part; an inner surface of the valve sleeve includes a mating surface opposite to the intercepting channel, and a part of the mating surface is configured to define the accommodating cavity; and a spacing between the mating surface and a geometric center line of the intercepting channel is not equidistant in the extension direction of the intercepting channel.

For example, in the damping valve device provided by an embodiment of the present disclosure, the spacing between the mating surface and the geometric center line of the intercepting channel gradually increases or gradually decreases in the extension direction of the intercepting channel.

For example, in the damping valve device provided by an embodiment of the present disclosure, the first valve core is in sliding fit with the valve sleeve along the axial direction, and the second valve core is fixedly connected with the valve sleeve.

For example, the damping valve device provided by an embodiment of the present disclosure further includes: a control unit, located at a side of the first valve core away from the second end, the control unit is connected with the first valve core to control the first valve core to move along the axial direction relative to the second valve core.

For example, in the damping valve device provided by an embodiment of the present disclosure, the control unit includes an electromagnetic valve.

At least one embodiment of the present disclosure provides a shock absorber, which includes a housing and a damping valve device according to any one of the above examples, and the damping valve device is disposed in the housing.

The annular main body part and the end cover part of the second valve core of the damping valve device disclosed by the present disclosure are designed to be fixedly connected or integrally formed, which not only can make the structure of the second valve core and the damping valve device simple and convenient to assemble, but also can avoid missing components, improve assembly efficiency, improve product yield and reduce the costs of the damping valve device. In addition, there is no relative movement between the two valves, so that the abnormal sound problem of the damping valve device can be avoided, and at the same time, the circulation of the damping medium will not be affected by relative movement of the two valves, so that the damping performance of the damper valve is more stable and can be controlled better.

In order to meet different road conditions and driving modes and improve the driving comfort experience, automobile shock absorbers are usually designed with adjustable damping size. The present disclosure provides a damping valve device, which has a simpler structure, is convenient to process and assemble, can reduce the costs, and can also improve the universality of the damping valve device.

Embodiments of the present disclosure provide a damping valve device and a shock absorber.

At least one embodiment of the present disclosure provides a damping valve device, which includes: a valve sleeve; a first valve core, located within the valve sleeve; a second valve core, located within the valve sleeve, the first valve core and the second valve core being disposed oppositely along an axial direction of the valve sleeve; a valve sheet, located between the first valve core and the second valve core in the axial direction of the valve sleeve; and an elastic element, located at a side of the valve sheet close to the second valve core, the second valve core includes an annular main body part and a support part located within the annular main body part; the support part is provided with a through hole penetrating through the support part along the axial direction; the elastic element includes a first end and a second end that are opposite to each other along the axial direction; the first end is in contact fit with the valve sheet, and the second end is in contact fit with the support part of the second valve core; the valve sheet is configured to move along the axial direction relative to the second valve core under an action of the elastic element so as to form a circulation channel between the valve sheet and the second valve core; and the first valve core is configured to move along the axial direction relative to the second valve core to adjust a size of the circulation channel.

For example, in the damping valve device provided by an embodiment of the present disclosure, the valve sheet is configured to be fixed in the axial direction relative to the first valve core under the action of the elastic element.

For example, in the damping valve device provided by an embodiment of the present disclosure, a shape of the valve sheet includes a disc shape.

For example, in the damping valve device provided by an embodiment of the present disclosure, a side of the first valve core close to the valve sheet includes a first end face, and a shape of the first end face includes a ring shape; a side of the second valve core close to the valve sheet includes a second end face, and a shape of the second end face includes a ring shape: an orthographic projection of the first end face on a reference plane at least partially falls within an orthographic projection of the valve sheet on the reference plane, and an orthographic projection of the second end face on the reference plane at least partially falls within the orthographic projection of the valve sheet on the reference plane; and the reference plane is perpendicular to the axial direction.

For example, in the damping valve device provided by an embodiment of the present disclosure, a radial dimension of the valve sheet is greater than or equal to a radial dimension of the first end face and greater than or equal to a radial dimension of the second end face.

For example, in the damping valve device provided by an embodiment of the present disclosure, the first valve core includes a first guide shaft that extends along the axial direction towards the second valve core; and the valve sheet and the elastic element are sleeved on the first guide shaft.

For example, in the damping valve device provided by an embodiment of the present disclosure, a guide hole extending along the axial direction is disposed in the support part of the second valve core; and the guide hole is fit with the first guide shaft such that the guide hole plays a role in guiding a motion of the first guide shaft along the axial direction.

For example, in the damping valve device provided by an embodiment of the present disclosure, a second guide shaft is disposed on the support part of the second valve core and extends along the axial direction towards the first valve core; and the valve sheet and the elastic element are sleeved on the second guide shaft.

For example, in the damping valve device provided by an embodiment of the present disclosure, a blocking structure is further disposed at an end of the second guide shaft close to the first valve core, and the blocking structure is configured to block the valve sheet from separating from the second guide shaft.

For example, in the damping valve device provided by an embodiment of the present disclosure, the valve sleeve includes a circulation hole penetrating through an outer sidewall and an inner sidewall of the valve sleeve; and the circulation hole at least partially overlaps with the valve sheet in a radial direction of the valve sleeve.

For example, the damping valve device provided by an embodiment of the present disclosure further includes: a third valve core, located at a side of the first valve core away from the second valve core in the axial direction and configured to move along the axial direction relative to the first valve core, the first valve core includes a first body part and a second body part; the second body part is closer to the second valve core than the first body part; an outer diameter of the second body part is greater than an outer diameter of the first body part; a portion of the second body part that is not overlaid by the first body part is close to a surface of the third valve core, a lateral surface of the first body part, and an inner wall of the valve sleeve to form an accommodating cavity; the first body part includes a pressure relief channel; a first port of the pressure relief channel faces the third valve core; the third valve core is configured to cover or open the first port; a second port of the pressure relief channel is communicated with the accommodating cavity; the second body part includes an intercepting channel, the intercepting channel penetrates through the second body part; and the accommodating cavity is communicated with the circulation hole through the intercepting channel.

For example, in the damping valve device provided by an embodiment of the present disclosure, the intercepting channel penetrates through the internal of the second body part.

For example, in the damping valve device provided by an embodiment of the present disclosure, radial dimensions of two opposite ends of the intercepting channel are greater than or equal to a radial dimension of at least a part of the intercepting channel between the two opposite ends.

For example, the damping valve device provided by an embodiment of the present disclosure further includes: a control unit, located at a side of the first valve core away from the second valve core, the first valve core is in sliding fit with the valve sleeve along the axial direction, and the second valve core is fixedly connected with the valve sleeve; and the control unit is connected with the first valve core to control the first valve core to move along the axial direction relative to the second valve core.

At least one embodiment of the present disclosure provides a shock absorber, which includes a housing and a damping valve device according to any one of the above examples, and the damping valve device is disposed in the housing.

One object of the present disclosure is to improve the damping characteristics of a restoring valve used in a damping valve device (for example, an adjustable damping valve device). According to the embodiment of the present disclosure, two fluid channels are arranged on the flow path from the inside to the outside of the restoring valve, and other normal functions of the restoring valve are not affected on the basis of improving the damping characteristics.

At least one embodiment of the present disclosure provides a damping valve device, which includes a restoring valve, the restoring valve includes: a sleeve part, including a tubular portion and a valve seat connected to an opening at one end of the tubular portion. the valve seat including a first circulation hole and a second circulation hole that penetrate through the valve seat; an upper restoring circulation valve sheet, located at a side of the valve seat in an extension direction of the first circulation hole and the second circulation hole and located within the tubular portion, and configured to cover the first circulation hole; and a lower restoring circulation valve sheet, located at a side of the valve seat opposite to the upper restoring circulation valve sheet and configured to cover the second circulation hole, the upper restoring circulation valve sheet includes a hollowed-out part and exposes the second circulation hole through the hollowed-out part to form a first circulation channel from an inside of the restoring valve to an outside of the restoring valve; a gap is formed between an edge of the upper restoring circulation valve sheet and an inner wall of the tubular portion; and the gap is communicated with the second circulation hole through an interval between the upper restoring circulation valve sheet and the valve seat to from a second circulation channel from the inside of the restoring valve to the outside of the restoring valve.

In the damper valve provided by some embodiments of the present disclosure, an opening of the first circulation hole close to the upper restoring circulation valve sheet includes a flange; and the flange protrudes from the valve seat towards the upper restoring circulation valve sheet and supports the upper restoring circulation valve sheet such that the interval is formed between at least part of the upper restoring circulation valve sheet located outside the flange and the valve seat.

In the damper valve provided by some embodiments of the present disclosure, the restoring valve further includes a columnar structure penetrating through the upper restoring circulation valve sheet, the valve seat, and the lower restoring circulation valve sheet: two ends of the columnar structure include a first limiting part and a second limiting part that protrude radially; and the first limiting part is located at a side of the upper restoring circulation valve sheet away from the valve seat and the second limiting part is located at a side of the lower restoring circulation valve sheet away from the valve seat to limit positions of the upper restoring circulation valve sheet and the lower restoring circulation valve sheet in an axis direction of the columnar structure.

In the damper valve provided by some embodiments of the present disclosure, the restoring valve further includes a conical spring located between the first limiting part and the upper restoring circulation valve sheet and including a first end having a small diameter and a second end having a large diameter; the first end is abutted against the first limiting part, and the second end is abutted against the upper restoring circulation valve sheet; and the second end at least partially overlaps with the first circulation hole in an axis direction of the tubular portion.

In the damper valve provided by some embodiments of the present disclosure, the upper restoring circulation valve sheet includes a penetration hole in a middle that allows the columnar structure to pass therethrough; and the hollowed-out part of the upper restoring circulation valve sheet includes a plurality of hollowed-out sub-parts, and the plurality of hollowed-out sub-parts are uniformly arranged at a peripheral of the penetration hole.

In the damper valve provided by some embodiments of the present disclosure, the penetration hole is communicated with the plurality of hollowed-out sub-parts.

In the damper valve provided by some embodiments of the present disclosure, the lower restoring circulation valve sheet includes a plurality of sub-sheet structures stacked between the valve seat and the second limiting part; and diameters of the plurality of sub-sheet structures decrease gradually in a direction from the valve seat to the second limiting part.

In the damper valve provided by some embodiments of the present disclosure, at least part of an inner edge of the upper restoring circulation valve sheet is in contact with the columnar structure such that the columnar structure limits a position of the upper restoring circulation valve sheet in a radial direction thereof.

In the damper valve provided by some embodiments of the present disclosure, the upper restoring circulation valve sheet includes a plate-like spring structure.

In the damper valve provided by some embodiments of the present disclosure, the upper restoring circulation valve sheet includes a plurality of sub-sheet structures stacked between the valve seat and the first limiting part; and diameters of the plurality of sub-sheet structures decrease gradually in a direction from the valve seat to the first limiting part; each of the sub-sheet structures includes a first through hole in a middle and a second through hole located at a periphery of the first through hole; second through holes of the plurality of sub-sheet structures are communicated with one another to form the hollowed-out part; and first through holes of the plurality of sub-sheet structures are communicated with one another to form the penetration hole.

In the damper valve provided by some embodiments of the present disclosure, a sub-sheet structure of the plurality of sub-sheet structures closest to the first limiting part is a first sub-sheet structure, and other sub-sheet structures of the plurality of sub-sheet structures between the first sub-sheet structure and the valve seat are second sub-sheet structures; a positioning protrusion protruding towards the valve seat is disposed at a periphery of the first through hole of the first sub-sheet structure; a positioning groove is formed in a sidewall of the first through hole of each of the second sub-sheet structures; and the positioning protrusion of the first sub-sheet structure is inserted into positioning grooves of the second sub-sheet structure.

At least one embodiment of the present disclosure provides a damping valve device, which includes the restoring valve according to any one of the above examples, and an adjustable damper valve structure connected to one end of the tubular portion opposite to the valve seat.

At least one embodiment of the present disclosure provides a shock absorber, which includes the above damping valve device.

One object of the present disclosure is to improve the damping characteristics of a restoring valve used in a damper valve device (for example, an adjustable damper valve device). According to the embodiment of the present disclosure, two fluid channels are arranged on the flow path from the inside to the outside of the restoring valve, and other normal functions of the restoring valve are not affected on the basis of improving the damping characteristics.

At least one embodiment of the present disclosure provides a damping valve device, which includes: a sleeve part, including a tubular portion and a valve seat connected to an opening at one end of the tubular portion, the valve seat including a first circulation hole and a second circulation hole that penetrate through the valve seat; an upper restoring circulation valve sheet, located at a side of the valve seat in an extension direction of the first circulation hole and the second circulation hole and located within the tubular portion, and configured to cover the first circulation hole; and a lower restoring circulation valve sheet, located at a side of the valve seat opposite to the upper restoring circulation valve sheet and configured to cover the second circulation hole, the upper restoring circulation valve sheet includes a hollowed-out part and exposes the second circulation hole through the hollowed-out part to form a first circulation channel from an inside of the restoring valve to an outside of the restoring valve: the upper restoring circulation valve sheet includes a first positioning groove; a gap is formed between an edge of the upper restoring circulation valve sheet and an inner wall of the tubular portion; and the gap is communicated with the second circulation hole through an interval between the upper restoring circulation valve sheet and the valve seat to from a second circulation channel from the inside of the restoring valve to the outside of the restoring valve.

In the damper valve provided by some examples of the present disclosure, an opening of the first circulation hole close to the upper restoring circulation valve sheet includes a flange; and the flange protrudes from the valve seat towards the upper restoring circulation valve sheet and supports the upper restoring circulation valve sheet such that the interval is formed between at least part of the upper restoring circulation valve sheet located outside the flange and the valve seat.

In the damper valve provided by some embodiments of the present disclosure, the restoring valve further includes a columnar structure penetrating through the upper restoring circulation valve sheet, the valve seat, and the lower restoring circulation valve sheet: two ends of the columnar structure include a first limiting part and a second limiting part that protrude radially; and the first limiting part is located at a side of the upper restoring circulation valve sheet away from the valve seat and the second limiting part is located at a side of the lower restoring circulation valve sheet away from the valve seat to limit positions of the upper restoring circulation valve sheet and the lower restoring circulation valve sheet in an axis direction of the columnar structure.

In the damper valve provided by some embodiments of the present disclosure, the restoring valve further includes a conical spring located between the first limiting part and the upper restoring circulation valve sheet and including a first end having a small diameter and a second end having a large diameter; the first end is abutted against the first limiting part, and the second end is abutted against the upper restoring circulation valve sheet; and the second end at least partially overlaps with the first circulation hole in an axis direction of the tubular portion.

In the damper valve provided by some embodiments of the present disclosure, the upper restoring circulation valve sheet includes a penetration hole in a middle that allows the columnar structure to pass therethrough; and the hollowed-out part of the upper restoring circulation valve sheet includes a plurality of hollowed-out sub-parts, and the plurality of hollowed-out sub-parts are uniformly arranged at a peripheral of the penetration hole.

In the damper valve provided by some embodiments of the present disclosure, the penetration hole is communicated with the plurality of hollowed-out sub-parts.

In the damper valve provided by some embodiments of the present disclosure, the lower restoring circulation valve sheet includes a plurality of sub-sheet structures stacked between the valve seat and the second limiting part; and diameters of the plurality of sub-sheet structures decrease gradually in a direction from the valve seat to the second limiting part.

In the damper valve provided by some embodiments of the present disclosure, at least part of an inner edge of the upper restoring circulation valve sheet is in contact with the columnar structure such that the columnar structure limits a position of the upper restoring circulation valve sheet in a radial direction thereof.

In the damper valve provided by some embodiments of the present disclosure, the upper restoring circulation valve sheet includes a plate-like spring structure.

In the damper valve provided by some embodiments of the present disclosure, the upper restoring circulation valve sheet includes a plurality of sub-sheet structures stacked between the valve seat and the first limiting part; and diameters of the plurality of sub-sheet structures decrease gradually in a direction from the valve seat to the first limiting part; each of the sub-sheet structures includes a first through hole in a middle and a second through hole located at a periphery of the first through hole; second through holes of the plurality of sub-sheet structures are communicated with one another to form the hollowed-out part; and first through holes of the plurality of sub-sheet structures are communicated with one another to form the penetration hole.

In the damper valve provided by some embodiments of the present disclosure, a sub-sheet structure of the plurality of sub-sheet structures closest to the first limiting part is a first sub-sheet structure, and other sub-sheet structures of the plurality of sub-sheet structures between the first sub-sheet structure and the valve seat are second sub-sheet structures; a positioning protrusion protruding towards the valve seat is disposed at a periphery of the first through hole of the first sub-sheet structure; a positioning groove is formed in a sidewall of the first through hole of each of the second sub-sheet structures; and the positioning protrusion of the first sub-sheet structure is inserted into positioning grooves of the second sub-sheet structure.

At least one embodiment of the present disclosure provides a damping valve device, which includes the restoring valve according to any one of the above examples; and an adjustable damper valve structure connected to one end of the tubular portion opposite to the valve seat.

With the cooperation of the positioning structure and the first positioning groove of the upper restoring circulation valve sheet, the restoring valve provided by the embodiment of the present disclosure can not only make the upper restoring circulation valve sheet not rotate relative to the valve seat along the circumferential direction of the upper restoring circulation valve sheet, so that the first circulation channel will not change, and the performance stability of the restoring valve is ensured. Moreover, in the installation process, the positioning structure can be used for positioning the upper restoring circulation valve sheet, so that the installation efficiency of the upper restoring circulation valve sheet is improved, the installation time of the upper restoring circulation valve sheet is saved, and the installation consistency of the upper restoring circulation valve sheet is ensured, so that the first circulation channel will not be inconsistent due to assembly problems, and the stability of the performance of the restoring valve is ensured.

At least one embodiment of the present disclosure provides a restoring valve, which includes: a sleeve part, including a tubular portion and a valve seat connected to an opening at one end of the tubular portion, the valve seat including a first circulation hole and a second circulation hole that penetrate through the valve seat; an upper restoring circulation valve sheet, located at a side of the valve seat in an extension direction of the first circulation hole and the second circulation hole and located within the tubular portion, and configured to cover the first circulation hole; and a lower restoring circulation valve sheet, located at a side of the valve seat opposite to the upper restoring circulation valve sheet and configured to cover the second circulation hole, the upper restoring circulation valve sheet includes a hollowed-out part and exposes the second circulation hole through the hollowed-out part to form a first circulation channel from an inside of the restoring valve to an outside of the restoring valve: the upper restoring circulation valve sheet includes a first positioning groove; the restoring valve further includes a positioning structure; and at least part of the positioning structure is located within the first positioning groove such that the upper restoring circulation valve sheet is positioned along a circumferential direction of the upper restoring circulation valve sheet relative to the valve seat.

For example, in the restoring valve provided by an embodiment of the present disclosure, the valve seat includes a second positioning groove disposed corresponding to the first positioning groove; and at least part of the positioning structure is disposed within the first positioning groove and within the second positioning groove to circumferentially position the upper restoring circulation valve sheet relative to the valve seat.

For example, in the restoring valve provided by an embodiment of the present disclosure, the upper restoring circulation valve sheet includes a first penetration hole in a middle; the valve seat includes a second penetration hole disposed corresponding to the first penetration hole; the lower restoring circulation valve sheet includes a third penetration hole disposed corresponding to the first penetration hole and the second penetration hole; the restoring valve further includes a columnar structure passing through the first penetration hole, the second penetration hole, and the third penetration hole; the first positioning groove is located in a sidewall of the first penetration hole; and the second positioning groove is located in a sidewall of the second penetration hole.

For example, in the restoring valve provided by an embodiment of the present disclosure, the positioning structure is disposed on the columnar structure, or the positioning structure and the columnar structure are integrally formed.

For example, in the restoring valve provided by an embodiment of the present disclosure, further including a snap ring sleeved on the columnar structure, and the snap ring includes the positioning structure.

For example, in the restoring valve provided by an embodiment of the present disclosure, the positioning structure is disposed on the valve seat, or the positioning structure and the valve seat are integrally formed.

For example, in the restoring valve provided by an embodiment of the present disclosure, an opening of the first circulation hole close to the upper restoring circulation valve sheet includes a first flange, the first flange protrudes from the valve seat towards the upper restoring circulation valve sheet and supports the upper restoring circulation valve sheet; a first intercepting groove recessed towards the valve seat is formed in a sidewall of the first flange close to the upper restoring circulation valve sheet; and the first intercepting groove is communicated with the first circulation hole to form a first intercepting channel.

For example, in the restoring valve provided by an embodiment of the present disclosure, the upper restoring circulation valve sheet includes a plurality of first sub-sheet structures stacked in the extension direction of the first circulation hole and the second circulation hole; a second intercepting groove is formed in a peripheral wall of a first sub-sheet structure of the plurality of first sub-sheet structures closest to the valve seat; and the second intercepting groove is communicated with the first circulation hole to form a second intercepting channel.

For example, in the restoring valve provided by an embodiment of the present disclosure, an opening of the second circulation hole close to the lower restoring circulation valve sheet includes a second flange, the second flange protrudes from the valve seat towards the lower restoring circulation valve sheet and supports the lower restoring circulation valve sheet: a third intercepting groove recessed towards the valve seat is formed in a sidewall of the second flange close to the lower restoring circulation valve sheet; and the third intercepting groove is communicated with the second circulation hole to form a third intercepting channel.

For example, in the restoring valve provided by an embodiment of the present disclosure, the lower restoring circulation valve sheet includes a third positioning groove disposed corresponding to the second positioning groove; and at least part of the positioning structure is further located within the third positioning groove such that the lower restoring circulation valve sheet is positioned along a circumferential direction of the lower restoring circulation valve sheet relative to the valve seat.

For example, in the restoring valve provided by an embodiment of the present disclosure, the lower restoring circulation valve sheet includes a plurality of second sub-sheet structures stacked in the extension direction of the first circulation hole and the second circulation hole; a fourth intercepting groove is formed in a peripheral wall of a second sub-sheet structure of the plurality of second sub-sheet structures closest to the valve seat; and the fourth intercepting groove is communicated with the second circulation hole to form a fourth intercepting channel.

At least one embodiment of the present disclosure provides a shock absorber, which includes the restoring valve according to any one of the above examples, and an adjustable damper valve structure connected to one end of the tubular portion opposite to the valve seat.

At least one embodiment of the present disclosure provides a damping valve device, which includes a restoring valve, the restoring valve includes: a sleeve part, including a tubular portion and a valve seat connected to an opening at one end of the tubular portion, the valve seat including a first circulation hole and a second circulation hole that penetrate through the valve seat; an upper restoring circulation valve sheet, located at a side of the valve seat in an extension direction of the first circulation hole and the second circulation hole and located within the tubular portion, and configured to cover the first circulation hole; and a lower restoring circulation valve sheet, located at a side of the valve seat opposite to the upper restoring circulation valve sheet and configured to cover the second circulation hole, the upper restoring circulation valve sheet includes a hollowed-out part and exposes the second circulation hole through the hollowed-out part to form a first circulation channel from an inside of the restoring valve to an outside of the restoring valve; a gap is formed between an edge of the upper restoring circulation valve sheet and an inner wall of the tubular portion; and the gap is communicated with the second circulation hole through an interval between the upper restoring circulation valve sheet and the valve seat to from a second circulation channel from the inside of the restoring valve to the outside of the restoring valve.

For example, in the restoring valve provided by an embodiment of the present disclosure, the valve seat includes a second positioning groove disposed corresponding to the first positioning groove; and at least part of the positioning structure is disposed within the first positioning groove and within the second positioning groove to circumferentially position the upper restoring circulation valve sheet relative to the valve seat.

For example, in the restoring valve provided by an embodiment of the present disclosure, the upper restoring circulation valve sheet includes a first penetration hole in a middle; the valve seat includes a second penetration hole disposed corresponding to the first penetration hole; the lower restoring circulation valve sheet includes a third penetration hole disposed corresponding to the first penetration hole and the second penetration hole; the restoring valve further includes a columnar structure passing through the first penetration hole, the second penetration hole, and the third penetration hole; the first positioning groove is located in a sidewall of the first penetration hole; and the second positioning groove is located in a sidewall of the second penetration hole.

For example, in the restoring valve provided by an embodiment of the present disclosure, the positioning structure is disposed on the columnar structure, or the positioning structure and the columnar structure are integrally formed.

For example, in the restoring valve provided by an embodiment of the present disclosure, further including a snap ring sleeved on the columnar structure, and the snap ring includes the positioning structure.

For example, in the restoring valve provided by an embodiment of the present disclosure, the positioning structure is disposed on the valve seat, or the positioning structure and the valve seat are integrally formed.

For example, in the restoring valve provided by an embodiment of the present disclosure, an opening of the first circulation hole close to the upper restoring circulation valve sheet includes a first flange, the first flange protrudes from the valve seat towards the upper restoring circulation valve sheet and supports the upper restoring circulation valve sheet; a first intercepting groove recessed towards the valve seat is formed in a sidewall of the first flange close to the upper restoring circulation valve sheet; and the first intercepting groove is communicated with the first circulation hole to form a first intercepting channel.

For example, in the restoring valve provided by an embodiment of the present disclosure, the upper restoring circulation valve sheet includes a plurality of first sub-sheet structures stacked in the extension direction of the first circulation hole and the second circulation hole; a second intercepting groove is formed in a peripheral wall of a first sub-sheet structure of the plurality of first sub-sheet structures closest to the valve seat; and the second intercepting groove is communicated with the first circulation hole to form a second intercepting channel.

For example, in the restoring valve provided by an embodiment of the present disclosure, an opening of the second circulation hole close to the lower restoring circulation valve sheet includes a second flange, the second flange protrudes from the valve seat towards the lower restoring circulation valve sheet and supports the lower restoring circulation valve sheet: a third intercepting groove recessed towards the valve seat is formed in a sidewall of the second flange close to the lower restoring circulation valve sheet; and the third intercepting groove is communicated with the second circulation hole to form a third intercepting channel.

For example, in the restoring valve provided by an embodiment of the present disclosure, the lower restoring circulation valve sheet includes a third positioning groove disposed corresponding to the second positioning groove; and at least part of the positioning structure is further located within the third positioning groove such that the lower restoring circulation valve sheet is positioned along a circumferential direction of the lower restoring circulation valve sheet relative to the valve seat.

For example, in the restoring valve provided by an embodiment of the present disclosure, the lower restoring circulation valve sheet includes a plurality of second sub-sheet structures stacked in the extension direction of the first circulation hole and the second circulation hole; a fourth intercepting groove is formed in a peripheral wall of a second sub-sheet structure of the plurality of second sub-sheet structures closest to the valve seat; and the fourth intercepting groove is communicated with the second circulation hole to form a fourth intercepting channel.

At least one embodiment of the present disclosure provides a shock absorber, which includes the damping valve device.

### BRIEF DESCRIPTION OF DRAWINGS

In order to explain the technical solution of the embodiments of the present disclosure more clearly, the attached drawings of the embodiments of the present disclosure will be briefly introduced below. The attached drawings are only used to show some embodiments of the present disclosure, and are not limited to all embodiments of the present disclosure.
Fig. 1 is a cross-sectional structural schematic diagram of a damping valve device provided by an embodiment of the present disclosure;
Fig. 2 is a partial cross-sectional structural schematic diagram of the damping valve device shown in Fig. 1;
Fig. 3 is a top structural schematic diagram of a second valve core shown in Fig. 1;
Fig. 4 is a cross-sectional structural schematic diagram of the second valve core shown in Fig. 3 along line M-M;
Fig. 5 is a top schematic diagram of the first valve core shown in Fig. 1;
Fig. 6 is a cross-sectional structural schematic diagram of the first valve core shown in Fig. 5 along line N-N;
Fig. 7 is a partial cross-sectional structural schematic diagram of the damping valve device shown in Fig. 1;
Fig. 8 is a partial cross-sectional structural schematic diagram of the damping valve device shown in Fig. 7 when the first valve core moves in a direction away from the second valve core;
Fig. 9 is a partial cross-sectional structural schematic diagram of another damping valve device provided by an embodiment of the present disclosure when a first valve core moves in a direction away from a second valve core;
Fig. 10 is a partial cross-sectional structural schematic diagram of another damping valve device provided by an embodiment of the present disclosure;
Fig. 11 is a partial cross-sectional structural schematic diagram of another damping valve device provided by an embodiment of the present disclosure;
Fig. 12 is a cross-sectional structural schematic diagram of a shock absorber provided by an embodiment of the present disclosure;
Fig. 13 is a cross-sectional structural schematic diagram of a damping valve device provided by an embodiment of the present disclosure;
Fig. 14 is a partial cross-sectional structural schematic diagram of the damping valve device shown in Fig. 13;
Fig. 15 is a top structural schematic diagram of a second valve core shown in Fig. 13;
Fig. 16 is a cross-sectional structural schematic diagram of the second valve core shown in Fig. 15 along line M-M;
Fig. 17 is a cross-sectional structural schematic diagram of a damping valve device provided by an embodiment of the present disclosure;
Fig. 18 is a partial cross-sectional structural schematic diagram of the damping valve device shown in Fig. 17;
Fig. 19 is a cross-sectional structural schematic diagram of a shock absorber provided by an embodiment of the present disclosure;
Fig. 20 is a cross-sectional structural schematic diagram of a restoring valve according to an embodiment of the present disclosure;
Fig. 21 is a planar structural schematic diagram of an upper restoring circulation valve sheet of a restoring valve according to an embodiment of the present disclosure;
Fig. 22 and Fig. 23 illustrate a top view and a perspective valve of a sleeve part of a restoring valve according to an embodiment of the present disclosure, respectively;
Fig. 24 is a cross-sectional structural schematic diagram of a conical spring of a restoring valve according to an embodiment of the present disclosure, respectively;
Fig. 25 is a cross-sectional structural schematic diagram of a restoring valve according to another embodiment of the present disclosure;
Fig. 26 is an exploded schematic diagram of an upper restoring circulation valve sheet of the restoring valve in the embodiment shown in Fig. 25;
Fig. 27 is a cross-sectional structural schematic diagram of a damping valve device according to an embodiment of the present disclosure;
Fig. 28 is a schematic diagram of a shock absorber provided by an embodiment of the present disclosure;
Fig. 29 is a cross-sectional structural schematic diagram of a restoring valve provided by an embodiment of the present disclosure;
Fig. 30 is an exploded schematic diagram of the restoring valve shown in Fig. 29;
Fig. 31 is a structural schematic diagram of a sleeve part and an upper restoring circulation valve sheet shown in Fig. 29;
Fig. 32 is a structural schematic diagram of the sleeve part shown in Fig. 29;
Fig. 33 is a structural schematic diagram of the sleeve part shown in Fig. 29 from another perspective;
Fig. 34 is an exploded schematic diagram of another restoring valve provided by an embodiment of the present disclosure;
Fig. 35 is a partial cross-sectional structural schematic diagram of the restoring valve shown in Fig. 34;
Fig. 36 is a partial cross-sectional structural schematic diagram of another restoring valve provided by an embodiment of the present disclosure;
Fig. 37 is an exploded schematic diagram of the restoring valve shown in Fig. 36;
Fig. 38 is a cross-sectional structural schematic diagram of another restoring valve provided by an embodiment of the present disclosure;
Fig. 39 is an exploded schematic diagram of the restoring valve shown in Fig. 38;
Fig. 40 is a partial cross-sectional structural schematic diagram of another restoring valve provided by an embodiment of the present disclosure;
Fig. 41 is a cross-sectional structural schematic diagram of a damping valve device provided by an embodiment of the present disclosure; and
Fig. 42 is a schematic diagram of a shock absorber provided by an embodiment of the present disclosure.

### DETAILED DESCRIPTION

In order to make the purpose, technical solution and advantages of the embodiment of the disclosure more clear, the technical solution of the embodiment of the disclosure will be described clearly and completely with the attached drawings. Obviously, the described embodiment is a part of the embodiment of the present disclosure, not the whole embodiment. Based on the described embodiments of the present disclosure, all other embodiments obtained by ordinary people in the field without creative labor belong to the scope of protection of the present disclosure.

Unless otherwise defined, technical terms or scientific terms used in this disclosure shall have their ordinary meanings as understood by people with ordinary skills in the field to which this disclosure belongs. The terms "first", "second" and the like used in this disclosure do not indicate any order, quantity or importance, but are only used to distinguish different components. Similar words such as "including" or "containing" mean that the elements or objects appearing before the word cover the elements or objects listed after the word and their equivalents, without excluding other elements or objects. Similar words such as "connected" or "connected" are not limited to physical or mechanical connection, but can include electrical connection, whether direct or indirect.

Unless otherwise defined, the features such as "parallel", "vertical" and "identical" used in the embodiments of this disclosure all include cases such as "parallel", "vertical" and "identical" in a strict sense, and cases such as "approximately parallel", "approximately vertical" and "approximately identical" contain certain errors. For example, the above-mentioned "roughly" can mean that the difference of the compared objects is within 10% or 5% of the average value of the compared objects. When the number of one component or element is not specified in the following of the disclosed embodiment, it means that the component or element can be one or more, or can be understood as at least one. "At least one" means one or more, and "multiple" means at least two.

A damping valve device is arranged within a housing of a shock absorber, to divide the housing of the shock absorber into two working cavities. The damping valve device can realize adjustable damping of the shock absorber by adjusting a volume of circulation of a damping medium in the two working cavities and thus can meet different road conditions and driving modes and improve the driving comfort experience.

Embodiments of the present disclosure provide a damping valve device and a shock absorber. The damping valve device includes a valve sleeve, a first valve core, and a second valve core. The valve sleeve includes a first end and a second end that are opposite to each other in an axial direction of the valve sleeve. The first valve core and the second valve core are both located within the valve sleeve, and the second valve core is closer to the second end of the valve sleeve than the first valve core. The first valve core is configured to move along the axial direction relative to the second valve core. The second valve core includes an annular main body part and an end cap part. The end cap part is located at a side of the annular main body part close to the first valve core. A through hole penetrating through the end cap part along the axial direction is formed in the end cap part. An orthographic projection of an end face of the first valve core close to the second valve core on a reference plane at least partially falls within an orthographic projection of the end cap part on the reference plane, and the orthographic projection of the end face on the reference plane surrounds an orthographic projection of the through hole on the reference plane. The reference plane is perpendicular to the axial direction X. The annular main body part and the end cap part are fixedly connected or integrally formed.

In the damping valve device provided by the embodiments of the present disclosure, the first valve core and the second valve core move relatively along the axial direction. When a spacing between the first valve core and the second valve core decreases gradually, at least part of the end face of the first valve core can be attached onto the end cap part of the second valve core. The end cap part of the second valve core can support the end face of the first valve core, and the spacing between the first valve core and the second valve core in the axial direction may become zero. The spacing between the first valve core and the second valve core in the axial direction forms a flow channel between the first valve core and the second valve. The magnitude of damping of the shock absorber where the damping valve device is located can be adjusted by adjusting the spacing between the first valve core and the second valve core in the axial direction.

In the damping valve device provided by the embodiments of the present disclosure, the annular main body part and the end cap part are fixedly connected or integrally formed such that the second valve core and the damping valve device are simple in structure and convenient to assemble, and missing of components can be avoided. The assembly efficiency is improved. The yield of products is increased. The costs of the damping valve device are reduced. In addition, the annular main body part and the end cap part are fixedly connected or integrally formed such that there is no relative motion therebetween. The problem of abnormal sound of the damping valve device can be avoided. Meanwhile, the circulation of the damping medium will not be affected due to the relative motion of the two parts so that the damping performance of the damper valve can be more stable and the controllability can be better.

Hereinafter, the damping valve device and the shock absorber provided by the embodiments of the present disclosure are described in detail with reference to the accompanying drawings.

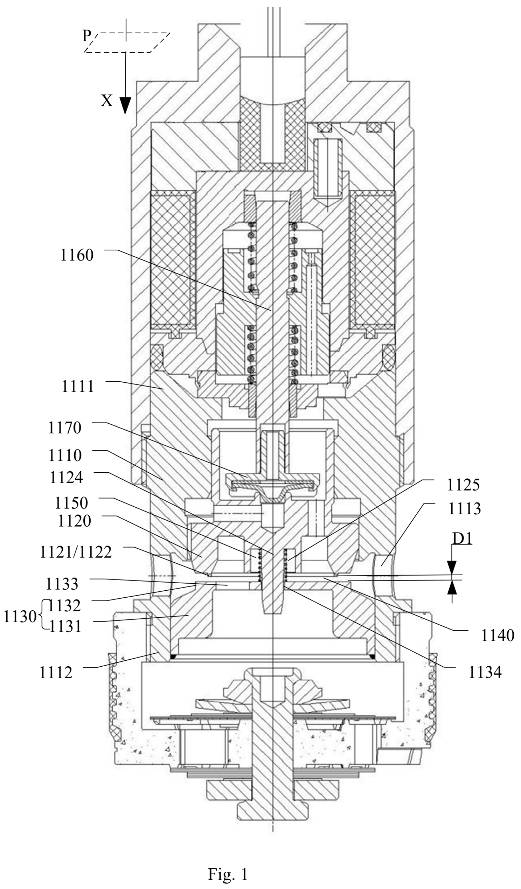

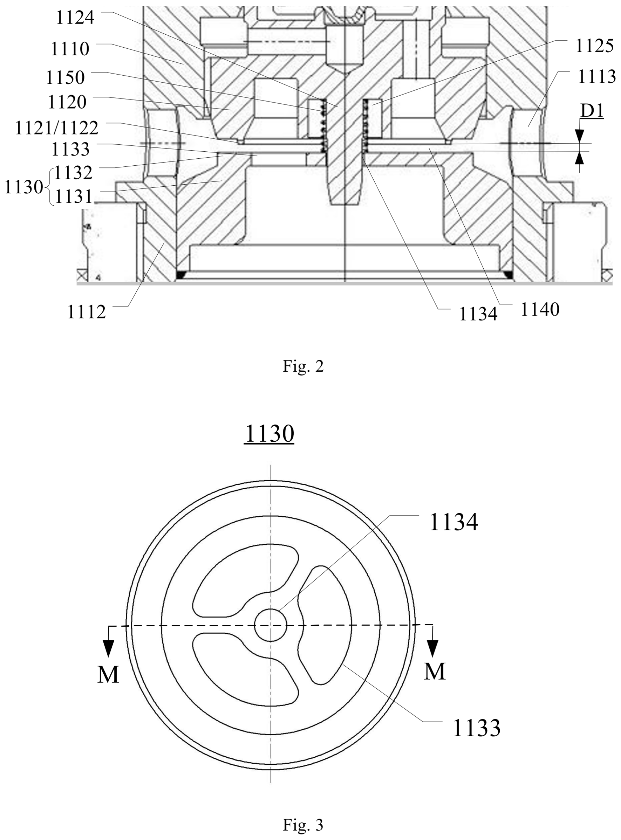

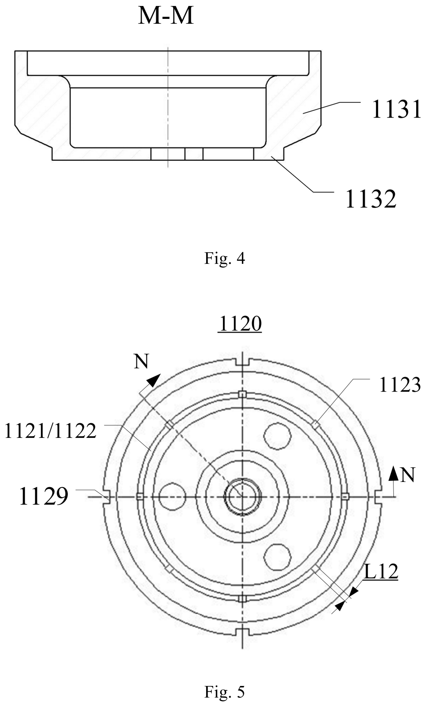

An embodiment of the present disclosure provides a damping valve device. Fig. 1 is a cross-sectional structural schematic diagram of a damping valve device provided by an embodiment of the present disclosure; Fig. 2 is a partial cross-sectional structural schematic diagram of the damping valve device shown in Fig. 1; Fig. 3 is a top structural schematic diagram of a second valve core shown in Fig. 1; and Fig. 4 is a cross-sectional structural schematic diagram of the second valve core shown in Fig. 3 along line M-M. As illustrated by Fig. 1 to Fig. 4, the damping valve device includes a valve sleeve 1110, a first valve core 1120, and a second valve core 1130. The valve sleeve 1110 includes a first end 1111 and a second end 1112 that are opposite to each other in an axial direction X of the valve sleeve 1110. The first valve core 1120 and the second valve core 1130 are both located within the valve sleeve 1110, and the second valve core 1130 is closer to the second end 1112 of the valve sleeve 1110 than the first valve core 1120. The first valve core 1120 is configured to move along the axial direction relative to the second valve core 1130. The second valve core 1130 includes an annular main body part 1131 and an end cap part 1132. The end cap part 1132 is located at a side of the annular main body part 1131 close to the first valve core 1120. A through hole 1133 penetrating through the end cap part along the axial direction is formed in the end cap part 1132. An orthographic projection of an end face 1121 of the first valve core 1120 close to the second valve core 1130 on a reference plane P at least partially falls within an orthographic projection of the end cap part 1132 on the reference plane P, and the orthographic projection of the end face 1121 on the reference plane P surrounds an orthographic projection of the through hole 1133 on the reference plane P. The reference plane P is perpendicular to the axial direction X. The annular main body part 1131 and the end cap part 1132 are fixedly connected or integrally formed.

In the damping valve device provided by this embodiment of the present disclosure, the first valve core 1120 and the second valve core 1130 move relatively along the axial direction X. When a spacing between the first valve core 1120 and the second valve core 1130 decreases gradually, e.g., when the first valve core 1120 moves towards the second valve core 1130, because the orthographic projection of the end face 1121 of the first valve core 1120 on the reference plane P at least partially falls within the orthographic projection of the end cap part 1132 on the reference plane P, at least part of the end face 1121 of the first valve core 1120 can be attached onto the end cap part 1132 of the second valve core 1130. At least part of the end face 1121 of the first valve core 1120 can be situated at the end cap part 1132 of the second valve core 1130. The end cap part 1132 of the second valve core 1130 can support the end face 1121 of the first valve core 1120. Thus, when the end face 1121 of the first valve core 1120 is attached onto the end cap part 1132 of the second valve core 1130, the spacing between the first valve core 1120 and the second valve core 1130 in the axial direction X may become zero.

For example, the spacing between the first valve core 1120 and the second valve core 1130 in the axial direction X is D. The spacing D1 is a spacing between the end face 1121 of the first valve core 1120 and the end cap part 1132 of the second valve core 1130 in the axial direction X. The spacing D1 forms a flow channel 1140 between the first valve core 1120 and the second valve 1130. The orthographic projection of the end face 1121 of the first valve core 1120 on the reference plane P surrounds the orthographic projection of the through hole 1133 of the second valve core 1130 on the reference plane P so that the damping medium can circulate in the annular main body part 1131 of the second valve core 1130, the through hole 1133, and the flow channel 1140 formed by the spacing D1. The first valve core 1120 and the second valve core 1130 have relative motion along the axial direction X such that the spacing D1 between the first valve core 1120 and the second valve core 1130 in the axial direction X changes and the size of the flow channel 1140 formed by the spacing D1 also changes. Thus, the magnitude of damping of the shock absorber 1200 where the damping valve device is located can be adjusted by adjusting the spacing D1 between the first valve core 1120 and the second valve core 1130 in the axial direction X. For example, when the spacing D1 between the first valve core 1120 and the second valve core 1130 along the axial direction X is maximum, the volume of circulation of the damping medium in the flow channel 1140 formed by the spacing D1 is maximum, and the damping of the shock absorber 1200 where the damping valve device is located is minimum. When the spacing D1 between the first valve core 1120 and the second valve core 1130 along the axial direction X is minimum, the first valve core 1120 is attached with the second valve core 1130, and the damping of the shock absorber 1200 where the damping valve device is located is maximum.

In the damping valve device provided by this embodiment of the present disclosure, the annular main body part 1131 and the end cap part 1132 are fixedly connected or integrally formed such that the second valve core 1130 and the damping valve device are simple in structure and convenient to assemble, and missing of components can be avoided. The assembly efficiency is improved. The yield of products is increased. The costs of the damping valve device are reduced. In addition, the annular main body part 1131 and the end cap part 1132 are fixedly connected or integrally formed such that there is no relative motion therebetween. The problem of abnormal sound of the damping valve device can be avoided. Meanwhile, the circulation of the damping medium will not be affected due to the relative motion of the two parts so that the damping performance of the damper valve can be more stable and the controllability can be better.

For example, the annular main body part 1131 and the end cap part 1132 being fixedly connected refers to that the annular main body part 1131 and the end cap part 1132 can be formed by two components. For example, the annular main body part 1131 and the end cap part 1132 can be fixedly connected by threaded connection, welding, interference fit, riveting, or the like. Thus, before the second valve core 1130 is assembled, the annular main body part 1131 and the end cap part 1132 have been fixedly connected. Therefore, missing of components in the assembling process of the damping valve device can be avoided. In addition, there is substantially no relative motion between the two parts in the operating process of the damping valve device so that the problem of abnormal sound can be avoided.

For example, the annular main body part 1131 and the end cap part 1132 being integrally formed refers to that the two parts being an integrated component. For example, they can be made of a same material, or made by made of a same material with one mold.

In some examples, as illustrated by Fig. 1 to Fig. 3. the end cap part 1132 can include one or more through holes 1133. The number and the size of the through holes 1133 may affect the volume of circulation of the damping medium. Thus, different numbers and sizes of through holes 1133 may be designed according to requirements on the damping performance. The embodiments of the present disclosure have no limitations on the number and the size of the through holes 1133. For example, the end cap part 1132 may be designed with one through hole 1133. The through hole 1133 may be symmetrical about the center of the end cap part 1132. As a matter of course, the through hole may be designed into an offset hole according to the requirement of the damping valve device. For example, the end cap part 1132 may be designed with a plurality of through holes 1133. The plurality of through holes 1133 are symmetrical about the center of the end cap part 1132. The plurality of through holes 1133 are distributed uniformly along the circumference of the end cap part 1132.

In some examples, as illustrated by Fig. 1 and Fig. 2. the shape of the end face 1121 includes a ring shape. For example, when the end face 1121 is ring-shaped, the end where the end face 1121 is located may be better fit with the end cap part 1132. For example, when the end face 1121 is ring-shaped, the end where the end face 1121 is located is also ring-shaped, thereby facilitating the design of the internal structure of the first valve core 1120. For example, a positioning groove, an intercepting channel, or the like may also be designed inside the first valve core 1120. For example, the ring-shaped end face 1121 is convenient for the circulation of the damping medium and also convenient for reducing the weight of the first valve core 1120. As a matter of course, the embodiments of the present disclosure have no limitation on this.

In some examples, as illustrated by Fig. 1 to Fig. 4. the end face 1121 of the first valve core 1120 is parallel to the end cap part 1132 of the second valve core 1130. Thus, when the spacing D1 between the first valve core 1120 and the second valve core 1130 along the axial direction X is 0, the end face 1121 of the first valve core 1120 may have a larger contact area with the end cap part 1132 of the second valve core 1130, and the first valve core 1120 may be better attached with the second valve core 1130. Thus, the circulation of the damping medium can be controlled better such that the damping performance of the shock absorber where the damping valve device is located is more stable.

In some examples, as illustrated by Fig. 1 to Fig. 4. the orthographic projection of the end face 1121 of the first valve core 1120 on the reference plane P completely falls within the orthographic projection of the end cap part 1132 of the second valve core 1130 on the reference plane P. Thus, when the spacing D1 between the first valve core 1120 and the second valve core 1130 along the axial direction X is 0, the end face 1121 of the first valve core 1120 may be completely attached with the end cap part 1132 of the second valve core 1130, and the first valve core 1120 may be better attached with the second valve core 1130. Thus, the circulation of the damping medium can be controlled better such that the damping performance of the shock absorber 1200 where the damping valve device is located is more stable.

In some examples, as illustrated by Fig. 1 to Fig. 4. the orthographic projection of the end face 1121 of the first valve core 1120 on the reference plane P at least partially falls within the orthographic projection of the annular main body part 1131 on the reference plane P. When the spacing D1 between the first valve core 1120 and the second valve core 1130 along the axial direction X is 0, at least part of the end face 1121 of the first valve core 1120 may be attached with the end cap part 1132 of the second valve core 1130. The end cap part 1132 may receive the pressure or acting force of the end face 1121 of the first valve core 1120. Because the orthographic projection of the end face 1121 of the first valve core 1120 on the reference plane P at least partially falls within the orthographic projection of the annular main body part 1131 on the reference plane P, the pressure or acting force of the end face 1121 of the first valve core 1120 on the end cap part 1132 may be transferred at least in part to the annular main body part 1131 through the end cap part 1132. Thus, the force acting upon the end cap part 1132 can be reduced or relieved, and the service life of the end cap part 1132 and the second valve core 1130 is prolonged such that the service life and the performance of the damping valve device are more stable.

In some examples, as illustrated by Fig. 1 to Fig. 4. the orthographic projection of the end face 1121 of the first valve core 1120 on the reference plane P completely falls within the orthographic projection of the end cap part 1132 on the reference plane P, and the orthographic projection of the end face 1121 of the first valve core 1120 on the reference plane P completely falls within the orthographic projection of the annular main body part 1131 on the reference plane P. Thus, the pressure of the end face 1121 of the first valve core 1120 on the end cap part 1132 of the second valve core 1130 may be completely transferred to the annular main body part 1131 so that the force acting upon the end cap part 1132 can be better reduced or relieved, and the service life of the end cap part 1132 and the second valve core 1130 is prolonged such that the service life and the performance of the damping valve device are more stable.

In some examples, as illustrated by Fig. 1 to Fig. 4. a peripheral radial dimension of the end cap part 1132 is smaller than that of the annular main body part 1131, and a peripheral radial dimension of the end face 1121 is smaller than the maximum peripheral radial dimension of the first valve core 1120. Thus, along a radial direction of the valve sleeve 1110, there may be a cavity between the end cap part 1132 and the valve sleeve 1110, and there may also be a cavity between the end where the end face 1121 is located and the valve sleeve 1110. The damping medium may flow in or out of the flow channel 1140 formed by the spacing D1 through the cavities.

In some examples, as illustrated by Fig. 1 and Fig. 2, the peripheral radial dimension of the end face 1121 is smaller than that of the end cap part 1132. Thus, when the spacing D1 between the first valve core 1120 and the second valve core 1130 along the axial direction X is 0, at least part of the end cap part 1132 may not be attached with the end face 1121. That is to say, at least part of the end cap part 1132 may be in contact with the damping medium. Thus, the damping medium may act upon a region of the end cap part 1132 that is not attached by the end face 1121. Under the pressure or acting force of the damping medium, the first valve core 1120 may be separated from the second valve core 1130 in the axial direction X.

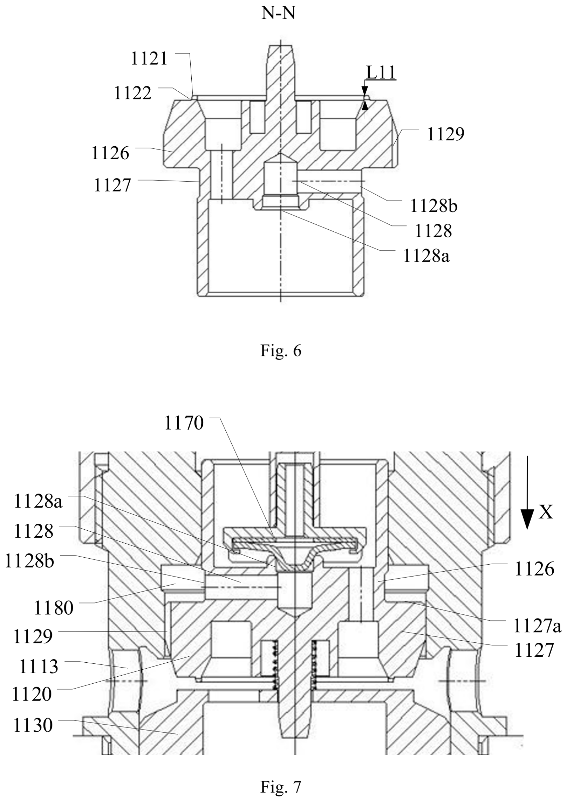

Fig. 5 is a top schematic diagram of the first valve core shown in Fig. 1; and Fig. 6 is a cross-sectional structural schematic diagram of the first valve core shown in Fig. 5 along line N-N. As illustrated by Fig. 1, Fig. 5, and Fig. 6, the end of the first valve core 1120 close to the second valve core 1130 includes a third end 1122. The shape of the third end 1122 is a ring shape. The end face 1121 is a surface of the third end 1122 facing the second valve core 1130. The third end 1122 includes an opening 1123. The opening 1123 penetrates through an outer sidewall of the third end 1122 and an inner sidewall of the third end wall 1122. When the spacing D1 between the first valve core 1120 and the second valve core 1130 along the axial direction X is 0, the end face 1121 of the first valve core 1120 is attached with the end cap part 1132 of the second valve core 1130. The opening 1123 is formed in the third end 1122 where the end face 1121 is located so that the damping medium may circulate via the opening 1123 even though the end face 1121 is attached with the end cap part 1132. For example, the damping valve device may have a smallest flow channel formed by the opening 1123.

For example, as illustrated by Fig. 5 and Fig. 6, the number of openings 1123 in the third end 1122 is greater than or equal to 1. For example, when there are a plurality of openings 1123 in the third end 1122, the plurality of openings 1123 may be uniformly distributed on the third end 1122.

For example, as illustrated by Fig. 5 and Fig. 6, the opening 1123 of the third end 1122 has a depth dimension L11 along the axial direction X and an opening dimension L12 along a peripheral direction of the end face 1121. For example, the depth dimension L11 and the opening dimension L12 of the opening 1123 of the third end 1122 may be adjusted according to the damping performance of the damping valve device and the shock absorber where the damping valve device is located. For example, the depth dimension L11 of the opening 1123 of the third end 1122 is less than a maximum dimension of the spacing D1, and the opening dimension L12 is less than the maximum dimension of the spacing D1. For example, the depth dimension L11 of the opening 1123 of the third end 1122 is less than 1/3 of the maximum dimension of the spacing D1, and the opening dimension L12 is less than 1/3 of the maximum dimension of the spacing D1.

In some examples, as illustrated by Fig. 1 and Fig. 2. the damping valve device further includes an elastic element 1150. The elastic element 1150 is located between the first valve core 1120 and the second valve core 1130. One end of the elastic element 1150 is attached with the first valve core 1120, and the other end of the elastic element 1150 is attached with the end cap part 1132. When the first valve core 1120 and the second valve core 1130 move towards each other in the axial direction X, the elastic element 1150 may store elastic potential energy. After the acting force on the first valve core 1120 or the second valve core 1130 is reduced or withdrawn, the elastic potential energy may separate the first valve core 1120 from the second valve core 1130 such that the first valve core 1120 and the second valve core 1130 move away from each other in the axial direction X, causing the spacing D1 between the first valve core 1120 and the second valve core 1130 along the axial direction X to increase. For example, the elastic element 1150 has a reset function such that the first valve core 1120 or the second valve core 1130 is reset. The end cap part 1132 may act as a supporting surface for the elastic element 1150 such that the structural design of the damping valve device is simpler. As a matter of course, the embodiments of the present disclosure have no limitations on the form and the structure of the elastic element 1150. For example, the elastic element 1150 may be a spring. For example, the elastic element 1150 may be a spiral spring, a torsional spring, or the like. For example, two ends of the elastic element 1150 may be in contact fit with the first valve core 1120 and the end cap part 1132, respectively, or may be hung, locked, or fixed to the first valve core 1120 and the end cap part 1132, respectively. For example, the position of the elastic element 1150 that is attached on the first valve core 1120 is not limited, which may be any position of the first valve core 1120, and the position of the elastic element 1150 that is attached on the second valve core 1130 is also not limited.

In some examples, as illustrated by Fig. 1 and Fig. 2. the first valve core 1120 further includes a guide shaft 1124 extending along the axial direction X. The end cap part 1132 includes a guide hole 1134. The guide shaft 1124 is located within the guide hole 1134. The elastic element 1150 is sleeved on the guide shaft 1124. With the guide shaft 1124 and the guide hole 1134, the guide hole 1134 may limit the guide shaft 1124 in the axial direction and the radial direction to enable more stable relative motion of the first valve core 1120 and the second valve core 1130, thus enabling more stable damping performance of the shock absorber where the damping valve device is located.

For example, as illustrated by Fig. 1 and Fig. 2, a limiting groove 1125 may be formed in the first valve core 1120 so that the position of the elastic element 1150 can be better limited. As a matter of course, a limiting groove may also be formed in the end cap part 1132 to limit the position of the elastic element 1150.

In some examples, as illustrated by Fig. 1 and Fig. 2, the valve sleeve 1110 includes a circulation hole 1113. The circulation hole 1113 penetrates through an outer sidewall of the valve sleeve 1110 and an inner sidewall of the valve sleeve 1110. The circulation hole 1113 at least partially overlaps with the first valve core 1120 and the second valve core 1130 in the radial direction of the valve sleeve 1110. Thus, the circulation hole 1113 may communicate the flow channel 1140 with a cavity outside the valve sleeve 1110. By adjusting the size of the flow channel 1140, the flow of the damping medium into the cavity outside the valve sleeve 1110 may be adjusted, or the inflow of the damping medium from the cavity outside the valve sleeve 1110 may be adjusted. As a matter of course, the embodiments of the present disclosure have no limitations on the size and number, etc. of circulation holes 1113. For example, the size and number of circulation holes 1113 may be designed according to the size of the flow channel 1140 and the like. For example, the number of circulation holes 1113 may be greater than or equal to 1. For example, when there are a plurality of circulation holes 1113, the plurality of circulation holes 1113 may be uniformly distributed at an outer circumference of the valve sleeve 1110.

Fig. 7 is a partial cross-sectional structural schematic diagram of the damping valve device shown in Fig. 1. As illustrated by Fig. 1 and Fig. 5 to Fig. 7, the damping valve device further includes a third valve core 1170. The third valve core 1170 is located at a side of the first valve core 1120 away from the second valve core 1130 in the axial direction X and configured to move along the axial direction X relative to the first valve core 1120. The first valve core 1120 includes a first body part 1126 and a second body part 1127. The second body part 1127 is closer to the second valve core 1130 than the first body part 1126. An outer diameter of the second body part 1127 is greater than that of the first body part 1126. A portion of the second body part 1127 that is not overlaid by the first body part 1126 is close to a surface 1127a of the third valve core 1170, a lateral surface of the first body part 1126. and an inner wall of the valve sleeve 1110 to form an accommodating cavity 1180. The first body part 1126 includes a pressure relief channel 1128. A first port 1128a of the pressure relief channel 1128 faces the third valve core 1170. The third valve core 1170 is configured to cover or open the first port 1128a. A second port 1128b of the pressure relief channel 1128 is communicated with the accommodating cavity 1180. The second body part 1127 includes an intercepting channel 1129. The accommodating cavity 1180 is communicated with the circulation hole 1113 through the intercepting channel 1129.

In an embodiment of the present disclosure, the accommodating cavity 1180 is communicated with the circulation hole 1113 through the intercepting channel 1129 so that the accommodating cavity 1180 can be communicated with the cavity outside the valve sleeve 1110. When the first valve core 1120 moves towards the second valve core 1130, the space of the accommodating cavity 1180 increases and the pressure in the accommodating cavity 1180 decreases so that the damping medium can enter the accommodating cavity 1180 through the circulation hole 1113 and the intercepting channel 1129. When the first valve core 1120 moves in a direction away from the second valve core 1130, the space of the accommodating cavity 1180 decreases and the pressure in the accommodating cavity 1180 increases, causing the first valve core 1120 to move in the direction away from the second valve core 1130. At this point, the damping medium in the accommodating cavity 1180 may act upon the third valve core 1170 through the pressure relief channel 1128. When the pressure in the accommodating cavity 1180 increases to a set value, the third valve core 1170 moves in a direction away from the pressure relief channel 1128 under the action of the pressure of the damping medium in the pressure relief channel 1128. At this point, the third valve core 1170 opens the first port 1128a and the damping medium in the accommodating cavity 1180 can flow out through the first port 1128a. Thus, the pressure in the accommodating cavity 1180 decreases, and the first valve core 1120 can move in the direction away from the second valve core 1130 better and more easily. When the first valve core 1120 moves in the direction away from the second valve core 1130, the pressure in the accommodating cavity 1180 increases such that part of the damping medium in the accommodating cavity 1180 flows out of the intercepting channel 1129.

In an embodiment of the present disclosure, the intercepting channel 1129 is provided in the second body part 1127 so that the design of the intercepting channel 1129 can be simpler, and the intercepting channel 1129 can be implemented without additionally increasing parts. Thus, the design of the first valve core 1120 and the valve sleeve 1110 can be simpler, and the manufacturing of the first valve core 1120 and the valve sleeve 1110 can be simpler, and the fit of the first valve core 1120 and the valve sleeve 1110 can also be simpler. Moreover, the cost and the assembly difficulty can be reduced and the assembly efficiency can be improved; and the structural design, the dimension chain fit and the damping performance stability of the damping valve device are better.

In some examples, as illustrated by Fig. 5 to Fig. 7. the intercepting channel 1129 may be located on an outer lateral surface of the second body part 1127. As a matter of course, the embodiments of the present disclosure have no limitation on this. For example, the intercepting channel 1129 may also be located within the second body part 1127.

In some examples, as illustrated by Fig. 5 and Fig. 6, the intercepting channel 1129 is located on the outer lateral surface of the second body part 1127. The cross section of the intercepting channel 1129 may be U-shaped, V-shaped, C-shaped, or in any groove shape. For example, the intercepting channel 1129 is located within the second body part 1127. The cross section of the intercepting channel 1129 may be circular, elliptical, rectangular, or the like. As a matter of course, the embodiments of the present disclosure have no specific limitation on shape of the cross section of the intercepting channel 1129.

In some examples, as illustrated by Fig. 5 and Fig. 6, the number of intercepting channels 1129 may be 1 or more. The embodiments of the present disclosure have no limitation on the number of intercepting channels 1129. For example, a plurality of intercepting channels 1129 may be uniformly distributed on the outer lateral surface of the second body part 1127 or within the second body part 1127. The plurality of intercepting channels 1129 may also be off-center distributed on the outer lateral surface of the second body part 1127 or within the second body part 1127.

In some examples, as illustrated by Fig. 5 and Fig. 6. a cross-sectional dimension of the intercepting channel 1129 along an extension direction of the intercepting channel 1129 may be uniform. As a matter of course, the embodiments of the present disclosure have no limitation on this. The cross-sectional dimension of the intercepting channel 1129 along the extension direction of the intercepting channel 1129 may be gradually varied, e.g., gradually increased or gradually decreased, or be large in middle and small in two sides, or be small in middle and large in two sides.

In some examples, as illustrated by Fig. 5 to Fig. 7. the extension direction of the intercepting channel 1129 is parallel to the axial direction X. As a matter of course, the embodiments of the present disclosure have no limitation on this. For example, the extension direction of the intercepting channel 1129 may intersect the axial direction X. For example, the intercepting channel 1129 may be a curve, a bent line, or the like surrounding the outer lateral surface of the second body part 1127. The intercepting channel 1129 may also be a curve, a bent line, or the like located within the second body part 1127. The intercepting channel 1129 may also be partly located on the outer lateral surface of the second body part 1127 and partly located within the second body part 1127.

In some examples, as illustrated by Fig. 5 to Fig. 7. the cross-sectional dimension of the intercepting channel 1129 is smaller than a size of the first port 1128a, and the cross-sectional dimension of the intercepting channel 1129 is smaller than a size of the second port 1128b. Thus, the intercepting channel 1129 may not greatly influence the pressure in the accommodating cavity 1180. For example, the cross-sectional dimension of the intercepting channel 1129 is smaller than 1/5 of the size of the first port 1128a, and the cross-sectional dimension of the intercepting channel 1129 is smaller than 1/5 of the size of the second port 1128b. The embodiments of the present disclosure have no limitation on the cross-sectional dimension of the intercepting channel 1129 and no specific limitation on the relationship between the cross-sectional dimension of the intercepting channel 1129 and the size of the first port 1128a or the second port 1128b.

In some examples, as illustrated by Fig. 7, the accommodating cavity 1180 may be an annular cavity. For example, there may be one or more pressure relief channels 1128. For example, a plurality of pressure relief channels 1128 may be uniformly arranged on the second body part 1127 and uniformly communicated with the accommodating cavity 1180. As a matter of course, the embodiments of the present disclosure have no limitation on the shape of the accommodating cavity 1180 and no limitations on the number, shape and arrangement positions of the pressure relief channels 1128.

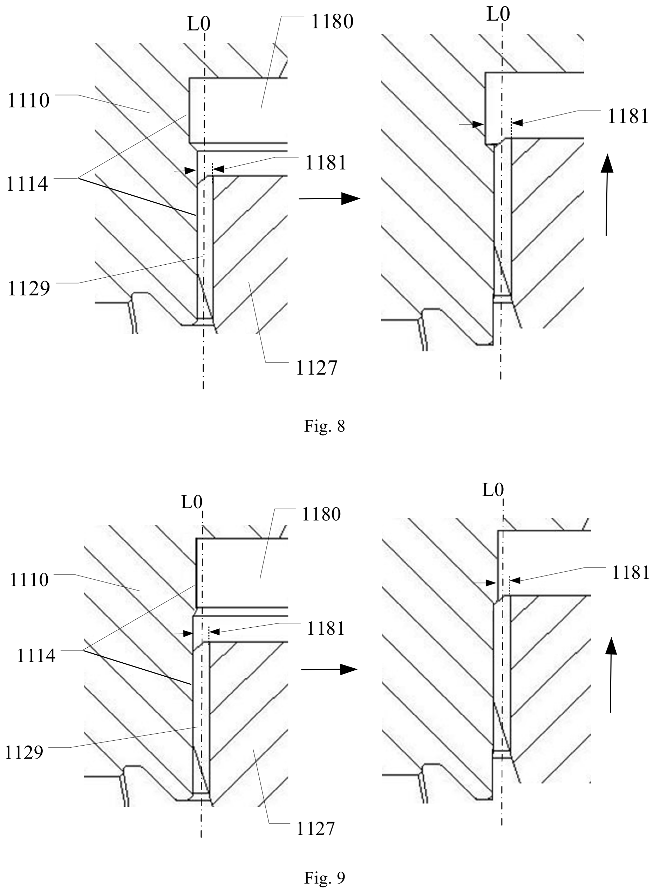

Fig. 8 is a partial cross-sectional structural schematic diagram of the damping valve device shown in Fig. 7 when the first valve core moves in a direction away from the second valve core. As illustrated by Fig. 7 and Fig. 8, when the intercepting channel 1129 is located on the outer lateral surface of the second body part 1127, an inner surface of the valve sleeve 1110 comprises a mating surface 1114 opposite to the intercepting channel 1129, and a part of the mating surface 1114 is used for defining the accommodating cavity 1180, and a spacing between the mating surface 1114 and a geometric center line L0 of the intercepting channel 1129 is not equidistant along the extension direction of the intercepting channel 1129. It needs to be noted that the geometric center line L0 of the intercepting channel 1129 shown in Fig. 8 is merely used for illustrating the spacing between the mating surface 1114 and the intercepting channel 1129. For example, the spacing between the mating surface 1114 and the geometric center line L0 of the intercepting channel 1129 being not equidistant along the extension direction of the intercepting channel 1129 may also be construed as the maximum spacing between the mating surface 1114 and the intercepting channel 1129 is unequal, or construed as the extension direction of the mating surface 1114 being not parallel to the extension direction of the intercepting channel 1129.

In an embodiment of the present disclosure, when the first valve core 1120 moves in the direction away from the second valve core 1130, because the spacing between the mating surface 1114 and the geometric center line L0 of the intercepting channel 1129 is not equidistant in the extension direction of the intercepting channel 1129, the size of a port 1181 of the accommodating cavity 1180 that is communicated with the intercepting channel 1129 will change, thereby causing the speed or the volume of the damping medium in the accommodating cavity 1180 flowing out via the port 1181 and the intercepting channel 1129 to change. This allows the pressure in the accommodating cavity 1180 to change, thereby causing the third valve core 1170 to open the first port 1128a or the first valve core 1120 to move.

In some examples, as illustrated by Fig. 7 and Fig. 8, the extension direction of the intercepting channel 1129 may be the axial direction X. The spacing between the mating surface 1114 and the geometric center line L0 is not equidistant along the axial direction X. As shown in the figure, a spacing between the mating surface 1114 and an upper portion of the geometric center line L0 is greater than a spacing with a lower portion of the geometric center line L0. When the first valve core 1120 moves in the direction away from the second valve core 1130, i.e., the first valve core 1120 moves up as shown, the intercepting channel 1129 moves up as well. When the intercepting channel 1129 moves from the left figure of Fig. 8 to the right figure of Fig. 8, the port 1181 of the accommodating cavity 1180 that is communicated with the intercepting channel 1129 is enlarged such that the speed or the volume of the damping medium in the accommodating cavity 1180 flowing out via the port 1181 and the intercepting channel 1129 increases, causing the pressure in the accommodating cavity 1180 to decrease compared to the case of an equidistant spacing. For example, the decrease of the pressure may result in the pressure in the accommodating cavity 1180 reaching a set value, e.g., result in the pressure in the accommodating cavity 1180 reaching a designed value more slowly than in the case of the equidistant spacing, such that the third valve core 1170 opens the first port 1128a more slowly or less easily, thereby causing the first valve core 1120 to move in the direction away from the second valve core 1130. For example, the mating surface 1114 may be a surface only opposite to the intercepting channel 1129, a side of the inner surface of the valve sleeve 1110 that is not opposite to the intercepting channel 1129 may be equidistant so that the valve sleeve 1110 can be better fit with the first valve core 1120, causing the valve sleeve 1110 to better guide the first valve core 1120 to move along the axial direction X.

Fig. 9 is a partial structural schematic diagram of another damping valve device provided by an embodiment of the present disclosure when a first valve core moves in a direction away from a second valve core. As illustrated by Fig. 9, the spacing between the mating surface 1114 and the geometric center line L0 is not equidistant along the extension direction of the intercepting channel 1129. As shown in the figure, the spacing between the mating surface 1114 and the upper portion of the geometric center line L0 is smaller than the spacing with the lower portion of the geometric center line L0. When the first valve core 1120 moves in the direction away from the second valve core 1130, i.e., the first valve core 1120 moves up as shown, the intercepting channel 1129 moves up as well. When the intercepting channel 1129 moves from the left figure of Fig. 9 to the right figure of Fig. 9, the port 1181 of the accommodating cavity 1180 that is communicated with the intercepting channel 1129 is narrowed such that the speed or the volume of the damping medium in the accommodating cavity 1180 flowing out via the port 1181 and the intercepting channel 1129 decreases, causing the pressure in the accommodating cavity 1180 to increase compared to the case of an equidistant spacing. For example, the change of the pressure may result in the pressure in the accommodating cavity 1180 reaching a set value, e.g., result in the pressure in the accommodating cavity 1180 reaching a designed value more rapidly than in the case of the equidistant spacing, such that the third valve core 1170 opens the first port 1128a more rapidly or more easily, thereby causing the first valve core 1120 to move in the direction away from the second valve core 1130 better and more easily. For example, the mating surface 1114 may be a surface only opposite to the intercepting channel 1129, a side of the inner surface of the valve sleeve 1110 that is not opposite to the intercepting channel 1129 may be equidistant so that the valve sleeve 1110 can be better fit with the first valve core 1120, causing the valve sleeve 1110 to better guide the first valve core 1120 to move along the axial direction X.

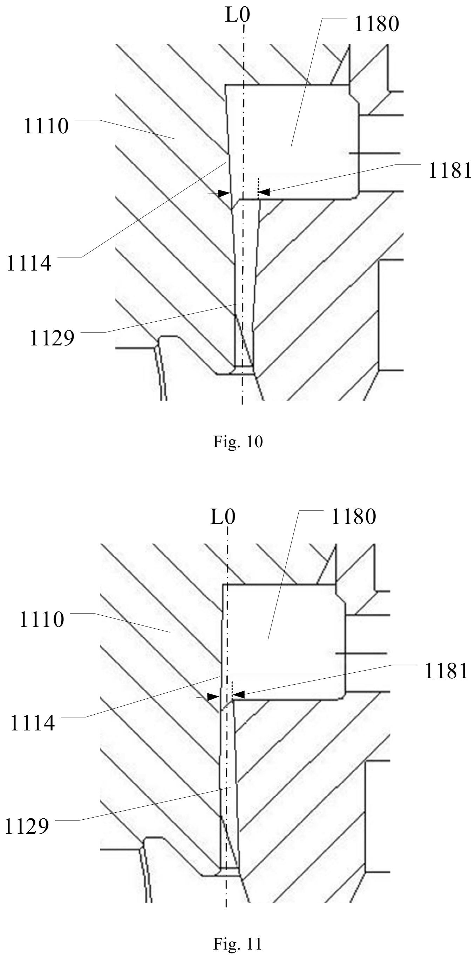

Fig. 10 is a partial cross-sectional structural schematic diagram of another damping valve device provided by an embodiment of the present disclosure. Are as illustrated by Fig. 10, the spacing between the mating surface 1114 and the geometric center line L0 of the intercepting channel 1129 is gradually varied. For example, the mating surface 1114 as shown is a conical surface which is large in top and small in bottom. Thus, the pressure in the accommodating cavity 1180 may change gradually so that the acting force on the third valve core 1170 or the first valve core 1120 can change gradually. Thus, the pressure may not change suddenly, avoiding negative influence on the damping valve device. As a matter of course, the embodiments of the present disclosure have no limitation on the structural design of the spacing between the mating surface 1114 and the geometric center line L0 of the intercepting channel 1129 being not equidistant in the extension direction of the intercepting channel 1129.

In some examples, as illustrated by Fig. 10, when the mating surface 1114 is a conical surface which is large in top and small in bottom, the cross section of the intercepting channel 1129 is gradually enlarged along the extension direction of the intercepting channel 1129 and in the direction away from the second valve core 1130. Thus, the change in the size of the port 1181 can be more obvious so that the pressure in the accommodating cavity 1180 can be affected more obviously.

Fig. 11 is a partial cross-sectional structural schematic diagram of another damping valve device provided by an embodiment of the present disclosure. Are as illustrated by Fig. 11, the spacing between the mating surface 1114 and the geometric center line L0 of the intercepting channel 1129 is gradually varied. For example, the mating surface 1114 as shown is a conical surface which is small in top and large in bottom. Thus, the pressure in the accommodating cavity 1180 may change gradually so that the acting force on the third valve core 1170 or the first valve core 1120 can change gradually. Thus, the pressure may not change suddenly, avoiding negative influence on the damping valve device. As a matter of course, the embodiments of the present disclosure have no limitation on the structural design of the spacing between the mating surface 1114 and the geometric center line L0 of the intercepting channel 1129 being not equidistant in the extension direction of the intercepting channel 1129.

In some examples, as illustrated by Fig. 11, when the mating surface 1114 is a conical surface, the cross section of the intercepting channel 1129 is gradually narrowed along the extension direction of the intercepting channel 1129 and in the direction away from the second valve core 1130. Thus, the change in the size of the port can be more obvious so that the pressure in the accommodating cavity 1180 can be affected more obviously.

In some examples, as illustrated by Fig. 1, the first valve core 1120 is in sliding fit with the valve sleeve 1110 along the axial direction X, and the second valve core 1130 is fixedly connected with the valve sleeve 1110. For example, the second valve core 1130 may be fixed to the valve sleeve 1110 by welding, interference fit, threaded connection, riveting, or the like.

In some examples, as illustrated by Fig. 1, the damping valve device further includes a control unit 1160. The control unit 1160 is located at a side of the first valve core 1120 away from the first end 1111. The control unit 1160 is connected with the first valve core 1120 to control the first valve core 1120 to move along the axial direction X relative to the second valve core 1130.

In some examples, as illustrated by Fig. 1, the control unit 1160 includes an electromagnetic valve. As a matter of course, the embodiments of the present disclosure have no limitations on the form and the structure of the control unit 1160 and also no limitation on the specific structure of the electromagnetic valve.

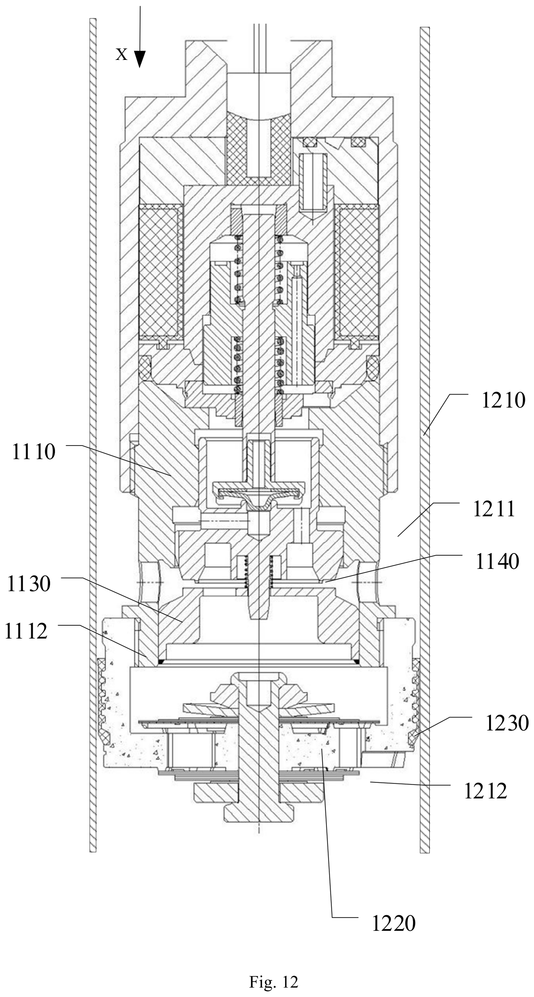

An embodiment of the present disclosure further provides a shock absorber 1200. Fig. 12 is a cross-sectional structural schematic diagram of a shock absorber provided by an embodiment of the present disclosure. As illustrated by Fig. 12, the shock absorber includes any damping valve device described above and a housing 1210. The damping valve device is located within the housing 1210. Thus, the shock absorber 1200 has beneficial effects corresponding to the beneficial effects of the damping valve device, which will not be described here redundantly.

In some examples, as illustrated by Fig. 12, a cavity within the housing 1210 is divided into two cavities: cavity 1211 and cavity 1212. The cavity 1211 is communicated with the cavity 1212 through the flow channel 1140, and the volume of circulation of the damping medium between the cavity 1211 and the cavity 1212 is controlled by the size of the flow channel 1140, thereby realizing adjustable damping performance of the shock absorber 1200.

In some examples, as illustrated by Fig. 12, the shock absorber 1200 further includes a restoring valve assembly 1220. The restoring valve assembly 1220 is located at the second end 1112 of the valve sleeve 1110. A channel of the restoring valve assembly 1220 is communicated with the second valve core 1130 so that the damping medium can circulate between the restoring valve assembly 1220 and the second valve core 1130.

In some examples, as illustrated by Fig. 12, a sealing ring 1230 is further disposed at an outer circumference of the restoring valve assembly 1220. An inner circumference of the sealing ring 1230 is in close fit with the restoring valve assembly 1220 and an outer circumference of the sealing ring 1230 is in close fit with an inner sidewall of the housing 1210 such that the cavity of the housing 1210 is divided by the restoring valve assembly 1220 and the sealing ring 1230 into two cavities: the cavity 1211 and the cavity 1212. The cavity 1211 is communicated with the cavity 1212 through the flow channel 1140, and the volume of circulation of the damping medium between the cavity 1211 and the cavity 1212 is controlled by the size of the flow channel 1140, thereby realizing adjustable damping performance of the shock absorber 1200.

In some examples, as illustrated by Fig. 12, the shock absorber 1200 further includes a piston rod 1240. The piston rod 1240 is connected with the damping valve device. For example, when the piston rod 1240 responds to external shocks, the piston rod 1240 can drive the damping valve device to move along the axial direction X within the housing 1210. At this point, the motion of the damping valve device within the housing 1210 can be controlled by controlling the size of the flow channel 1140, and a feedback may be made to the motion of the piston rod 1240, realizing adjustable damping performance of the shock absorber 1200.

Embodiments of the present disclosure further provide a damping valve device and a shock absorber. The damping valve device includes a valve sleeve, a first valve core, a second valve core, a valve sheet, and an elastic element. The first valve core and the second valve core are located within the valve sleeve and disposed oppositely along an axial direction of the valve sleeve. The valve sheet is located between the first valve core and the second valve core in the axial direction of the valve sleeve. The elastic element is located at a side of the valve sheet close to the second valve core. The second valve core includes an annular main body part and a support part located within the annular main body part. The support part is provided with a through hole penetrating through the support part along the axial direction. The elastic element includes a first end and a second end opposite to each other along the axial direction. The first end is in contact fit with the valve sheet, and the second end is in contact fit with the support part of the second valve core. The valve sheet is configured to move along the axial direction relative to the second valve core under the action of the elastic element so as to form a circulation channel between the valve sheet and the second valve core. The first valve core is configured to move along the axial direction relative to the second valve core to adjust the size of the circulation channel.

In the damping valve device provided by the embodiments of the present disclosure, the valve sheet and the second valve core move along the axial direction so as to form the circulation channel between the valve sheet and the second valve core, and the damping medium may circulate in the through hole of the second valve core and the circulation channel. The first valve core and the second valve core move along the axial direction so that the size of the circulation channel can be adjusted, thereby realizing adjustable damping of the damping valve device.

The damping valve device includes the elastic element disposed between the valve sheet and the second valve core, and the elastic element does not need to be attached or fit with the first valve core. Thus, there is no need to design a structural feature fit with the elastic element for the first valve core so that the structural design of the first valve core can be simpler, thereby reducing the manufacturing cost of the first valve core and increasing the yield of the first valve core. In addition, because there is no need to design the structural feature (e.g., a groove, a limiting structure, or a fixation structure) fit with the elastic element for the first valve core, for damping valve devices different in damping performance, the damping performance can be changed only by altering the structural feature or a parameter of a spring, the valve sheet, or the second valve core, with no need to alter the first valve core. Thus, the universality of the first valve core can be improved; the design cost and the manufacturing cost can be reduced; and then the costs of the damping valve device can be reduced.

The circulation channel of the damping valve device is located between the valve sheet and the second valve core. Thus, the damping medium in the annular main body part of the second valve core can directly act upon the valve sheet. An opening force for separation from attachment between the valve sheet and the second valve core may be directly adjusted by adjusting a radial dimension of an end of the second valve core close to the valve sheet. Thus, the damping performance of the damping valve device can be designed or adjusted more conveniently.

Hereinafter, the damping valve device and the shock absorber provided by the embodiments of the present disclosure are described in detail with reference to the accompanying drawings.

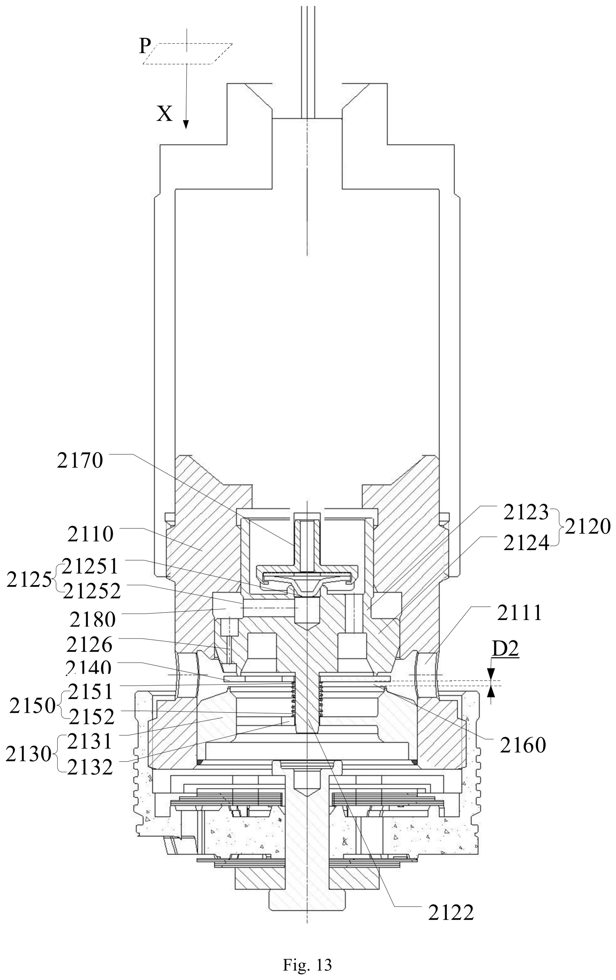

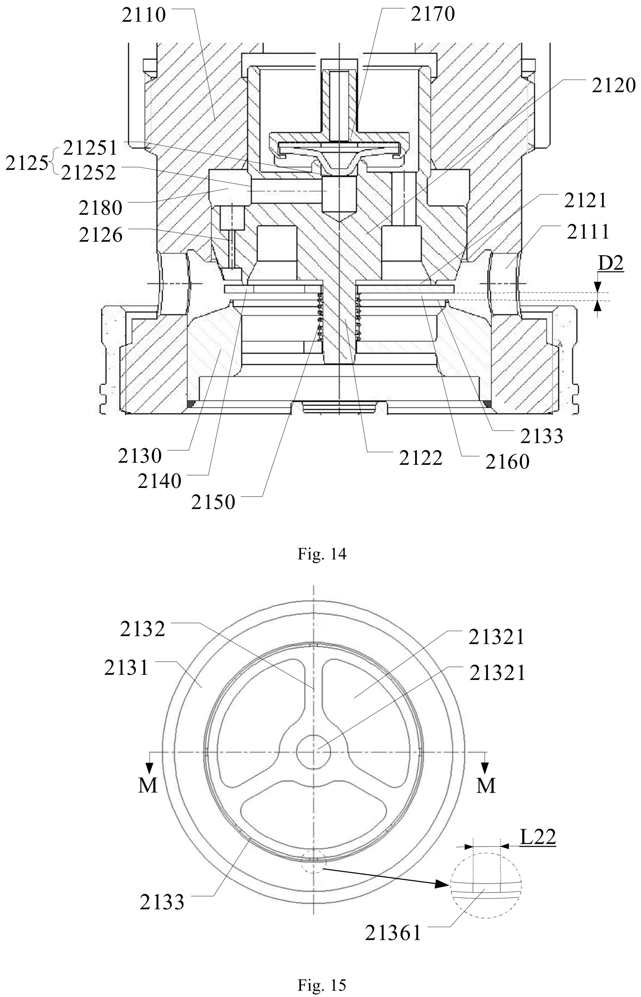

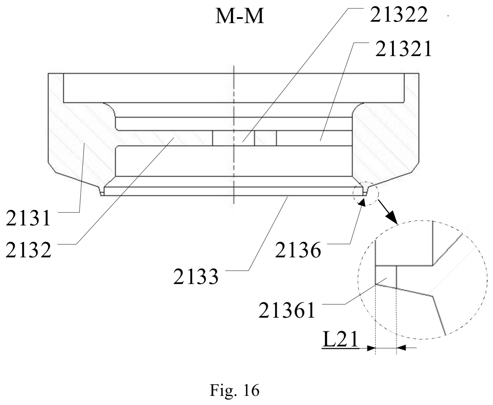

An embodiment of the present disclosure provides a damping valve device and a shock absorber. Fig. 13 is a cross-sectional structural schematic diagram of a damping valve device provided by an embodiment of the present disclosure; Fig. 14 is a partial cross-sectional structural schematic diagram of the damping valve device shown in Fig. 13; Fig. 15 is a top structural schematic diagram of a second valve core shown in Fig. 13; and Fig. 16 is a cross-sectional structural schematic diagram of the second valve core shown in Fig. 15 along line M-M. As illustrated by Fig. 13 to Fig. 16, the damping valve device includes a valve sleeve 2110, a first valve core 2120, a second valve core 2130, a valve sheet 2140, and an elastic element 2150. The first valve core 2120 and the second valve core 2130 are located within the valve sleeve 2110 and disposed oppositely along an axial direction of the valve sleeve X. The valve sheet 2140 is located between the first valve core 2120 and the second valve core 2130 in the axial direction X of the valve sleeve 2110. The elastic element 2150 is located at a side of the valve sheet 2140 close to the second valve core 2130. The second valve core 2130 includes an annular main body part 2131 and a support part 2132 located within the annular main body part 2131. The support part 2132 is provided with a through hole 21321 penetrating through the support part 2132 along the axial direction X. The elastic element 2150 includes a first end 2151 and a second end 2152 opposite to each other along the axial direction X. The first end 2151 is in contact fit with the valve sheet 2140, and the second end 2152 is in contact fit with the support part 2132 of the second valve core 2130. The valve sheet 2140 is configured to move along the axial direction X relative to the second valve core 2130 under the action of the elastic element 2150 so as to form a circulation channel 2160 between the valve sheet 2140 and the second valve core 2130. The first valve core 2120 is configured to move along the axial direction X relative to the second valve core 2130 to adjust the size of the circulation channel 2160.

In the damping valve device provided by the embodiment of the present disclosure, the valve sheet 2140 and the second valve core 2130 move along the axial direction X so as to form the circulation channel 2160 between the valve sheet 2140 and the second valve core 2130, and the damping medium may circulate in the through hole 21321 of the second valve core 2130 and the circulation channel 2160. The first valve core 2120 and the second valve core 2130 move along the axial direction X so that the size of the circulation channel 2160 can be adjusted, thereby realizing adjustable damping of the damping valve device.

For example, a spacing between the valve sheet 2140 and the second valve core 2130 along the axial direction X is D2 and the spacing D2 forms the circulation channel 2160 between the first valve core 2120 and the second valve core 2130. The damping medium may circulate in the through hole 21321 of the second valve core 2130 and the circulation channel 2160 formed by the spacing D2. The first valve core 2120 and the second valve core 2130 move along the axial direction X so that the spacing D2 between the valve sheet 2140 and the second valve core 2130 changes and the size of the circulation channel 2160 formed by the spacing D2 also changes, thereby realizing adjustable damping of the damping valve device.

For example, when the valve sheet 2140 is attached with both of the first valve core 2120 and the second valve core 2130 in the axial direction X, the size of the circulation channel 2160 is zero, and the circulation channel 2160 cannot realize the circulation of the damping medium and the damping force of the damping valve device is maximum. For example, when the spacing between the valve sheet 2140 and the second valve core 2130 along the axial direction is maximum, the size of the circulation channel 2160 is maximum, and the damping force of the damping valve device is minimum.

In the damping valve device provided by this embodiment of the present disclosure, the damping valve device includes the elastic element 2150 disposed between the valve sheet 2140 and the second valve core 2130. The elastic element 2150 does not need to be attached or fit with the first valve core 2120. Thus, there is no need to design a structural feature fit with the elastic element 2150 for the first valve core 2120 so that the structural design of the first valve core 2120 can be simpler, thereby reducing the manufacturing cost of the first valve core 2120 and increasing the yield of the first valve core 2120. In addition, there is no need to design the structural feature fit with the elastic element 2150 for the first valve core 2120. For damping valve devices different in damping performance, the damping performance can be changed only by altering the structural feature or the parameter of the spring, the valve sheet 2140, or the second valve core 2130, with no need to alter the first valve core 2120. Thus, the universality of the first valve core 2120 can be improved; the design cost and the manufacturing cost can be reduced; and then the costs of the damping valve device can be reduced.

For example, when the elastic element 2150 is disposed between the first valve core 2120 and the valve sheet 2140, an end face of the first valve core 2120 fit with the elastic element 2150 needs to be designed with a mating structure of the elastic element 2150. For example, the mating structure is a groove in which the elastic element 2150 is disposed. The design of the groove increases the design cost and the manufacturing cost of the first valve core 2120. In addition, when the size or the model of the elastic element 2150 is altered to adjust a damping parameter of the damping valve device, a structure of the first valve core 2120 fit with the elastic element 2150 needs to be altered correspondingly. This is not conducive to the universalization of the first valve core 2120 and increases the costs of the damping valve device.

In some examples, as illustrated by Fig. 13 and Fig. 14, the valve sheet 2140 is configured to be fixed in the axial direction X relative to the first valve core 2120 under the action of the elastic element 2150. Thus, the stability of the size of the circulation channel 2160 can be improved and the change in the size of the circulation channel 2160 caused by the motion of the valve sheet 2140 in the axial direction X relative to the first valve core 2120 can be avoided. Thus, the stability of the damping performance of the damping valve device can be improved. In addition, due to the fixation of the valve sheet 2140 and the first valve core 2120 in the axial direction, the problem of abnormal sound of the damping valve device may be further avoided, and the adverse influence of collision caused by the relative motion of the valve sheet 2140 and the first valve core 2120 on the durability of the damping valve device may also be reduced.

In some examples, as illustrated by Fig. 13 and Fig. 14, the shape of the valve sheet 2140 includes a disc shape. For example, the shape of the valve sheet 2140 includes a circular disc shape. The embodiments of the present disclosure have no limitation on the shape of the valve sheet 2140.

In some examples, the elastic element 2150 may be a spring, a spiral spring, a torsional spring, or the like. As a matter of course, the embodiments of the present disclosure have no limitations on the form and the structure of the elastic element 2150.

In some examples, the contact fit of the first end 2151 and the second end 2152 of the elastic element 2150 may be attachment, hanging, clamping, or the like, which will not be limited in the embodiments of the present disclosure.

In some examples, as illustrated by Fig. 13 and Fig. 14, a side of the first valve core 2120 close to the valve sheet 2140 includes a first end face 2121. For example, a shape of the first end face 2121 includes a ring shape. A side of the second valve core 2130 close to the valve sheet 2140 includes a second face 2133. For example, a shape of the second end face 2133 includes a ring shape. An orthographic projection of the first end face 2121 on the reference plane P at least partially falls within an orthographic projection of the valve sheet 2140 on the reference plane P, and an orthographic projection of the second end face 2133 on the reference plane P at least partially falls within the orthographic projection of the valve sheet 2140 on the reference plane P. The reference plane P is perpendicular to the axial direction X. Thus, the circulation channel 2160 between the valve sheet 2140 and the second valve core 2130 can be better designed to match different damping performance. Also, the damping performance of the damping valve device can be adjusted by adjusting a radial dimension of the first end face 2121 or a radial dimension of the valve sheet 2140 or a radial dimension of the second end face 2133 of the second valve core 2130.

In some examples, as illustrated by Fig. 13 and Fig. 14, the orthographic projection of the first end face 2121 on the reference plane P completely falls within the orthographic projection of the valve sheet 2140 on the reference plane P, and the orthographic projection of the second end face 2133 on the reference plane P completely falls within the orthographic projection of the valve sheet 2140 on the reference plane P.

In some examples, as illustrated by Fig. 13 and Fig. 14, the radial dimension of the valve sheet 2140 is greater than or equal to the radial dimension of the first end face 2121 and greater than or equal to the radial dimension of the second end face 2133. For example, when the radial dimension of the valve sheet 2140 is greater, the contact area of the damping medium with the valve sheet 2140 can be increased so that the adjustable range of the damping force or the design range of the damping force of the damping valve device can be expanded, thus adapting the damping valve device to more products.

In some examples, as illustrated by Fig. 13 and Fig. 14, the first valve core 2120 includes a first guide shaft 2122 that extends along the axial direction X towards the second valve core 2130. The valve sheet 2140 and the elastic element 2150 are sleeved on the first guide shaft 2122. Thus, better and more stable assembly of the valve sheet 2140 and the elastic element 2150 can be realized, and the valve sheet 2140 and the elastic element 2150 can be limited from moving or swaying in the radial direction thereof, thus enabling the damping valve device to have more stable damping performance.

In some examples, as illustrated by Fig. 13 to Fig. 16. a guide hole 21322 extending along the axial direction X is formed in the support part 2132 of the second valve core 2130. The guide hole 21322 is fit with the first guide shaft 2122 such that the guide hole 21322 plays a role in guiding the motion of the first guide shaft 2122 along the axial direction X. Thus, the motion of the first guide shaft 2122 along the axial direction X can be further guaranteed, and it can also be guaranteed that the elastic element 2150 can be completely sleeved on the first guide shaft 2122 such that the elastic performance of the elastic element 2150 is more stable.

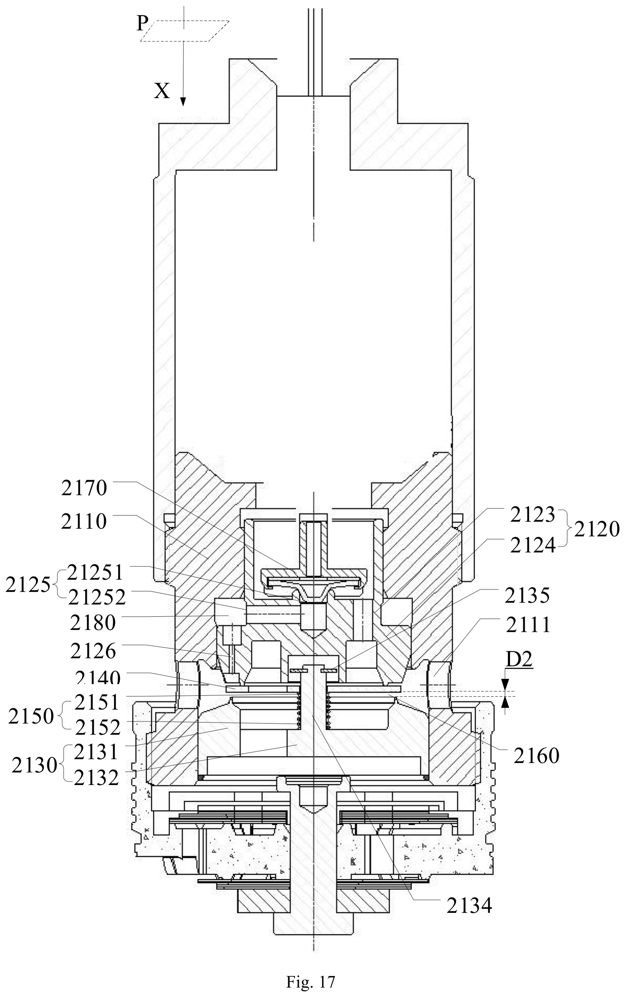

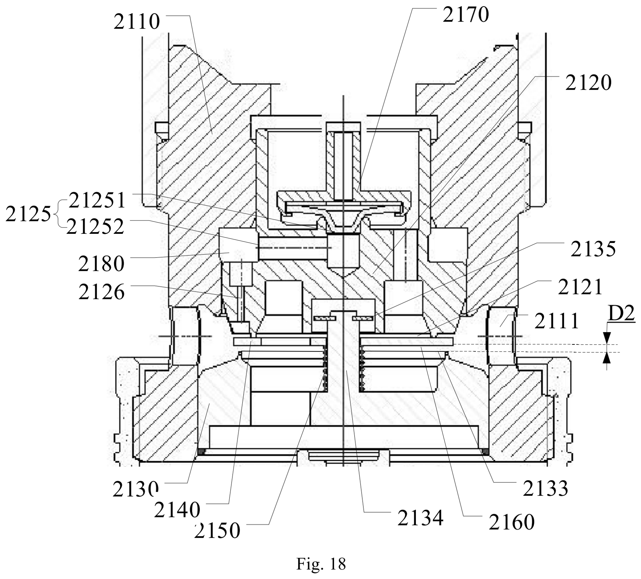

Fig. 17 is a cross-sectional structural schematic diagram of a damping valve device provided by an embodiment of the present disclosure; and Fig. 18 is a partial cross-sectional structural schematic diagram of the damping valve device shown in Fig. 17. As illustrated by Fig. 17 and Fig. 18, a second guide shaft 2134 is disposed on the support part 2132 of the second valve core 2130 and extends along the axial direction X towards the first valve core 2120. The valve sheet 2140 and the elastic element 2150 are sleeved on the second guide shaft 2134. Thus, better and more stable assembly of the valve sheet 2140 and the elastic element 2150 can be realized, and the valve sheet 2140 and the elastic element 2150 can be limited from moving or swaying in the radial direction thereof, thus enabling the damping valve device to have more stable damping performance.

In some examples, as illustrated by Fig. 17 and Fig. 18. a blocking structure 2135 is further disposed at an end of the second guide shaft 2134 close to the first valve core 2120 and configured to block the valve sheet 2140 from separating from the second guide shaft 2134. For example, the blocking structure 2135 is configured to block the valve sheet 2140 from separating from the second guide shaft 2134 in the assembling process. For example, a dimension of the blocking structure 2135 in at least one direction along the radial direction is greater than a radial dimension of a via hole of the valve sheet 2140 for the second guide shaft 2134 to pass therethrough in this direction. Thus, the valve sheet 2140 can be blocked from separating from the second guide shaft 2134. For example, a maximum radial dimension of the blocking structure 2135 is greater than a maximum dimension of the via hole of the valve sheet 2140 for the second guide shaft 2134 to pass therethrough. For example, the radial dimension of the blocking structure 2135 in any direction is greater than the radial dimension of the via hole of the valve sheet 2140 for the second guide shaft 2134 to pass therethrough.

In some examples, as illustrated by Fig. 17 and Fig. 18, the blocking structure 2135 may be a clamp spring which is fixed to the end of the second guide shaft 2134 close to the first valve core 2120. As a matter of course, the embodiments of the present disclosure have no limitation on this. For example, the blocking structure 2135 may also be of a sheet structure which is fixed to the end of the second guide shaft 2134 close to the first valve core 2120 through a riveting pressing process, threaded connection, welding, or close fit.

In some examples, as illustrated by Fig. 13, Fig. 14, Fig. 17, and Fig. 18, the valve sleeve 2110 includes a circulation hole 2111 that penetrates through an outer sidewall and an inner sidewall of the valve sleeve 2110. The circulation hole 2111 at least partially overlaps with the valve sheet 2140 in the radial direction of the valve sleeve 2110. Thus, the circulation hole 2111 can realize communication of the circulation channel 2160 with a cavity outside the valve sleeve 2110. By adjusting the size of the circulation channel 2160, the speed or volume of the damping medium flowing into the cavity outside the valve sleeve 2110 may be adjusted, or the speed or the volume of the damping medium inflowing from the cavity outside the valve sleeve 2110 may be adjusted. Thus, the damping performance of the damping valve device can be adjusted. As a matter of course, the embodiments of the present disclosure have no limitations on the size and the number of circulation holes 2111. For example, the size and the number of circulation holes 2111 may be designed according to the size of the circulation channel 2160 and the like. For example, the number of circulation holes 2111 may be greater than or equal to 1. For example, when there are a plurality of circulation holes 2111, the plurality of circulation holes 2111 may be uniformly distributed at the periphery of the valve sleeve 2110.

In some examples, as illustrated by Fig. 15 and Fig. 16, the number of through holes 21321 of the support part 2132 of the second valve core 2130 may be one or more. The number and size of through holes 21321 may also affect the volume of circulation of the damping medium. Thus, different numbers and sizes of through holes 21321 may be designed according to the requirement of the damping performance. The embodiments of the present disclosure have no limitations on the number and size of through holes 21321. For example, the support part 2132 may be designed with one through hole 21321. The through hole 21321 may be symmetrical about the center of the support part 2132. As a matter of course, the through hole may also be designed into an offset hole according to the requirement of the damping valve device. For example, the support part 2132 may also be designed with a plurality of through holes 21321 that are symmetrical about the center of the support part 2132. The plurality of through holes 21321 are uniformly distributed along the circumference of the support part 2132.

In some examples, as illustrated by Fig. 15 and Fig. 16, an opening 21361 is formed in an end 2136 of the second valve core 2130 close to the first valve core 2120, and the second end face 2133 is a surface of the end 2136 facing the first valve core 2120. The opening 21361 penetrates through an outer sidewall and an inner sidewall of the end 2136. When the spacing D2 between the valve sheet 2140 and the second valve core 2130 in the axial direction X is zero, the valve sheet 2140 is attached with the end 2136 of the second valve core 2130. With the opening 21361 formed in the end 2136, even though the valve sheet 2140 is attached with the end 2136 of the second valve core 2130, the damping medium may also circulate via the opening 21361. With the opening 21361, damage to the damping valve device caused by excessive pressure due to not circulation of the damping medium when the valve sheet 2140 is attached with the end 2136 of the second valve core 2130 can be avoided.

For example, as illustrated by Fig. 15 and Fig. 16. the number of openings 21361 in the end 2136 is greater than or equal to 1. For example, when there are a plurality of openings 21361, the plurality of openings 21361 may be uniformly distributed on the end 2136.

For example, as illustrated by Fig. 15 and Fig. 16. the opening 21361 has a depth dimension L221 along the axial direction X and an opening dimension L22 along a circumferential direction of the second end face 2133. For example, the depth dimension L221 and the opening dimension L22 of the opening 21361 may be adjusted according to the damping performance of the damping valve device and the shock absorber where the damping valve device is located. For example, the depth dimension L221 of the opening 21361 is less than a maximum dimension of the spacing D2, and the opening dimension L22 is less than the maximum dimension of the spacing D2. For example, the depth dimension L221 of the opening 21361 is less than 1/3 of the maximum dimension of the spacing D2, and the opening dimension L22 is less than 1/3 of the maximum dimension of the spacing D2.

In some examples, in some examples, the valve sheet may also be provided with an opening that is configured for the damping medium to circulate therethrough when the spacing D2 between the valve sheet and the second valve core in the axial direction X is zero. For example, the opening may be a through hole penetrating through the valve sheet, or may also be a groove. With the opening, damage to the damping valve device caused by excessive pressure due to not circulation of the damping medium when the valve sheet is attached with the end of the second valve core can be avoided.

In some examples, as illustrated by Fig. 13, Fig. 14. Fig. 17, and Fig. 18, the damping valve device further includes a third valve core 2170. The third valve core 2170 is located at a side of the first valve core 2120 away from the second valve core 2130 in the axial direction X and configured to move along the axial direction X relative to the first valve core 2120. The first valve core 2120 includes a first body part 2123 and a second body part 2124. The second body part 2124 is closer to the second valve core 2130 than the first body part 2123. An outer diameter of the second body part 2124 is greater than that of the first body part 2123. A portion of the second body part 2124 that is not overlaid by the first body part 2123 is close to a surface of the third valve core 2170, a lateral surface of the first body part 2123, and an inner wall of the valve sleeve 2110 to form an accommodating cavity 2180. The first body part 2123 includes a pressure relief channel 2125. A first port 21251 of the pressure relief channel 2125 faces the third valve core 2170. The third valve core 2170 is configured to cover or open the first port 21251. A second port 21252 of the pressure relief channel 2125 is communicated with the accommodating cavity 2180. The second body part 2124 includes an intercepting channel 2126 that penetrates through the second body part 2124. The accommodating cavity 2180 is communicated with the circulation hole 2111 through the intercepting channel 2126.

In an embodiment of the present disclosure, when the first valve core 2120 moves towards the second valve core 2130, the space of the accommodating cavity 2180 increases and the pressure in the accommodating cavity 2180 decreases so that the damping medium can enter the accommodating cavity 2180 through the intercepting channel 2126. When the first valve core 2120 moves in the direction away from the second valve core 2130, the space of the accommodating cavity 2180 decreases and the pressure in the accommodating cavity 2180 increases, causing the first valve core 2120 to move in the direction away from the second valve core 2130. At this point, the damping medium in the accommodating cavity 2180 may act upon the third valve core 2170 through the pressure relief channel 2125. When the pressure in the accommodating cavity 2180 increases to a set value, the third valve core 2170 moves in a direction away from the pressure relief channel 2125 under the action of the pressure of the damping medium in the pressure relief channel 2125. At this point, the third valve core 2170 opens the first port 21251 and the damping medium in the accommodating cavity 2180 can flow out through the first port 21251. Thus, the pressure in the accommodating cavity 2180 decreases, and the first valve core 2120 can move in the direction away from the second valve core 2130 better and more easily. When the first valve core 2120 moves in the direction away from the second valve core 2130, the pressure in the accommodating cavity 2180 increases such that part of the damping medium in the accommodating cavity 2180 flows out of the intercepting channel 2126.

In an embodiment of the present disclosure, the intercepting channel 2126 is provided in the second body part 2124 so that the design of the intercepting channel 2126 can be simpler, and the intercepting channel 2126 can be implemented without additionally increasing parts. Thus, the design of the first valve core 2120 and the valve sleeve 2110 can be simpler, and the manufacturing of the first valve core 2120 and the valve sleeve 2110 can be simpler, and the fit of the first valve core 2120 and the valve sleeve 2110 can also be simpler. Moreover, the cost and the assembly difficulty can be reduced and the assembly efficiency can be improved; and the structural design, the dimension chain fit and the damping performance stability of the damping valve device are better.

In some examples, as illustrated by Fig. 13, Fig. 14. Fig. 17, and Fig. 18, the intercepting channel 2126 penetrates through the interior of the second body part 2124. Thus, the design and fabrication of the intercepting channel 2126 may be simpler. For example, the process of fabricating the intercepting channel 2126 on a lateral surface of the second body part 2124 is usually more complex than that of fabricating the intercepting channel 2126 inside the second body part 2124. For example, when the intercepting channel 2126 is fabricated inside the second body part 2124, there is little burr, and the fabrication difficulty is low.

In some examples, as illustrated by Fig. 13, Fig. 14, Fig. 17, and Fig. 18, a cross-sectional dimension of the intercepting channel 2126 is smaller than a size of the first port 21251, and the cross-sectional dimension of the intercepting channel 2126 is smaller than a size of the second port 21252. Thus, the intercepting channel 2126 may not greatly influence the pressure in the accommodating cavity 2180. For example, the cross-sectional dimension of the intercepting channel 2126 is smaller than 1/5 of the size of the first port 21251, and the cross-sectional dimension of the intercepting channel 2126 is smaller than 1/5 of the size of the second port 21252. The embodiments of the present disclosure have no limitation on the cross-sectional dimension of the intercepting channel 2126.

In some examples, as illustrated by Fig. 13, Fig. 14. Fig. 17, and Fig. 18, the accommodating cavity 2180 may be an annular cavity. For example, there may be one or more pressure relief channels 2125. For example, a plurality of pressure relief channels 2125 may be uniformly arranged on the second body part 2124 and uniformly communicated with the accommodating cavity 2180. As a matter of course, the embodiments of the present disclosure have no limitation on the shape of the accommodating cavity 2180 and no limitations on the number, shape and arrangement positions of the pressure relief channels 2125.

In some examples, as illustrated by Fig. 13, Fig. 14. Fig. 17, and Fig. 18, the number of intercepting channels 2126 may be 1 or more. The embodiments of the present disclosure have no limitation on the number of intercepting channels 2126. For example, a plurality of intercepting channels 2126 may be uniformly distributed within the second body part 2124. The plurality of intercepting channels 2126 may also be off-center distributed within the second body part 2124.

In some examples, as illustrated by Fig. 13, Fig. 14, Fig. 17, and Fig. 18, a cross-sectional dimension of the intercepting channel 2126 along an extension direction of the intercepting channel 2126 may be uniform. As a matter of course, the embodiments of the present disclosure have no limitation on this. The cross-sectional dimension of the intercepting channel 2126 along the extension direction of the intercepting channel 2126 may be gradually varied, e.g., gradually increased or gradually decreased, or be large in middle and small in two sides, or be small in middle and large in two sides.

In some examples, as illustrated by Fig. 13, Fig. 14. Fig. 17, and Fig. 18, the intercepting channel 2126 penetrates through the interior of the second body part 2124 along the axial direction X. As a matter of course, the embodiments of the present disclosure have no limitation on this. For example, the extension direction of the intercepting channel 2126 may intersect the axial direction X. For example, the intercepting channel 2126 may be a curve, a bent line, or the like surrounding the outer lateral surface of the second body part 2124. The intercepting channel 2126 may also be a curve, a bent line, or the like located within the second body part 2124. The intercepting channel 2126 may also be partly located on the outer lateral surface of the second body part 2124 and partly located within the second body part 2124.

In some examples, as illustrated by Fig. 13, Fig. 14. Fig. 17, and Fig. 18, a radial dimension of two ends of the intercepting channel 2126 opposite to each other is greater than a radial dimension of at least a part of the intercepting channel 2126 between the two ends. Thus, the pressure in the accommodating cavity 2180 may be regulated by means of at least part of the intercepting channel 2126 between the two ends; meanwhile, the radial dimension of the two ends is designed to be relatively large so that the area of the intercepting channel 2126 can be increased, thus allowing the damping medium to enter the intercepting channel 2126 more smoothly. In addition, the radial dimension of the two ends is designed to be relatively large so that the impact or influence of the damping medium flowing out of the intercepting channel 2126 on surrounding components, e.g., including the valve sheet 2140, can also be reduced.

In some examples, the damping valve device further includes a control unit. The control unit is located at a side of the first valve core away from the second valve core. The control unit is connected with the first valve core to control the first valve core to move along the axial direction relative to the second valve core.

In some examples, the control unit includes an electromagnetic valve. As a matter of course, the embodiments of the present disclosure have no limitations on the form and the structure of the control unit and also no limitation on the specific structure of the electromagnetic valve.

In some examples, as illustrated by Fig. 13, Fig. 14. Fig. 17, and Fig. 18, the first valve core 2120 is in sliding fit with the valve sleeve 2110 along the axial direction X, and the second valve core 2130 is fixedly connected with the valve sleeve 2110. For example, the second valve core 2130 may be fixed to the valve sleeve 2110 by welding, interference fit, threaded connection, riveting, or the like.

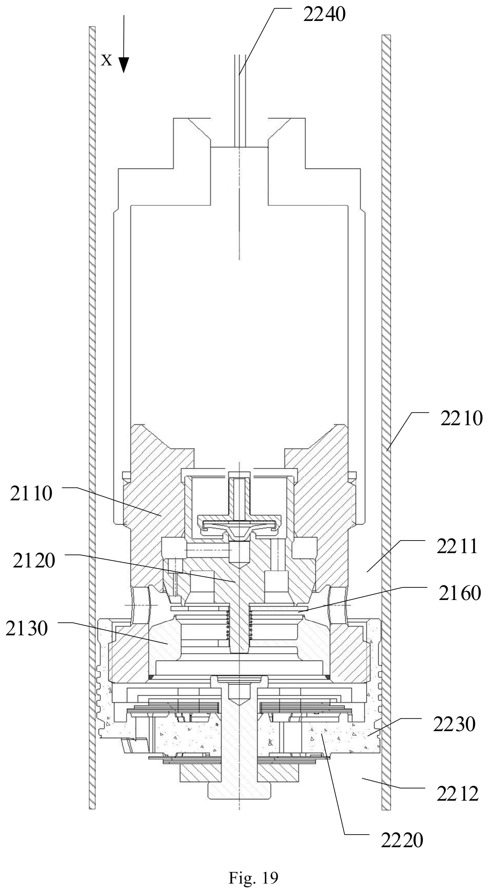

An embodiment of the present disclosure further provides a shock absorber. Fig. 19 is a cross-sectional structural schematic diagram of a shock absorber provided by an embodiment of the present disclosure. As illustrated by Fig. 19, the shock absorber includes any damping valve device described above and a housing 2210. The damping valve device is located within the housing 2210. Thus, the shock absorber has beneficial effects corresponding to the beneficial effects of the damping valve device, which will not be described here redundantly.

In some examples, as illustrated by Fig. 19, a cavity within the housing 2210 is divided into two cavities: cavity 2211 and cavity 2212. The cavity 2211 is communicated with the cavity 2212 through the circulation channel 2160, and the volume of circulation of the damping medium between the cavity 2211 and the cavity 2212 is controlled by the size of the circulation channel 2160, thereby realizing adjustable damping performance of the shock absorber.

In some examples, as illustrated by Fig. 19, the shock absorber further includes a restoring valve assembly 2220. The restoring valve assembly 2220 is located at a side of the second valve core 2130 away from the first valve core 2120. A channel of the restoring valve assembly 2220 is communicated with the second valve core 2130 so that the damping medium can circulate between the cavity 2211 and the cavity 2212 through the restoring valve assembly 2220 and the second valve core 2130.

In some examples, as illustrated by Fig. 19, a sealing ring 2230 is further disposed at an outer circumference of the restoring valve assembly 2220. An inner circumference of the sealing ring 2230 is in close fit with the restoring valve assembly 2220 and an outer circumference of the sealing ring 2230 is in close fit with an inner sidewall of the housing 2210 such that the cavity of the housing 2210 is divided by the restoring valve assembly 2220 and the sealing ring 2230 into two cavities: the cavity 2211 and the cavity 2212. The cavity 2211 is communicated with the cavity 2212 through the circulation channel 2160, and the volume of circulation of the damping medium between the cavity 2211 and the cavity 2212 is controlled by the size of the circulation channel 2160, thereby realizing adjustable damping performance of the shock absorber 200.

In some examples, as illustrated by Fig. 19, the shock absorber further includes a piston rod 2240. The piston rod 2240 is connected with the damping valve device. For example, when the piston rod 2240 responds to external shocks, the piston rod 2240 can drive the damping valve device to move along the axial direction X within the housing 2210. At this point, the motion of the damping valve device within the housing 2210 can be controlled by controlling the size of the circulation channel 2160, and a feedback may be made to the motion of the piston rod 2240, realizing adjustable damping performance of the shock absorber.

The damping valve device in the present disclosure is also referred to as an adjustable damper mechanism or a damper mechanism.

Embodiments of the present disclosure provide a restoring valve for a damping valve device, a damping valve device including the restoring valve, and a shock absorber including the damping valve device. In the restoring valve, in a circulation channel from inside to outside, because the internal space or the diameter of the valve body is small, the effective area for the circulation path is small, and a large damping force is often produced in the circulation path from inside to outside, thereby affecting the damping characteristics of the overall restoring valve and the damping valve device including the restoring valve. According to an embodiment of the present disclosure, at least two circulation paths are provided in the circulation channel from inside to outside in the restoring valve, wherein one is a first circulation channel formed by the hollowed-out part of an upper restoring circulation valve sheet and a circulation hole; and the other one is a second circulation channel formed by connecting an interval between the upper restoring circulation valve sheet and a valve seat with a circulation hole. With the addition of the second circulation channel, the resistance to fluid circulation from the inside to the outside of the restoring valve is improved, thereby improving the corresponding damping characteristics.

Hereinafter, the restoring valve and the damping valve device according to the embodiments of the present disclosure are described in more detail with reference to the drawings so that the corresponding technical solutions can be clearer and easier to understand.

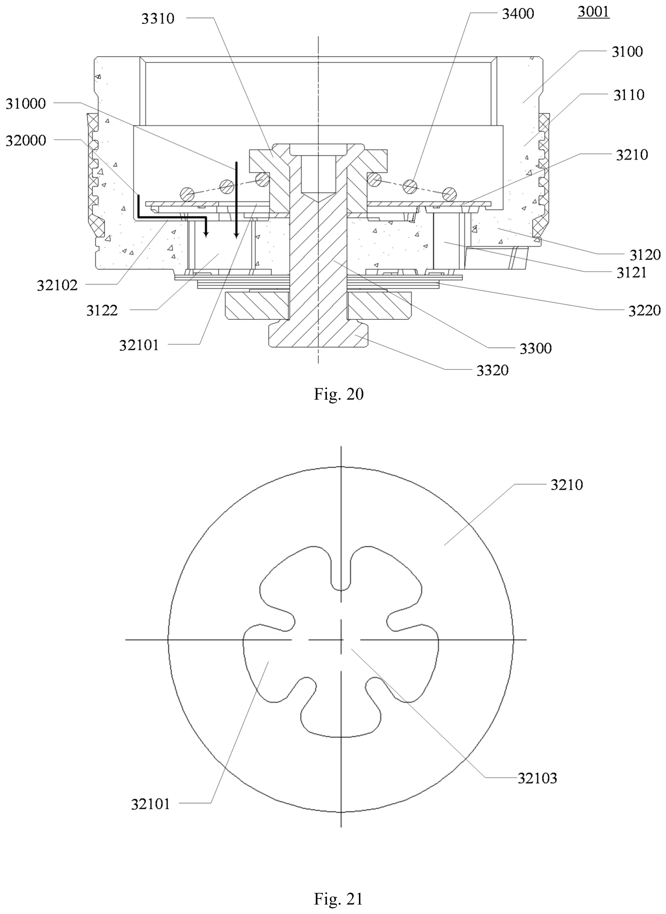

Fig. 20 is a cross-sectional structural schematic diagram of a restoring valve according to an embodiment of the present disclosure. As illustrated by Fig. 20, the restoring valve 3001 includes a sleeve part 3100, an upper restoring circulation valve sheet 3210, and a lower restoring circulation valve sheet 3220. The sleeve part 3100 includes a tubular portion 3110 and a valve seat 3120 connected to an opening at one end of the tubular portion 3110. For example, the valve seat 3120 is a disc-shaped member, and a periphery thereof is connected to an edge of one opening of the tubular portion 3110. The valve seat 3120 includes a first circulation hole 3121 and a second circulation hole 3122 that penetrate through the valve seat 3120. For example, the first circulation hole 3121 is at least a part of a circulation channel for a fluid to flow from the outside of the restoring valve to the inside of the restoring valve, and the second circulation hole 3122 is at least a part of a circulation channel for the fluid to flow from the inside of the restoring valve to the outside of the restoring valve. For example, a part surrounded by the tubular portion 3110 may be referred to as the inside of the restoring valve, and a side of the valve seat 3120 opposite to the tubular portion 3110 may be referred to as the outside of the restoring valve. As will be described in detail below, because the tubular portion 3110 is connected with other valve body part of the damping valve device, the inside of the restoring valve is also communicated with the inside of the other valve body.

The upper restoring circulation valve sheet 3210 is located at a side of the valve seat 3120 in an extension direction of the first circulation hole 3121 and the second circulation hole 3122 and located within the tubular portion 3110, and configured to cover the first circulation hole 3121.

The extension direction of the first circulation hole 3121 and the second circulation hole 3122 is the up-and-down direction in the figure, which is roughly parallel to the axis direction of the tubular portion 3110. The tubular portion 3110 may act as a piston in the shock absorber, which may be provided with a piston ring on an outer side thereof and reciprocate in a cylinder block. The extension direction of the first circulation hole 3121 and the second circulation hole 3122 is also roughly the same as the reciprocating direction of the piston. However, the embodiments of the present disclosure are not limited thereto. The extension direction may also be at an included angle with the axis direction, which may be adjusted properly according to an actual situation. In general, the first circulation hole 3121 and the second circulation hole 3122 penetrate the valve seat along a thickness direction of the valve seat 3120.

The lower restoring circulation valve sheet 3220 is located at a side of the valve seat 3120 opposite to the upper restoring circulation valve sheet 3210 and configured to cover the second circulation hole 3122. For example, as illustrated by Fig. 20, the upper restoring circulation valve sheet 3210 is disposed on an upper side of the valve seat 3120, and the lower restoring circulation valve sheet 3220 is disposed on a lower side of the valve seat, and both are disposed on two sides of the valve seat 3120 opposite to each other, respectively. The upper restoring circulation valve sheet 3210 and the lower restoring circulation valve sheet 3220 are valve sheets for use on the circulation channel from outside to inside and the circulation channel from inside to outside, respectively. It needs to be noted that the upper restoring circulation valve sheet 3210 covering the first circulation hole 3121 and the lower restoring circulation valve sheet 3220 covering the second circulation hole 3122 refer to including a state in which corresponding valve sheets cover the openings of the corresponding circulation holes, and in the working process of the restoring valve, the openings may be opened due to the fluid circulation such that the corresponding circulation paths are opened. For example, the upper restoring circulation valve sheet 3210 covers an upper opening of the first circulation hole 3121, preventing the fluid from flowing from an upper side of a valve disc into the first circulation hole 3121. However, when the fluid flows from a lower side of the valve disc through the first circulation hole 3121 to the upper restoring circulation valve sheet 3210. the upper restoring circulation valve sheet 3210 may be pressed open by a pressure such that the fluid flows into the restoring valve. Similarly, the lower restoring circulation valve sheet 3220 covers a lower opening of the second circulation hole 3122, preventing the fluid from flowing from the lower side of the valve disc into the second circulation hole 3122. However, when the fluid flows from the upper side of the valve disc through the second circulation hole 3122 to the lower restoring circulation valve sheet 3220. the lower restoring circulation valve sheet 3220 may be pressed open by a pressure such that the fluid flows out of the restoring valve.

As illustrated by Fig. 20, the upper restoring circulation valve sheet 3210 includes a hollowed-out part 32101 and exposes the second circulation hole 3122 through the hollowed-out part 32101 to form a first circulation channel 31000 from the inside of the restoring valve to the outside of the restoring valve.

Fig. 21 is a planar structural schematic diagram of an upper restoring circulation valve sheet 3210. As illustrated by Fig. 21, the upper restoring circulation valve sheet 3210 includes a hollowed-out part 32101. When the upper restoring circulation valve sheet 3210 covers the valve seat 3120, the hollowed-out part 32101 may expose the second circulation hole 3122. The hollowed-out part 32101 will be described in more detail below.

For example, in the internal space defined by the tubular portion 3110, the fluid flows into the second circulation hole 3122 through the hollowed-out part 32101 of the upper restoring circulation valve sheet 3210. At a lower end of the second circulation hole 3122, the lower restoring circulation valve sheet 3220 covering a lower opening of the second circulation hole 3122 is pressed open under the action of the pressure of the fluid such that the fluid flows from the inside to the outside of the restoring valve. The first circulation channel 31000 is a first circulation path from inside to outside. However, because to two circulation holes (e.g., the first circulation hole 3121 and the second circulation hole 3122) are to be provided within an entire surface of the valve seat, the space for the circulation hole is limited, which affects the damping characteristics of the fluid from inside to outside.

In an embodiment of the present disclosure, a gap is formed between an edge of the upper restoring circulation valve sheet 3210 and an inner wall of the tubular portion. As illustrated by Fig. 20, a peripheral edge of the upper restoring circulation valve sheet 3210 does not extend to the inner wall of the tubular portion 3110, and instead, a gap is reserved between the peripheral edge and the inner wall of the tubular portion. Moreover, this gap may be further communicated with the second circulation hole 3122 through an interval between the upper restoring circulation valve sheet 3210 and the valve seat 3120 to from a second circulation channel 32000 from the inside of the restoring valve to the outside of the restoring valve.

In an embodiment of the present disclosure, due to the addition of the second circulation channel, the limitation on the circulation channel from inside to outside due to the limited internal space of the restoring valve can be greatly reduced. Because the second circulation channel utilizes the interval along the entire periphery of the upper restoring circulation valve sheet, the effective second circulation channel can be achieved only by providing a small gap between the upper restoring circulation valve sheet and the inner wall of the tubular portion, which may not have much influence on the design of the upper restoring circulation valve sheet and other components of the restoring valve.

In some examples, as illustrated by Fig. 20, an opening of the first circulation hole 3121 close to the upper restoring circulation valve sheet 3210 includes a flange 31211. For example, the flange 31211 surrounds an opening of the first circulation hole 3121 in an upper surface of the valve seat 3120. The flange 31211 protrudes from the valve seat 3120 towards the upper restoring circulation valve sheet 3210 and supports the upper restoring circulation valve sheet 3210. That is to say, when the upper restoring circulation valve sheet 3210 covers the first circulation hole 3121. it may be abutted against the flange 31211. When the upper restoring circulation valve sheet 3210 is abutted against the flange 31211, due to the action of the fluid pressure, the upper restoring circulation valve sheet closes the upper opening of the first circulation hole 3121, and therefore, the fluid cannot circulate downwards from the first circulation hole 3121. The flange 31211 may make an interval 32102 present between the upper restoring circulation valve sheet 3210 and the valve seat 3120. For example, the interval 32102 is formed between at least a part of the upper restoring circulation valve sheet 3210 located outside the flange 31211 and the valve seat 3120. As illustrated by Fig. 20, the interval 32102 is communicated with the second circulation hole 3122 such that the gap between the upper restoring circulation valve sheet 3210 and the tubular portion 3110, the interval 32102, and the second circulation hole 3122 form the second circulation channel 32000 from the inside to the outside of the restoring valve.

For example, the gap between the upper restoring circulation valve sheet 3210 and the interior of the tubular portion 3110 and the second circulation hole 3122 are communicated with each other through the interval 32102 to form the second circulation channel 32000.

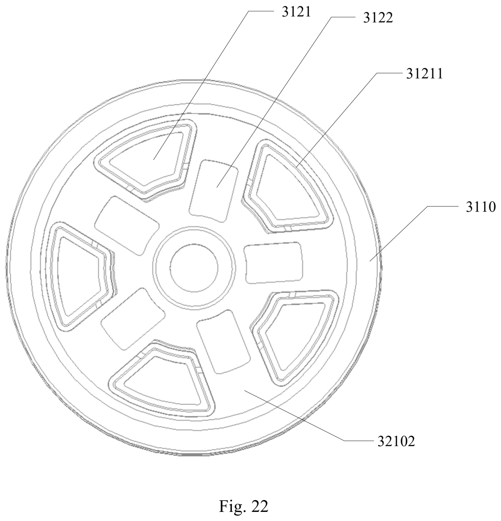

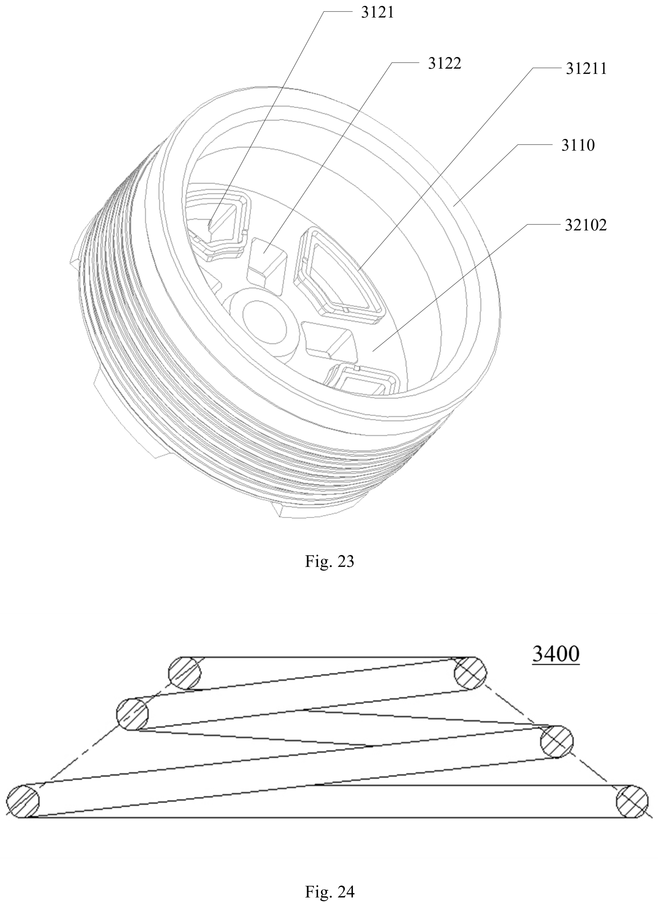

In order to make the structure of the second circulation channel 32000 clearer, Fig. 22 and Fig. 23 illustrate a top view and a perspective valve of a sleeve part of a restoring valve according to an embodiment of the present disclosure, respectively. As illustrated by Fig. 22, the valve seat 3120 of the sleeve part exposed by the tubular portion 3110 is provided with a plurality of first circulation holes 3121 and a plurality of second circulation holes 3122 arranged along the circumferential direction. For example, the plurality of first circulation holes 3121 and the plurality of second circulation holes 3122 are arranged alternately along the circumferential direction. Five first circulation holes 3121 and five second circulation holes 3122 are shown in Fig. 22. However, the embodiments of the present disclosure are not limited thereto, and less than five or more than five first circulation holes 3121 and second circulation holes 3122 may be provided. In addition, the plurality of first circulation holes 3121 and the plurality of second circulation holes 3122 are arranged alternately so that a uniform damping force can be formed at different positions when the fluid circulates. However, the embodiments of the present disclosure are not limited thereto, and other arrangement manners may also be adopted. With reference to Fig. 23, the flange 31211 surrounds an opening of each first circulation hole 3121 in the upper surface (the surface facing the upper restoring circulation valve sheet 3210) of the valve seat 3120 and protrudes upwards. That is, the flange 31211 protrudes towards the upper restoring circulation valve sheet 3210. Therefore, when the upper restoring circulation valve sheet 3210 is propped against the valve seat 3120, it will come into contact with the flange 31211, and the interval 32102 is formed between a part thereof outside the flange 31211 and the valve seat 3120. The "part outside the flange 31211" mentioned here refers to a part outside a region defined by the flange. As illustrated by Fig. 23, the interval 32102 may be communicated with the second circulation hole 3122 so that the fluid, after flowing to the interval 32102 through the gap between the peripheral edge of the upper restoring circulation valve sheet 3210 and the inner wall of the tubular portion 3110, can flow to the second circulation hole 3122 through the interval 32102 and then flow to the outside of the restoring valve through the second circulation hole 3122.

For example, the embodiments of the present disclosure have no specific limitation on the dimension of the flange along the axis direction of the tubular portion, and a suitable dimension may be set according to an actual application scenario. By adjusting the dimension of the flange, the resistance to the fluid in the second circulation path may be adjusted reasonably, and the damping characteristics of the restoring valve may be improved.

As illustrated by Fig. 22, a planar shape of the first circulation hole 3121 in the valve seat 3120 is roughly trapezoidal, and a planar shape of the second circulation hole 3122 is roughly rectangular; and in the plane direction, the first circulation hole 3121 is closer to the edge of the valve disc 120. Such a design can make an area ratio of the circulation hole to the valve disc larger so that the design space of the valve disc and the circulation hole can be effectively utilized and the damping characteristics of the restoring valve may be improved. However, the embodiments of the present disclosure are not limited thereto, and circulation holes in other shapes may also be adopted. Moreover, the valve disc further includes in the middle position thereof a circular through hole that is configured to accommodate a columnar structure to be described subsequently, which will not be described here redundantly.

In some examples, as illustrated by Fig. 20, a columnar structure 3300 penetrating through the upper restoring circulation valve sheet 3210, the valve seat 3120, and the lower restoring circulation valve sheet 3220 is further included. Two ends of the columnar structure 3300 include a first limiting part 3310 and a second limiting part 3320 that protrude radially. Here, protruding radially refers to protruding along the radial direction of the columnar structure. That is to say, a radial dimension of the first limiting part 3310 and the second limiting part 3320 is greater than a radial dimension of other parts of the columnar structure 300. The first limiting part 3310 is located at a side of the upper restoring circulation valve sheet 3210 and the second limiting part 3320 is located at a side of the lower restoring circulation valve sheet 3220 to limit the positions of the upper restoring circulation valve sheet and the lower restoring circulation valve sheet in the axial direction of the columnar structure 3300 (i.e., limit the positions of the upper restoring circulation valve sheet and the lower restoring circulation valve sheet the radial direction thereof). For example, as illustrated by Fig. 20, the first limiting part 3310 is located on the side of the upper restoring circulation valve sheet 3210 away from the valve seat 3120 and the second limiting part 3320 is located on the side of the lower restoring circulation valve sheet 3220 away from the valve seat 3120. For example, here, limiting the positions of the upper restoring circulation valve sheet and the lower restoring circulation valve sheet in the axial direction of the columnar structure 3300 may be only limiting the positions of partial regions of the upper restoring circulation valve sheet and the lower restoring circulation valve sheet without limiting the partial regions of the valve sheets from deformation and displacement. For example, the valve sheet may be warped under the action of the fluid pressure such that the corresponding circulation path is opened or closed.

In some examples, the restoring valve further includes a conical spring 3400. The conical spring 3400 is located between the first limiting part 3310 and the upper restoring circulation valve sheet 3210. The conical spring 3400 includes a first end comprising a small diameter (e.g., the upper end in Fig. 20) and a second end comprising a large diameter (e.g., the lower end in Fig. 20). The first end is abutted against the first limiting part 3310, and the second end is abutted against the upper restoring circulation valve sheet 3210. It needs to be noted that here, the first end being abutted against the first limiting part 3310 is not limited to direct contact with the first limiting part, and other intermediate component may also be present between the first end and the first limiting part 3310. The embodiments of the present disclosure have no specific limitation on this. This is similar for the case of the second limiting part 3320. The second limiting part 3320 axially limits the position of the lower restoring circulation valve sheet. It is also not limited to the lower restoring circulation valve seat 220 being in direct contact with the second limiting part 3320, and other intermediate component may be present between the lower restoring circulation valve sheet 3220 and the second limiting part 3320.

Fig. 24 is a cross-sectional structural schematic diagram of the conical spring 3400. As illustrated by Fig. 24, diameters of circles of the conical spring 3400 increase sequentially from top to bottom. The upper end comprising a small diameter is abutted against the first limiting part, and the lower end comprising a large diameter is abutted against the upper restoring circulation valve sheet.

For example, the second end of the conical spring 3400 at least partially overlaps with the first circulation hole 3121 in the axis direction of the tubular portion 3110. For example, the second end of the conical spring 3400 is disposed on a part of the upper restoring circulation valve sheet 3210 located right above the first circulation hole 3121 so that the damping characteristics can be better adjusted.

In some examples, as illustrated by Fig. 21, the upper restoring circulation valve sheet 3210 includes a penetration hole 32103 in the middle. For example, the penetration hole 32103 allows the columnar structure 3300 to pass therethrough. The hollowed-out part 32101 of the upper restoring circulation valve sheet includes a plurality of hollowed-out sub-parts that are uniformly arranged at a peripheral of the penetration hole 32103. In the embodiment shown in Fig. 21, the hollowed-out part 32101 includes five hollowed-out sub-parts that are uniformly arranged at the peripheral of the penetration hole 32103. However, the embodiments of the present disclosure are not limited thereto. The number of hollowed-out sub-parts may be five or more. Moreover, in the embodiment shown in Fig. 21, the hollowed-out sub-part and the penetration hole 32103 are communicated with each other. However, the embodiments of the present disclosure are not limited thereto. The hollowed-out part 32101 and the penetration hole 32103 may also be spaced apart from each other. For example, five hollowed-out sub-parts of the hollowed-out part 32101 correspond to five second circulation holes 3122 in the valve disc, respectively, so that the fluid can flow from each hollowed-out sub-part into the corresponding second circulation hole 3122. In addition, the penetration hole 32103 in the middle of the upper restoring circulation valve sheet 3210 may correspond to the circular through hole in the valve disc 120, and both are configured for the columnar structure 3300 to pass therethrough.

It needs to be noted that the number of hollowed-out sub-parts in the above embodiment is the same as the number of second circulation holes. However, the embodiments of the present disclosure are not limited thereto, and the number of hollowed-out sub-parts in the above embodiment may also be different from the number of second circulation holes. For example, two hollowed-out sub-parts may correspond to one second circulation hole or other any suitable correspondence may be possible as long as the fluid can flow to the second circulation hole through the hollowed-out part.

In the case of the penetration hole 32103 and the hollowed-out part 32101 being communicated with each other, there is no obvious boundary between the penetration hole 32103 and the hollowed-out part 32101. However, the boundary between the penetration hole 32103 and the hollowed-out part 32101 may pass through endpoints of a part of the valve sheet located between adjacent hollowed-out sub-parts and extending inwards. For example, a part defined by a circle passing through these endpoints is the penetration hole 32103. Therefore, these endpoints may also be referred to as an inner edge of the upper restoring circulation valve sheet. As illustrated by Fig. 20. the inner edge of the upper restoring circulation valve sheet 3210 is at least partly in contact with the columnar structure 3300. Due to the above-mentioned contact relationship, the position of the upper restoring circulation valve sheet 3210 in the radial direction is limited by the columnar structure 3300. That is, the columnar structure limits the position of the upper restoring circulation valve sheet in a direction perpendicular to the axis direction of the columnar structure.

In some examples, as illustrated by Fig. 20, the lower restoring circulation valve sheet 3220 includes a plurality of sub-sheet structures stacked between the valve seat 3120 and the second limiting part 3320. Diameters of the plurality of sub-sheet structures decrease gradually in a direction from the valve seat 3120 to the second limiting part 3320. For example, each sub-sheet structure is made of an elastic plate-like material, and the lower restoring circulation valve sheet 3220 forms a plate-like spring structure as a whole. When the fluid from the inside of the restoring valve flows to the position of the lower restoring circulation valve sheet 3220 through the first circulation channel 31000 and the second circulation channel 32000, the lower restoring circulation valve sheet 3220 will be pressed open under the action of the fluid pressure such that the fluid flows out of the restoring valve through the lower opening of the second circulation hole 3122.

In addition, the middle of the lower restoring circulation valve sheet 3220 also includes a penetration hole for the columnar structure to pass therethrough, and the inner edge of the lower restoring circulation valve sheet 3220 may also be in contact with the columnar structure such that the columnar structure limits the position of the upper restoring circulation valve sheet in the direction perpendicular to the axis direction of the columnar structure.

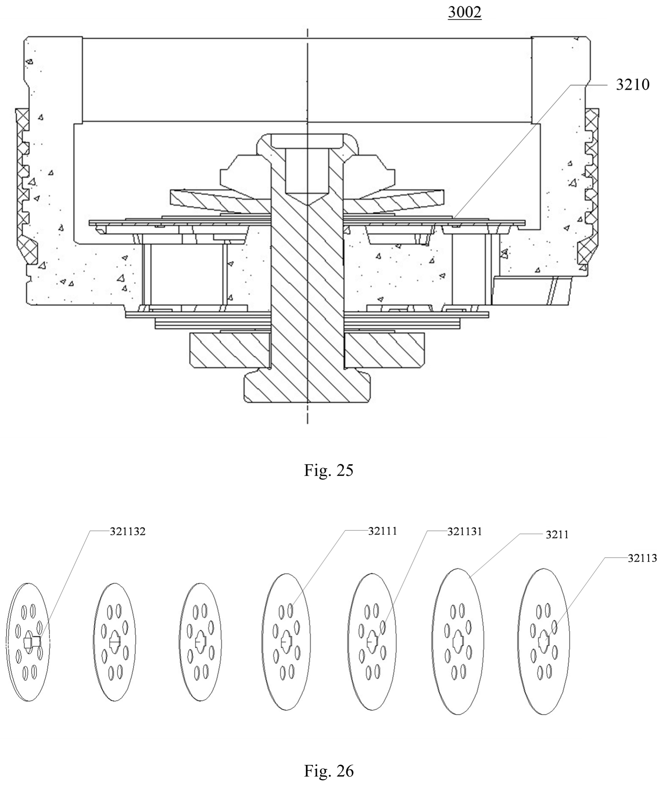

Fig. 25 is a cross-sectional structural schematic diagram of a restoring valve 3002 according to another embodiment of the present disclosure. Fig. 25 differs from the restoring valve 3001 shown in Fig. 20 mainly in the structure of the upper restoring circulation valve sheet 3210. As illustrated by Fig. 25, the upper restoring circulation valve sheet 3210 also includes a plurality of sub-sheet structures stacked in the axis direction of the tubular portion. Diameters of the plurality of sub-sheet structures decrease sequentially in a direction from a side close to the valve seat 3120 to a side away from the valve seat 3120. That is to say, in this embodiment, the upper restoring circulation valve sheet 3210 is also implemented by the plate-like spring structure. Thus, the conical spring structure in the embodiment shown in Fig. 20 may not be used. For other structures and technical effects in the embodiment shown in Fig. 25, reference may be made to the embodiment shown in Fig. 20, which will not be described here redundantly.

Fig. 26 is an exploded schematic diagram of an upper restoring circulation valve sheet of the restoring valve in the embodiment shown in Fig. 25. As illustrated by Fig. 26, the upper restoring circulation valve sheet includes a plurality of sub-sheet structures 3211. The direction from left to right in Fig. 26 is consistent with the direction from top to bottom in Fig. 25. That is to say, after the sub-sheet structures are stacked, the sub-sheet structure closer to the right side in Fig. 26 is closer to the valve seat of the restoring valve. For example, each sub-sheet structure includes a through hole 32113 in a central position. After the plurality of sub-sheet structures are stacked, the through holes 32113 thereof are communicated into the penetration hole of the upper restoring circulation valve sheet. Each sub-sheet structure includes a plurality of through holes 32111 located at the periphery of the through hole 32113. After the plurality of sub-sheet structures are stacked, the through holes 32111 thereof are communicated into the hollowed-out sub-parts of the upper restoring circulation valve sheet. Apart from the leftmost sub-sheet structure, the through hole 32113 of each sub-sheet structure 3211 is provided with a positioning groove 321131. A positioning protrusion 321132 protruding towards a right sub-sheet structure 3211 is disposed at the periphery of the through hole of the leftmost sub-sheet structure 3211. After the plurality of sub-sheet structures are stacked together, the positioning protrusion 321132 is inserted into the positioning groove 321131 in the right sub-sheet structure 3211 so that the plurality of sub-sheet structures can be positioned with one another in the circumferential direction. In the example shown in Fig. 26, each sub-sheet structure 3211 is provided with two positioning protrusions 321132 or two positioning grooves 321131. However, the embodiments of the present disclosure are not limited thereto, and one positioning protrusion and one positioning groove may be provided, or three or more positioning protrusions and three or more positioning grooves may be provided. Moreover, the number of sub-sheet structures 3211 in Fig. 26 is also illustrative, and a suitable number of sub-sheet structures may be provided according to an actual situation.

It needs to be noted that in both cases of the upper restoring circulation valve sheet and the lower restoring circulation valve sheet include a plurality of sub-sheet structures, the diameters of the plurality of sub-sheet structures in a specific direction decreasing gradually is not limited to every two adjacent sub-sheet structures being different, and adjacent sub-sheet structures may have the same diameter.

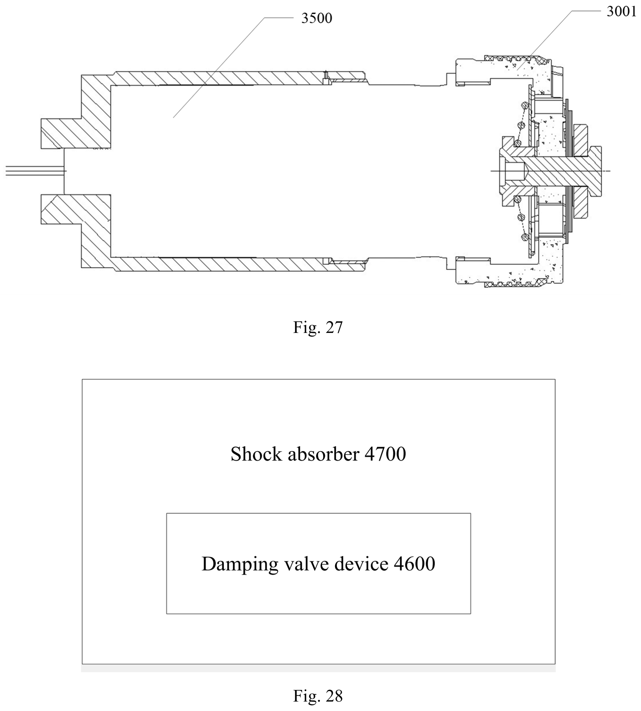

Fig. 27 is a cross-sectional structural schematic diagram of a damping valve device according to an embodiment of the present disclosure. As illustrated by Fig. 27, the damping valve device includes the restoring valve 3001 as illustrated by Fig. 20. In addition, the damping valve device further includes an adjustable damper valve structure 3500 that is connected to an end of the tubular portion 3110 of the restoring valve 3001 opposite to the valve seat 3120. The adjustable damper valve structure 3500 may include structures such as a coil holder, a solenoid coil, an iron core and rod assembly, a conical valve core assembly, and an electromagnetic valve sleeve. Because the damping valve device according to the embodiments of the present disclosure has no specific limitation on the adjustable damper valve structure, any suitable component may be selected or added or deleted. Therefore, the cross-sectional structural schematic diagram shown in Fig. 27 schematically illustrates only the general outline structure of the adjustable damper valve structure 3500. For example, one end of the adjustable damper valve structure 3500 is inserted into the tubular portion, and the inserted part includes an external thread, while the tubular portion includes an internal thread therein. The adjustable damper valve structure 3500 and the restoring valve 3001 may be connected through screw thread fit. Because the damping valve device according to the embodiments of the present disclosure includes a restoring valve 3001 of the above embodiments, the technical effects that the restoring valve 3001 can produce may also be reflected in the damping valve device and will not be described redundantly here.

While Fig. 27 illustrates the damping valve device according to the embodiments of the present disclosure uses the structure of the restoring valve 3001, the structure of the restoring valve 3002 in the above embodiments or the restoring valve structure described in any above embodiment may also be used.

In some examples, as illustrated by Fig. 27, the adjustable damper valve structure 3500 may use the corresponding structure in any damping valve device or a corresponding structure in the shock absorber described above, which will not be described redundantly one by one here.

The restoring valve in the present disclosure may be used in any damping valve device or shock absorber described above, which will not be described redundantly one by one here.

At least one embodiment of the present disclosure further provides a shock absorber. Fig. 28 is a schematic diagram of a shock absorber provided by an embodiment of the present disclosure. As illustrated by Fig. 28, the shock absorber 3700 includes the damping valve device 3600 described above. Thus, the shock absorber includes the damping valve device described above. Therefore, the technical effects of the damping valve device may also be reflected on the shock absorber, which will not be described redundantly here.

Embodiments of the present disclosure provide a restoring valve, a damping valve device, and a shock absorber. The restoring valve includes a sleeve part, an upper restoring circulation valve sheet, and a lower restoring circulation valve sheet. The sleeve part includes a tubular portion and a valve seat connected to an opening at one end of the tubular portion. The valve seat includes a first circulation hole and a second circulation hole that penetrate through the valve seat. In an extension direction of the first circulation hole and the second circulation hole, the upper restoring circulation valve sheet is located at a side of the valve seat and located within the tubular portion, and configured to cover the first circulation hole. The lower restoring circulation valve sheet is located at a side of the valve seat opposite to the upper restoring circulation valve sheet and configured to cover the second circulation hole. The upper restoring circulation valve sheet includes a hollowed-out part and exposes the second circulation hole through the hollowed-out part to form a first circulation channel from an inside of the restoring valve to an outside of the restoring valve. The upper restoring circulation valve sheet includes a first positioning groove. The restoring valve further includes a positioning structure which is disposed within the first positioning groove such that the upper restoring circulation valve sheet is positioned circumferentially relative to the valve seat.

In the restoring valve provided in the embodiments of the present disclosure, the hollowed-out part of the upper restoring circulation valve sheet exposes the second circulation hole to form the first circulation channel from the inside of the restoring valve to the outside of the restoring valve. The positioning structure is fit with the first positioning groove of the upper restoring circulation valve sheet such that the upper restoring circulation valve sheet is positioned along the circumferential direction of the upper restoring circulation valve sheet relative to the valve seat. The upper restoring circulation valve sheet may not rotate along the circumferential direction of the upper restoring circulation valve sheet relative to the valve seat, and the first circulation channel formed by the hollowed-out part of the upper restoring circulation valve sheet and the second circulation hole may not change due to the circumferential rotation between the upper restoring circulation valve sheet and the valve seat. Thus, it can be guaranteed that the first circulation channel may not change, guaranteeing the stability of the performance of the restoring valve.

In the restoring valve provided in the embodiments of the present disclosure, the first positioning groove of the upper restoring circulation valve sheet is fit with the positioning structure, which may further facilitate the mounting of the upper restoring circulation valve sheet. When the upper restoring circulation valve sheet is mounted, the hollowed-out part of the upper restoring circulation valve sheet is aligned with the second circulation hole to expose the second circulation hole such that when the upper restoring circulation valve sheet is mounted, the upper restoring circulation valve sheet needs to be positioned. When the upper restoring circulation valve sheet is mounted, the first positioning groove of the upper restoring circulation valve sheet is fit with the positioning structure so that the upper restoring circulation valve sheet can be positioned. Thus, it can be guaranteed that the upper restoring circulation valve sheet is mounted in place. Not only is the mounting efficiency of the upper restoring circulation valve sheet improved with saved mounting time of the upper restoring circulation valve sheet, but also the mounting consistency of the upper restoring circulation valve sheet is guaranteed. As a result, the problem of inconsistency may not arise from the assembly problem of the first circulation channel, and the stability of the performance of the restoring valve is guaranteed.

Hereinafter, the restoring valve, the damping valve device, and the shock absorber provided by the embodiments of the present disclosure are described in detail with reference to the accompanying drawings.

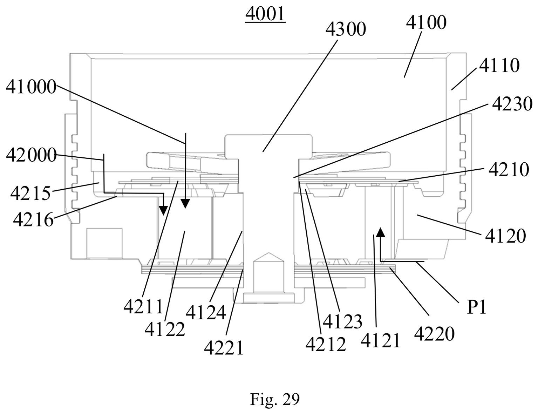

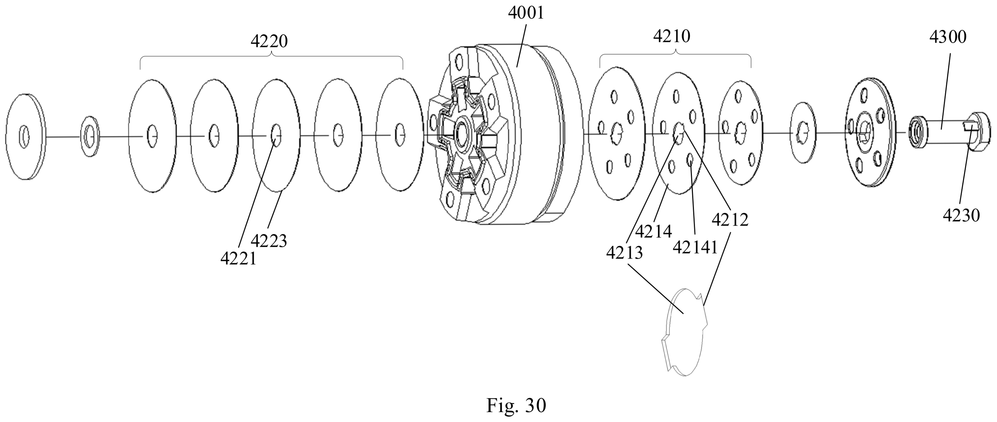

Embodiments of the present disclosure provide a restoring valve, a damping valve device, and a shock absorber. Fig. 29 is a cross-sectional structural schematic diagram of a restoring valve provided by an embodiment of the present disclosure; and Fig. 30 is an exploded schematic diagram of the restoring valve shown in Fig. 29. As illustrated by Fig. 29 and Fig. 30, the restoring valve 4001 includes a sleeve part 4100, an upper restoring circulation valve sheet 4210. and a lower restoring circulation valve sheet 4220. The sleeve part 4100 includes a tubular portion 4110 and a valve seat 4120 connected to an opening at one end of the tubular portion 4110. The valve seat 4120 includes a first circulation hole 4121 and a second circulation hole 4122 that penetrate through the valve seat 4120. For example, the first circulation hole 4121 is at least a part of a circulation channel for a fluid to flow from the outside of the restoring valve 4001 to the inside of the restoring valve 4001. The second circulation hole 4122 is at least a part of a circulation channel for the fluid to flow from the inside of the restoring valve 4001 to the outside of the restoring valve 4001. For example, a part surrounded by the tubular portion 4110 may be referred to as the inside of the restoring valve 4001, and a side of the valve seat 4120 opposite to the tubular portion 4110 may be referred to as the outside of the restoring valve 4001.

In an extension direction of the first circulation hole 4121 and the second circulation hole 4122, the upper restoring circulation valve sheet 4210 is located at a side of the valve seat 4120 and located within the tubular portion 4110, and configured to cover the first circulation hole 4121. The lower restoring circulation valve sheet 4220 is located at a side of the valve seat 4120 opposite to the upper restoring circulation valve sheet 4210 and configured to cover the second circulation hole 4122.

For example, as illustrated by Fig. 29, the extension direction of the first circulation hole 4121 and the second circulation hole 4122 is the up-and-down direction in the figure, which is roughly parallel to the axis direction of the tubular portion 4110. However, the not embodiments of the according present disclosure are not limited thereto.

For example, as illustrated by Fig. 29, the upper restoring circulation valve sheet 4210 is disposed on an upper side of the valve seat 4120, and the lower restoring circulation valve sheet 4220 is disposed on a lower side of the valve seat 4120, and both are disposed on two sides of the valve seat 4120 opposite to each other, respectively. The upper restoring circulation valve sheet 4210 and the lower restoring circulation valve sheet 4220 are valve sheets for use on the circulation channel from outside to inside and the circulation channel from inside to outside, respectively. It needs to be noted that the upper restoring circulation valve sheet 4210 covering the first circulation hole 4121 and the lower restoring circulation valve sheet 4220 covering the second circulation hole 4122 refer to including a state in which corresponding valve sheets cover the openings of the corresponding circulation holes, and in the working process of the restoring valve 4001, the openings may be opened due to the fluid circulation such that the corresponding circulation paths are opened. For example, the upper restoring circulation valve sheet 4210 covers an upper opening of the first circulation hole 4121, preventing the fluid from flowing from the upper side of the valve seat 4120 into the first circulation hole 4121. However, when the fluid flows from the lower side of the valve seat 4120 through the first circulation hole 4121 to the upper restoring circulation valve sheet 4210, as shown by the channel P1 in the figure, the upper restoring circulation valve sheet 4210 may be pressed open by a pressure such that the fluid flows into the restoring valve 4001. Similarly, the lower restoring circulation valve sheet 4220 covers a lower opening of the second circulation hole 4122, preventing the fluid from flowing from the lower side of the valve seat 4120 into the second circulation hole 4122. However, when the fluid flows from the upper side of the valve seat 4120 through the second circulation hole 4122 to the lower restoring circulation valve sheet 4220, the lower restoring circulation valve sheet 4220 may be pressed open by a pressure such that the fluid flows out of the restoring valve 4001.

The upper restoring circulation valve sheet 4210 includes a hollowed-out part 4211. When the upper restoring circulation valve sheet 4210 covers the valve seat 4120, the hollowed-out part 4211 may expose the second circulation hole 4122 to form a first circulation channel 41000 from the inside of the restoring valve 4001 to the outside of the restoring valve 4001.

Fig. 30 schematically illustrates that the upper restoring circulation valve sheet 4210 includes 3 first sub-sheet structures 4214 stacked in the extension direction of the first circulation hole 4121 and the second circulation hole 4122. Each first sub-sheet structure 4214 includes a plurality of hollowed-out sub-parts 42141. The hollowed-out part 4211 of the upper restoring circulation valve sheet 4210 includes the hollowed-out sub-parts 42141 on the first sub-sheet structures 4214. The hollowed-out sub-part 42141 is disposed corresponding to the second circulation hole 4122 to expose the second circulation hole 4122. However, the embodiments of the present disclosure have no limitation on the structure of the upper restoring circulation valve sheet 4210. For example, the upper restoring circulation valve sheet 4210 may have only 1 first sub-sheet structure 4214 or other numbers of first sub-sheet structures 4214. The embodiments of the present disclosure also have no limitations on the number and shape of hollowed-out sub-parts 42141, and the like.

For example, as illustrated by Fig. 29 and Fig. 30. in the internal space defined by the tubular portion 4110, the fluid flows into the second circulation hole 4122 through the hollowed-out part 4211 of the upper restoring circulation valve sheet 4210. At a lower end of the second circulation hole 4122, the lower restoring circulation valve sheet 4220 covering a lower opening of the second circulation hole 4122 is pressed open under the action of the pressure of the fluid such that the fluid flows from the inside to the outside of the restoring valve 4001. For example, the first circulation channel 41000 is a first circulation path from inside to outside.

For example, the lower restoring circulation valve sheet 4220 may be warped under the action of the fluid pressure such that the corresponding circulation path is opened or closed. For example, the lower restoring circulation valve sheet 4220 is made of an elastic plate-like material. The lower restoring circulation valve sheet 4220 is of a plate-like spring structure. For example, the lower restoring circulation valve sheet 4220 may move along the central axis of the lower restoring circulation valve sheet 4220 under the action of the fluid pressure such that the corresponding circulation path is opened or closed. For example, a spring may be disposed on a side of the lower restoring circulation valve sheet 4220 away from the valve seat 4120. The fluid pressure may cause the lower restoring circulation valve sheet 4220 to move along the central axis of the lower restoring circulation valve sheet 4220 after overcoming the elastic force of the spring. The embodiments of the present disclosure have no limitations on the material and structure of the lower restoring circulation valve sheet 4220, and the opening manner under the action of the fluid pressure.

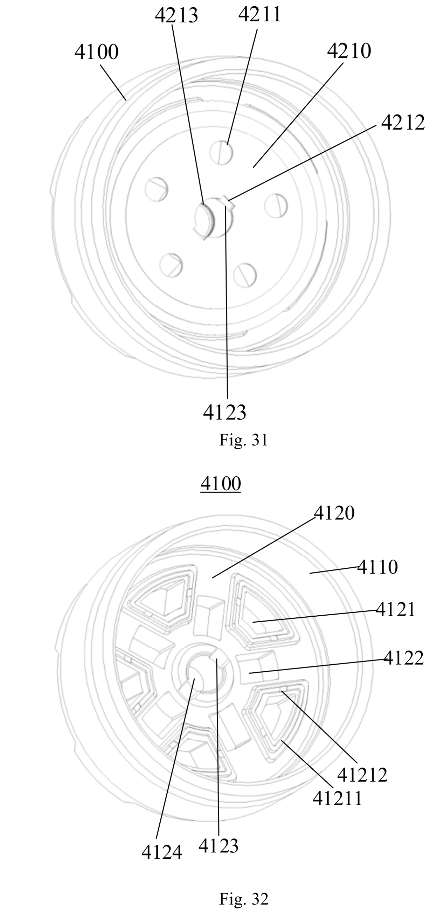

Fig. 31 is a structural schematic diagram of a sleeve part and an upper restoring circulation valve sheet shown in Fig. 29; and Fig. 32 is a structural schematic diagram of the sleeve part shown in Fig. 29. As illustrated by Fig. 29 to Fig. 32, the upper restoring circulation valve sheet 4210 includes a first positioning groove 4212. The restoring valve 4001 further includes a positioning structure 4230. At least part of the positioning structure 4230 is located within the first positioning groove 4212 such that the upper restoring circulation valve sheet 4210 is positioned along a circumferential direction of the upper restoring circulation valve sheet 4210 relative to the valve seat 4120. Fig. 30 is a partial enlarged view of a first penetration hole 4213 and the first positioning groove 4212. For example, the above-mentioned circumferential positioning refers to the rotation action of the upper restoring circulation valve sheet in the circumferential direction relative to the valve seat being limited. That is, after being positioned circumferentially, the upper restoring circulation valve sheet substantially cannot rotate along the circumferential direction relative to the valve seat.

In the restoring valve 4001 provided in the embodiments of the present disclosure, the hollowed-out part 4211 of the upper restoring circulation valve sheet 4210 exposes the second circulation hole 4122 to form the first circulation channel 41000 from the inside of the restoring valve 4001 to the outside of the restoring valve 4001. The positioning structure 4230 is fit with the first positioning groove 4212 of the upper restoring circulation valve sheet 4210 such that the upper restoring circulation valve sheet 4210 is positioned along the circumferential direction of the upper restoring circulation valve sheet 4210 relative to the valve seat 4120. The upper restoring circulation valve sheet 4210 may not rotate along the circumferential direction of the upper restoring circulation valve sheet 4210 relative to the valve seat 4120, and the first circulation channel 41000 formed by the hollowed-out part 4211 of the upper restoring circulation valve sheet 4210 and the second circulation hole 4122 may not change due to the circumferential rotation between the upper restoring circulation valve sheet 4210 and the valve seat 4120. Thus, it can be guaranteed that the first circulation channel 41000 may not change, guaranteeing the stability of the performance of the restoring valve 4001.

In the restoring valve 4001 provided in the embodiments of the present disclosure, the first positioning groove 4212 of the upper restoring circulation valve sheet 4210 is fit with the positioning structure 4230, which may further facilitate the mounting of the upper restoring circulation valve sheet 4210. When the upper restoring circulation valve sheet 4210 is mounted, the hollowed-out part 4211 of the upper restoring circulation valve sheet 4210 is aligned with the second circulation hole 4122 to expose the second circulation hole 4122 such that when the upper restoring circulation valve sheet 4210 is mounted, the upper restoring circulation valve sheet 4210 needs to be positioned. When the upper restoring circulation valve sheet is mounted, the first positioning groove 4212 of the upper restoring circulation valve sheet 4210 is fit with the positioning structure 4230 so that the upper restoring circulation valve sheet 4210 can be positioned. Thus, it can be guaranteed that the upper restoring circulation valve sheet 4210 is mounted in place. Not only is the mounting efficiency of the upper restoring circulation valve sheet 4210 improved with saved mounting time of the upper restoring circulation valve sheet 4210, but also the mounting consistency of the upper restoring circulation valve sheet 4210 is guaranteed. As a result, the problem of inconsistency may not arise from the assembly problem of the first circulation channel 41000, and the stability of the performance of the restoring valve 4001 is guaranteed.

For example, as illustrated by Fig. 29 and Fig. 30. when the fluid flows from the lower side of the valve seat 4120 through the first circulation hole 4121 to the upper restoring circulation valve sheet 4210, as shown by the channel P1 in the figure, the upper restoring circulation valve sheet 4210 may be pressed open by a pressure such that the fluid flows into the restoring valve 4001. The upper restoring circulation valve sheet 4210 may be warped under the action of the fluid pressure such that the corresponding circulation path is opened or closed. For example, the upper restoring circulation valve sheet 4210 is made of an elastic plate-like material. The upper restoring circulation valve sheet 4210 is of a plate-like spring structure. For example, the upper restoring circulation valve sheet 4210 may further move along the central axis of the upper restoring circulation valve sheet 4210 under the action of the fluid pressure such that the corresponding circulation path is opened or closed. For example, a spring may be disposed on a side of the upper restoring circulation valve sheet 4210 away from the valve seat 4120. The fluid pressure may cause the upper restoring circulation valve sheet 4210 to move along the central axis of the upper restoring circulation valve sheet 4210 after overcoming the elastic force of the spring. At this point, the positioning structure is only configured to limit the circumferential rotation between the upper restoring circulation valve sheet and the valve seat, and may not limit the motion along the central axis between the upper restoring circulation valve sheet and the valve seat. The embodiments of the present disclosure have no limitations on the material and structure of the upper restoring circulation valve sheet 4210, and the opening manner under the action of the fluid pressure.

In some examples, as illustrated by Fig. 29 to Fig. 32, the valve seat 4120 includes a second positioning groove 4123 disposed corresponding to the first positioning groove 4212. At least part of the positioning structure 4230 is located within the first positioning groove 4212 and within the second positioning groove 4123 such that the upper restoring circulation valve sheet 4210 is positioned circumferentially relative to the valve seat 4120. At least part of the positioning structure 4230 is located within the first positioning groove 4212 and within the second positioning groove 4123 so that the upper restoring circulation valve sheet 4210 can be positioned circumferentially more simply and accurately.

In some examples, as illustrated by Fig. 29 to Fig. 32, the upper restoring circulation valve sheet 4210 includes a first penetration hole 4213 in a middle. The valve seat 4120 includes a second penetration hole 4124 disposed corresponding to the first penetration hole 4213. The lower restoring circulation valve sheet 4220 includes a third penetration hole 4221 disposed corresponding to the first penetration hole 4213 and the second penetration hole 4124. The restoring valve 4001 further includes a columnar structure 4300 passing through the first penetration hole 4213, the second penetration hole 4124, and the third penetration hole 4221. The first positioning groove 4212 is located in a sidewall of the first penetration hole 4213. The second positioning groove 4123 is located in a sidewall of the second penetration hole 4124. On the one hand, the first positioning groove 4212 is roughly located in the middle of the upper restoring circulation valve sheet 4210 and the second positioning groove 4123 is roughly located in the middle of the valve seat 4120 such that the circumferentially positioning of the upper restoring circulation valve sheet 4210 is more stable. On the other hand, the first positioning groove 4212 is located in the sidewall of the first penetration hole 4213 and the second positioning groove 4123 is located in the sidewall of the second penetration hole 4124. Due to the presence of the penetration holes, there is larger operation space in the positioning and mounting process of the upper restoring circulation valve sheet 4210, facilitating positioning and mounting.

For example, as illustrated by Fig. 30, when the upper restoring circulation valve sheet 4210 includes a plurality of first sub-sheet structures 4214. the first penetration hole 4213 may be a central hole in the plurality of first sub-sheet structures 4214. Only one first sub-sheet structure 4214 is schematically marked in Fig. 30.

For example, as illustrated by Fig. 30, the lower restoring circulation valve sheet 4220 includes a plurality of second sub-sheet structures 4223 stacked in the extension direction of the first circulation hole 4121 and the second circulation hole 4122. The third penetration hole 4221 of the lower restoring circulation valve sheet 4220 may be a central hole in the plurality of first sub-sheet structures 4214. Fig. 30 schematically shows the lower restoring circulation valve sheet 4220 including 5 second sub-sheet structures 4223, and only one second sub-sheet structure 4223 is schematically marked. The embodiments of the present disclosure have no limitation on the structure of the lower restoring circulation valve sheet 4220. For example, the lower restoring circulation valve sheet 4220 may have only 1 second sub-sheet structure 4223 or other numbers of second sub-sheet structures 4223.

In some examples, as illustrated by Fig. 29 and Fig. 30, the positioning structure 4230 and the columnar structure 4300 are integrally formed. Thus. not only can the design and fabrication of the positioning structure 4230 be simpler, but also no separate positioning structure 4230 is needed, and there is no need to separately mount the positioning structure 4230. The cost of components is saved and the mounting process is simplified.

For example, the positioning structure 4230 may also be a component disposed or mounted on the columnar structure 4300. For example, the columnar structure 4300 has an aperture, and the positioning structure 4230 is partly inserted in the aperture and partly located within the first positioning groove 4212.

For example, Fig. 32 schematically shows the sleeve part 4100 including 5 first circulation holes 4121 and 5 second circulation holes 4122 that are arranged alternately along the circumferential direction. The embodiments of the present disclosure have no limitations on the number, arrangement manner, opening shape, and the like of the first circulation holes 4121 and the second circulation holes 4122.

In some examples, as illustrated by Fig. 32, an opening of the first circulation hole 4121 close to the upper restoring circulation valve sheet 4210 includes a first flange 41211 that protrudes from the valve seat 4120 towards the upper restoring circulation valve sheet 4210 and supports the upper restoring circulation valve sheet 4210. That is to say, when the upper restoring circulation valve sheet 4210 covers the first circulation hole 4121, the upper restoring circulation valve sheet 4210 can be abutted against the first flange 41211.

A first intercepting groove 41212 recessed towards the valve seat 4120 is formed in a sidewall of the first flange 41211 close to the upper restoring circulation valve sheet 4210. The first intercepting groove 41212 is communicated with the first circulation hole 4121 to form a first intercepting channel. For example, the first intercepting groove 41212 penetrates through the first flange 41211 along the radial direction of the first circulation hole 4121.

In this example, when the pressure of the fluid entering into the restoring valve 4001 from the outside of the restoring valve 4001 through the channel P1 is low, the low pressure cannot press open the upper restoring circulation valve sheet 4210 covering the first flange 41211. In this case, the fluid cannot circulate, and it is possible for the damping valve device where the restoring valve 4001 is located to fail. With the first intercepting groove 41212 communicated with the first circulation hole 4121 in the first flange 41211, when the pressure of the fluid is low, the fluid may also flow into the restoring valve 4001 via the first circulation hole 4121 and the first intercepting groove 41212. Thus, the fluid can circulate. It is guaranteed that the damping valve device can also realize the circulation of the fluid when the pressure of the fluid is low.

Fig. 32 schematically shows one first flange 41211 including two first intercepting grooves 41212. However, the embodiments of the present disclosure have no limitation on the number of first intercepting grooves 41212 and also no limitation on the distribution positions of the first intercepting grooves 41212 on the first flange 41211.

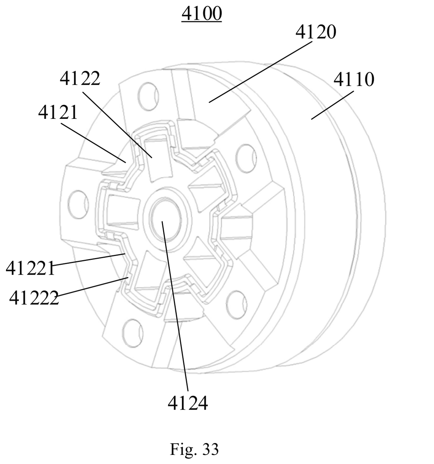

Fig. 33 is a structural schematic diagram of the sleeve part shown in Fig. 29 from another perspective. As illustrated by Fig. 33, an opening of the second circulation hole 4122 close to the lower restoring circulation valve sheet 4220 includes a second flange 41221 that protrudes from the valve seat 4120 towards the lower restoring circulation valve sheet 4220 and supports the lower restoring circulation valve sheet 4220. A third intercepting groove 41222 recessed towards the valve seat 4120 is formed in a sidewall of the second flange 41221 close to the lower restoring circulation valve sheet 4220. The third intercepting groove 41222 is communicated with the second circulation hole 4122 to form a third intercepting channel. For example, the third intercepting groove 41222 penetrates through the second flange 41221 along a radial direction of the second circulation hole 4122.

In this example, when the pressure of the fluid entering the outside of the restoring valve 4001 from the inside of the restoring valve 4001 through the first circulation channel 410000 is low, the low pressure cannot press open the lower restoring circulation valve sheet 4220 covering the second flange 41221. In this case, the fluid cannot circulate, and it is possible for the damping valve device where the restoring valve 4001 is located to fail. With the third intercepting groove 41222 communicated with the second circulation hole 4122 in the second flange 41221, when the pressure of the fluid is low, the fluid can also flow to the outside of the restoring valve 4001 via the second circulation hole 4122 and the third intercepting groove 41222. Thus, the fluid can circulate. It is guaranteed that the damping valve device can also realize the circulation of the fluid when the pressure of the fluid is low.

Fig. 33 schematically shows one second flange 41221 surrounding a plurality of second circulation holes 4122 to facilitate structural arrangement and fabrication. The embodiments of the present disclosure have no limitation on this. For example, a separate second flange 41221 can be disposed at an opening of each second circulation hole 4122 close to the lower restoring circulation valve sheet 4220, which will not be described redundantly here. The embodiments of the present disclosure have no limitation on the number of third intercepting grooves 41222 and also no limitation on the distribution positions of the third intercepting grooves 41222 on the second flange 41221.

In some examples, as illustrated by Fig. 29, a gap 4215 is formed between an edge of the upper restoring circulation valve sheet 4210 and an inner wall of tubular portion 4110. A peripheral edge of the upper restoring circulation valve sheet 4210 does not extend to the inner wall of the tubular portion 4110, and instead, a gap 4215 is reserved between the peripheral edge and the inner wall of the tubular portion 4110. Moreover, this gap 4215 can be further communicated with the second circulation hole 4122 through an interval 4216 between the upper restoring circulation valve sheet 4210 and the valve seat 4120 to from a second circulation channel 42000 from the inside of the restoring valve 4001 to the outside of the restoring valve 4001. With the addition of the second circulation channel 42000, the circulation channel from inside to outside can be added so that the damping characteristics of the fluid from the inside to the outside of the restoring valve 4001 can be changed according to an actual requirement of a product. Moreover, the effective second circulation channel can be achieved only by providing a small gap 4215 between the upper restoring circulation valve sheet 4210 and the inner wall of the tubular portion 4110, which do not have much influence on the design of the upper restoring circulation valve sheet 4210 and other components of the restoring valve 4001.

For example, as illustrated by Fig. 29 and Fig. 32. the interval 4216 between the upper restoring circulation valve sheet 4210 and the valve seat 4120 can be formed by means of the first flange 41211.

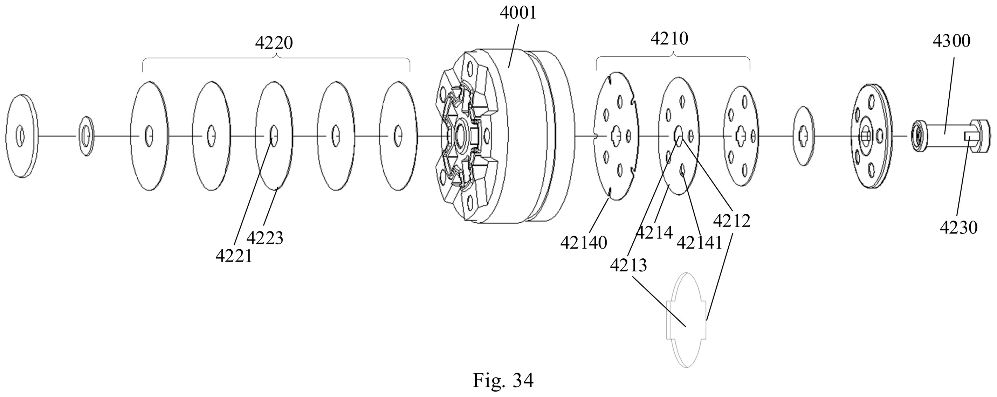

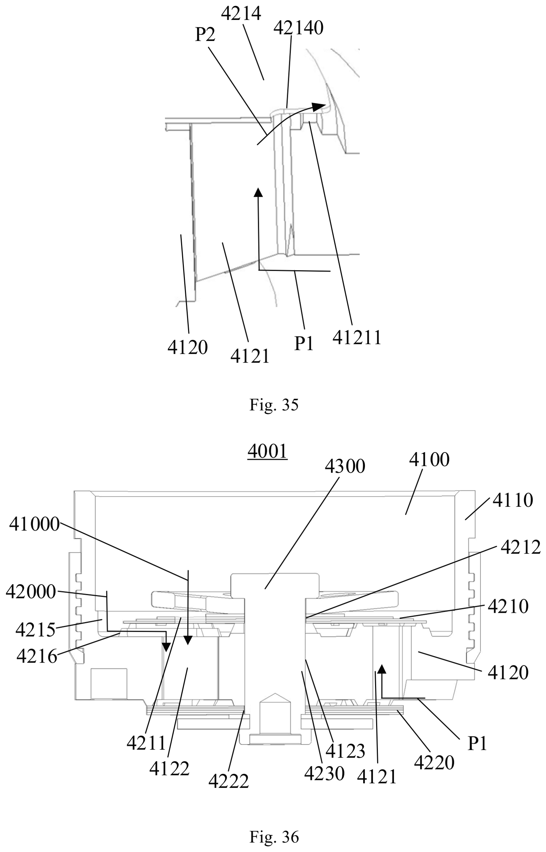

Fig. 34 is an exploded schematic diagram of another restoring valve provided by an embodiment of the present disclosure; and Fig. 35 is a partial cross-sectional structural schematic diagram of the restoring valve shown in Fig. 34. As illustrated by Fig. 34 and Fig. 35, the upper restoring circulation valve sheet 4210 includes a plurality of first sub-sheet structures 4214 stacked in the extension direction of the first circulation hole 4121 and the second circulation hole 4122. A second intercepting groove 42140 is formed in a peripheral wall of a first sub-sheet structure 4214 of the plurality of first sub-sheet structures 4214 closest to the valve seat 4120. The second intercepting groove 42140 is communicated with the first circulation hole 4121 to form a second intercepting channel P2. The second intercepting groove 42140 and the second intercepting channel P2 have the same technical effects as the technical effects of the first intercepting groove 41212 and the first intercepting channel, and can realize the circulation of the fluid when the pressure of the fluid is low, which will not be described redundantly here. In order to clearly display the second intercepting groove 42140 and the second intercepting channel P2, Fig. 35 only shows the structures such as the first sub-sheet structure 4214 closest to the valve seat 4120 and the first flange 41211.

The embodiment corresponding to Fig. 34 differs from the embodiment corresponding to Fig. 29 in that the first flange 41211 in this example is not provided with the first intercepting groove 41212, and instead, the second intercepting groove 42140 is formed in the peripheral wall of the first sub-sheet structure 4214 closest to the valve seat 4120. With the second intercepting groove 42140 in the peripheral wall of the first sub-sheet structure 4214 closest to the valve seat 4120. there is no need to provide the first intercepting groove 41212 in the first flange 41211. On the one hand. the universality of the valve seat 4120 can be improved. On the other hand, the structural design and fabrication of providing the second intercepting groove 42140 in the first sub-sheet structure 4214 are simpler and more convenient with lower cost.

In this example, the positioning structure 4230 is fit with the first positioning groove 4212 so that the upper restoring circulation valve sheet 4210 can be positioned circumferentially relative to the valve seat 4120. Thus, the positions of the second intercepting groove 42140 in the upper restoring circulation valve sheet 4210 and the first circulation hole 4121 in the valve seat 4120 can be fixed relatively. As a result, the second intercepting channel P2 may not change due to the circumferential rotation of the upper restoring circulation valve sheet 4210, guaranteeing the circulation of the fluid through the second intercepting channel P2.

Fig. 34 schematically shows 5 first intercepting grooves 41212 being provided in the peripheral wall of the first sub-sheet structure 4214 closest to the valve seat 4120. However, the embodiments of the present disclosure have no limitation on the number of first intercepting grooves 41212 and also no limitation on the distribution positions of the first intercepting grooves 41212 on the peripheral wall of the first sub-sheet structure 4214.

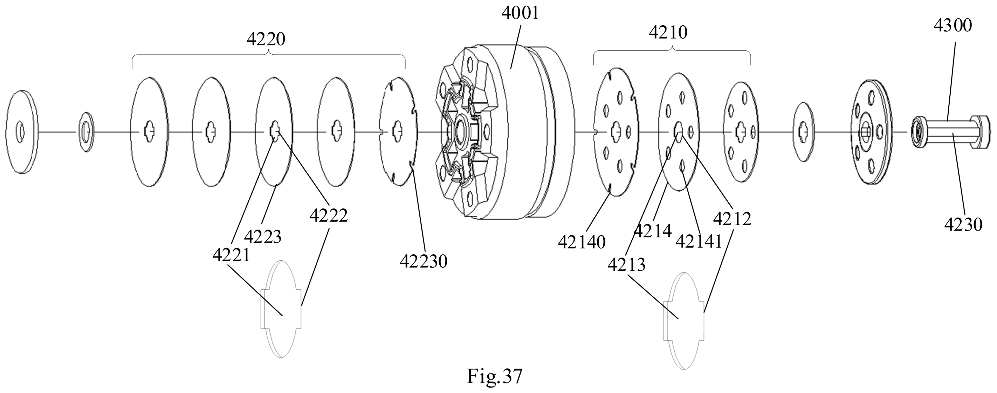

Fig. 36 is a partial cross-sectional structural schematic diagram of another restoring valve provided by an embodiment of the present disclosure; and Fig. 37 is an exploded schematic diagram of the restoring valve shown in Fig. 36. As illustrated by Fig. 36 and Fig. 37, the lower restoring circulation valve sheet 4220 further includes a third positioning groove 4222 disposed corresponding to the second positioning groove 4123. At least part of the positioning structure 4230 is further located within the third positioning groove 4222 such that the lower restoring circulation valve sheet 4220 is positioned along the circumferential direction of the lower restoring circulation valve sheet 4220 relative to the valve seat 4120.

In some examples, as illustrated by Fig. 36 and Fig. 37, the second positioning groove 4123 of the valve seat 4120 penetrates through the valve seat 4120 along the central axis of the valve seat 4120. The positioning structure 4230 and the columnar structure 4300 are integrally formed. The positioning structure 4230 extends to the third positioning groove 4222 along the second positioning groove 4123 such that at least part of the positioning structure 4230 is further located within the third positioning groove 4222, thereby circumferentially positioning the lower restoring circulation valve sheet 4220. In Fig. 37, only one first sub-sheet structure 4214 of the upper restoring circulation valve sheet 4210 is schematically marked, and only one second sub-sheet structure 4223 of the lower restoring circulation valve sheet 4220 is schematically marked.

In some examples, as illustrated by Fig. 37, the lower restoring circulation valve sheet 4220 includes a plurality of second sub-sheet structures 4223 stacked in the extension direction of the first circulation hole 4121 and the second circulation hole 4122. A fourth intercepting groove 42230 is formed in a peripheral wall of a second sub-sheet structure 4223 of the plurality of second sub-sheet structures 4223 closest to the valve seat 4120. The fourth intercepting groove 42230 is communicated with the second circulation hole 4122 to form a fourth intercepting channel. The fourth intercepting groove 42230 and the fourth intercepting channel have the same technical effects as the technical effects of the third intercepting groove 41222 and the third intercepting channel, and can realize the circulation of the fluid when the pressure of the fluid is low, which will not be described redundantly here.

In this example, the positioning structure 4230 is fit with the third positioning groove 4222 so that the lower restoring circulation valve sheet 4220 can be positioned circumferentially relative to the valve seat 4120. Thus, the positions of the fourth intercepting groove 42230 in the lower restoring circulation valve sheet 4220 and the second circulation hole 4122 in the valve seat 4120 can be fixed relatively. As a result, the fourth intercepting channel may not change due to the circumferential rotation of the lower restoring circulation valve sheet 4220, guaranteeing the circulation of the fluid through the fourth intercepting channel.

In this example, with the fourth intercepting groove 42230 in the peripheral wall of the second sub-sheet structure 4223 closest to the valve seat 4120, there is no need to provide the third intercepting groove 41222 in the second flange 41221. On the one hand, the universality of the valve seat 4120 can be improved. On the other hand, the structural design and fabrication of providing the fourth intercepting groove 42230 in the second sub-sheet structure 4223 are simpler and more convenient with lower cost.

Fig. 37 schematically shows 5 fourth intercepting grooves 42230 being provided in the peripheral wall of the second sub-sheet structure 4223 closest to the valve seat 4120. However, the embodiments of the present disclosure have no limitation on the number of fourth intercepting grooves 42230 and also no limitation on the distribution positions of the fourth intercepting grooves 42230 on the peripheral wall of the second sub-sheet structure 4223.

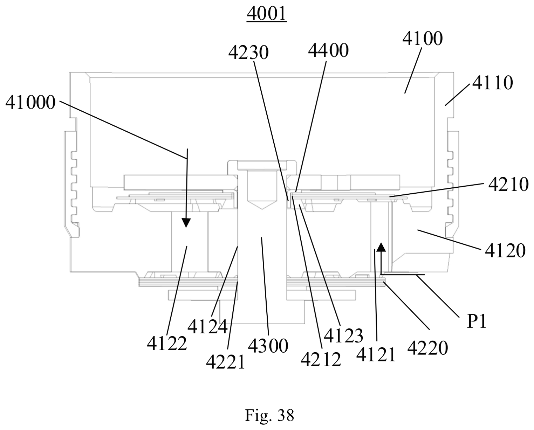

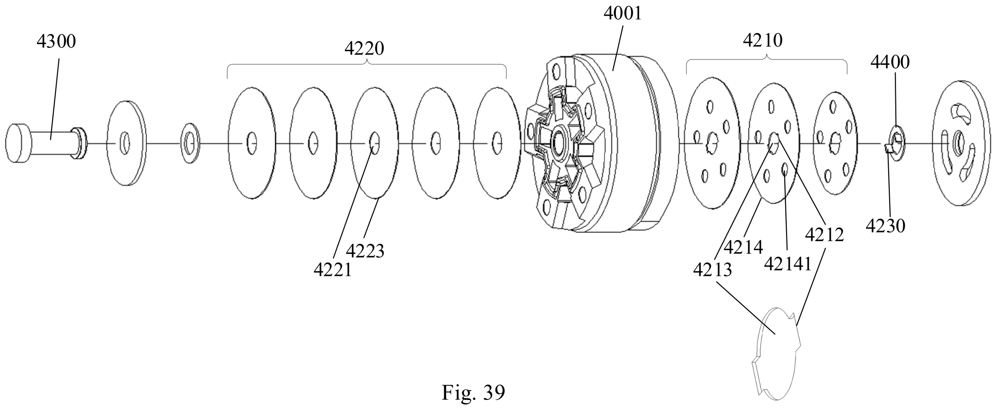

Fig. 38 is a cross-sectional structural schematic diagram of another restoring valve provided by an embodiment of the present disclosure; and Fig. 39 is an exploded schematic diagram of the restoring valve shown in Fig. 38. As illustrated by Fig. 38 and Fig. 39. the restoring valve 4001 further includes a snap ring 4400 sleeved on the columnar structure 4300 and including the positioning structure 4230. The restoring valve shown in Fig. 38 differs from the restoring valve shown in Fig. 29 in that the positioning structure 4230 of the restoring valve shown in Fig. 38 is disposed on the snap ring 4400, and there is no need to provide the positioning structure 4230 on the columnar structure 4300. Thus, the structure of the columnar structure 4300 does not need to be changed, and the circumferential positioning of the upper restoring circulation valve sheet 4210 relative to the valve seat 4120 can be realized only by additionally adding one snap ring 4400. The universality of the columnar structure 4300 to components is improved. Moreover, the structural design, fabrication and mounting of the snap ring 4400 are simple and convenient. Fig. 39 schematically shows the snap ring 4400 including two positioning structures 4230. However, the embodiments of the present disclosure have no limitations on the number and shape of positioning structures 4230 and positions of the positioning structures 4230 on the snap ring 4400.

For example, as illustrated by Fig. 38 and Fig. 39. the snap ring 4400 can be disposed at the side of the upper restoring circulation valve sheet 4210 away from the valve seat 4120. The positioning structure 4230 on the snap ring 4400 passes through the first positioning groove 4212 of the upper restoring circulation valve sheet 4210 and is located at least in part within the second positioning groove 4123 of the valve seat 4120. As a matter of course, the embodiments of the present disclosure have no limitation on this. For example, the snap ring 4400 can also be located between the upper restoring circulation valve sheet 4210 and the valve seat 4120. In this case, the positioning structure 4230 is partly located in the first positioning groove 4212 and partly located in the second positioning groove 4123. For example, the snap ring 4400 can be further located at a side of the valve seat 4120 away from the upper restoring circulation valve sheet 4210.

For example, as shown in the figure, the snap ring 4400 is closed in the circumferential direction of the snap ring 4400. As a matter of course, the embodiments of the present disclosure have no limitation on this. The snap ring 4400 can also be open and thus facilitate mounting of the snap ring 4400 onto the columnar structure 4300.

In this example, the snap ring 4400 can also be disposed next to the lower restoring circulation valve sheet 4220 to limit the circumferential rotation of the lower restoring circulation valve sheet 4220. For example, with reference to the embodiment shown in Fig. 37, an intercepting groove can be provided in the first sub-sheet structure 4214 of the lower restoring circulation valve sheet 4220 close to the valve seat 4120. For the specific structure and technical effects. reference can be made to the embodiment shown in Fig. 37, which will not be described redundantly here.

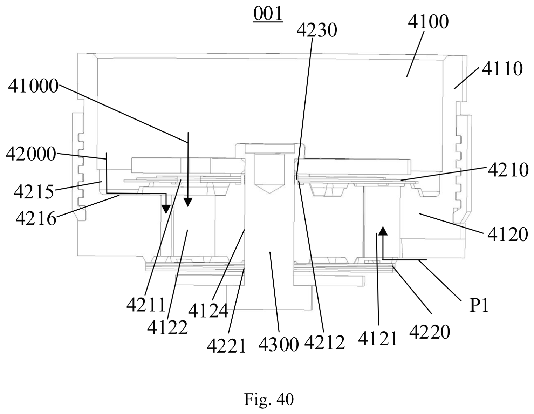

Fig. 40 is a partial cross-sectional structural schematic diagram of another restoring valve provided by an embodiment of the present disclosure. As illustrated by Fig. 40, the positioning structure 4230 and the valve seat 4120 of the restoring valve 4001 are integrally formed. The restoring valve shown in Fig. 40 differs from the restoring valve shown in Fig. 29 in that the positioning structure 4230 and the valve seat 4120 of the restoring valve shown in Fig. 40 are integrally formed, instead of providing the positioning structure 4230 on the columnar structure 4300. Other structures of the restoring valve 4001 shown in Fig. 40 are as described above, which will not be described redundantly one by one here.

For example, as illustrated by Fig. 40, the positioning structure 4230 is a protrusion structure protruding from the valve seat 4120 towards the first positioning groove 4212. Thus, not only can the design and fabrication of the positioning structure 4230 be simpler, but also no separate positioning structure 4230 is needed, and there is no need to separately mount the positioning structure 4230. The cost of components is saved and the mounting process is simplified.

For example, the positioning structure 4230 can also be a component disposed or mounted on the valve seat 4120. For example, the valve seat 4120 has an aperture, and the positioning structure 4230 is partly inserted in the aperture and partly located within the first positioning groove 4212.

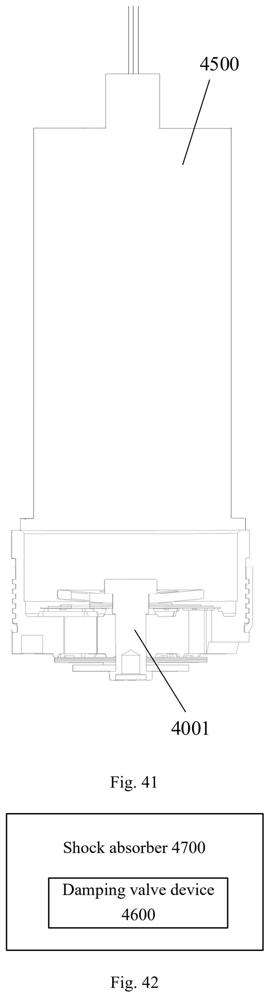

Fig. 41 is a cross-sectional structural schematic diagram of a damping valve device according to an embodiment of the present disclosure. As illustrated by Fig. 41, the damping valve device 600 includes the restoring valve 4001 as illustrated by Fig. 29. In addition, the damping valve device 4600 further includes an adjustable damper valve structure 4500 that is connected to an end of the tubular portion 4110 of the restoring valve 4001 opposite to the valve seat 4120. The adjustable damper valve structure 4500 can include structures such as a coil holder, a solenoid coil, an iron core and rod assembly, a conical valve core assembly, and an electromagnetic valve sleeve. Because the damping valve device according to the embodiments of the present disclosure has no specific limitation on the adjustable damper valve structure, any suitable component can be selected or added or deleted. Therefore. the cross-sectional structural schematic diagram shown in Fig. 41 schematically illustrates only the general outline structure of the adjustable damper valve structure 4500. For example, one end of the adjustable damper valve structure 4500 is inserted into the tubular portion, and the inserted part includes an external thread, while the tubular portion includes an internal thread therein. The adjustable damper valve structure 4500 and the restoring valve 4001 can be connected through screw thread fit. Because the damping valve device according to the embodiments of the present disclosure includes a restoring valve 4001 of the above embodiments, the technical effects that the restoring valve 4001 can produce can also be reflected in the damping valve device and will not be described redundantly here.

The restoring valve 4001 of the damping valve device 4600 shown in Fig. 41 can also be the restoring valve in any embodiment described above, which will not be described redundantly one by one here.

At least one embodiment of the present disclosure further provides a shock absorber. Fig. 42 is a schematic diagram of a shock absorber provided by an embodiment of the present disclosure. As illustrated by Fig. 42, the shock absorber 4700 includes the damping valve device 4600 described above. Thus, the shock absorber includes the damping valve device described above. Therefore, the technical effects of the damping valve device can also be reflected on the shock absorber, which will not be described redundantly here.

In some examples, as illustrated by Fig. 27, the adjustable damper valve structure 4500 can use the corresponding structure in any damping valve device or a corresponding structure in the shock absorber described above, which will not be described redundantly one by one here.

The restoring valve in the present disclosure can be used in any damping valve device or shock absorber described above, which will not be described redundantly one by one here.

The following points need to be noted:
(1) The accompanying drawings in the embodiments of the present disclosure only involve structures involved in the embodiments of the present disclosure, and other structures can be designed as usual.
(2) Features in the same embodiment and those in different embodiments of the present disclosure can be combined with one another without conflict.

The foregoing are merely descriptions of the specific embodiments of the present disclosure, and the protection scope of the present disclosure is not limited thereto. Any modification or replacement easily conceived of by those skilled in the art within the technical scope of the present disclosure shall fall within the protection scope of the present disclosure. Therefore. the protection scope of the present invention shall be subject to the protection scope of the claims.

## Claims

1. A damping valve device, comprising:
a valve sleeve, comprising a first end and a second end that are opposite to each other in an axial direction of the valve sleeve;
a first valve core, located within the valve sleeve; and
a second valve core, located within the valve sleeve, the second valve core being closer to the second end of the valve sleeve than the first valve core;
wherein the first valve core is configured to move along the axial direction relative to the second valve core; the second valve core comprises an annular main body part and an end cap part; the end cap part is located at a side of the annular main body part close to the first valve core; the end cap part is provided with a through hole penetrating through the end cap part along the axial direction;
an orthographic projection of an end face of the first valve core close to the second valve core on a reference plane at least partially falls within an orthographic projection of the end cap part on the reference plane; the orthographic projection of the end face on the reference plane surrounds an orthographic projection of the through hole on the reference plane; the reference plane is perpendicular to the axial direction X; and
the annular main body part and the end cap part are fixedly connected or integrally formed.

2. The damping valve device according to claim **1,** wherein a shape of the end face comprises a ring shape.

3. The damping valve device according to claim **1,** wherein the orthographic projection of the end face on the reference plane completely falls within the orthographic projection of the end cap part on the reference plane.

4. The damping valve device according to claim **1,** wherein the orthographic projection of the end face on the reference plane at least partially falls within an orthographic projection of the annular main body part on the reference plane.

5. The damping valve device according to any one of claims 1 to **4,** wherein the end face is parallel to the end cap part.

6. The damping valve device according to any one of claims 1 to 5, wherein a peripheral radial dimension of the end face is smaller than a peripheral radial dimension of the end cap part.

7. The damping valve device according to any one of claims 1 to 6, wherein the peripheral radial dimension of the end cap part is smaller than a peripheral radial dimension of the annular main body part, and the peripheral radial dimension of the end face is smaller than a maximum peripheral radial dimension of the first valve core.

8. The damping valve device according to any one of claims 1 to 7, wherein an end of the first valve core close to the second valve core comprises a third end; a shape of the third end is a ring shape; the end face is a surface of the third end facing the second valve core; and
the third end comprises an opening penetrating through an outer sidewall and an inner sidewall of the third end.

9. The damping valve device according to any one of claims 1 to 8, further comprising:
an elastic element, located between the first valve core and the second valve core,
wherein one end of the elastic element is attached with the first valve core, and the other end of the elastic element is attached with the end cap part.

10. The damping valve device according to claim 9, wherein the first valve core further comprises a guide shaft extending along the axial direction; the end cap part comprises a guide hole; the guide shaft is located within the guide hole; and the elastic element is sleeved on the guide shaft.

11. The damping valve device according to any one of claims 1 to 10, wherein the valve sleeve comprises a circulation hole penetrating through an outer sidewall and an inner sidewall of the valve sleeve; and the circulation hole at least partially overlaps with the first valve core and the second valve core in a radial direction of the valve sleeve.

12. The damping valve device according to claim 11, further comprising:
a third valve core, located at a side of the first valve core away from the second valve core in the axial direction and configured to move along the axial direction relative to the first valve core,
wherein the first valve core comprises a first body part and a second body part; the second body part is closer to the second valve core than the first body part; an outer diameter of the second body part is greater than an outer diameter of the first body part; a surface of a portion of the second body part, that is not overlaid by the first body part, close to the third valve core, a lateral surface of the first body part, and an inner wall of the valve sleeve to form an accommodating cavity;
the first body part comprises a pressure relief channel; a first port of the pressure relief channel faces the third valve core; the third valve core is configured to cover or open the first port; a second port of the pressure relief channel is communicated with the accommodating cavity;
the second body part comprises an intercepting channel: and the accommodating cavity is communicated with the circulation hole through the intercepting channel.

13. The damping valve device according to claim 12, wherein the intercepting channel is located on an outer lateral surface of the second body part; or
the intercepting channel is located within the second body part.

14. The damping valve device according to claim 12, wherein a cross-sectional dimension of the intercepting channel along an extension direction of the intercepting channel is uniform; or
the cross-sectional dimension of the intercepting channel along the extension direction of the intercepting channel is gradually varied.

15. The damping valve device according to claim 12, wherein the intercepting channel is located on an outer lateral surface of the second body part;
an inner surface of the valve sleeve comprises a mating surface opposite to the intercepting channel, and a part of the mating surface is configured to define the accommodating cavity; and
a spacing between the mating surface and a geometric center line of the intercepting channel is not equidistant in the extension direction of the intercepting channel.

16. The damping valve device according to claim 15, wherein the spacing between the mating surface and the geometric center line of the intercepting channel gradually increases or gradually decreases in the extension direction of the intercepting channel.

17. The damping valve device according to any one of claims 1 to 16, wherein the first valve core is in sliding fit with the valve sleeve along the axial direction, and the second valve core is fixedly connected with the valve sleeve.

18. The damping valve device according to any one of claims 1 to 17, further comprising:
a control unit, located at a side of the first valve core away from the second end,
wherein the control unit is connected with the first valve core to control the first valve core to move along the axial direction relative to the second valve core.

19. A damping valve device, comprising:
a valve sleeve;
a first valve core, located within the valve sleeve;
a second valve core, located within the valve sleeve. the first valve core and the second valve core being disposed oppositely along an axial direction of the valve sleeve;
a valve sheet, located between the first valve core and the second valve core in the axial direction of the valve sleeve; and
an elastic element, located at a side of the valve sheet close to the second valve core,
wherein the second valve core comprises an annular main body part and a support part located within the annular main body part; the support part is provided with a through hole penetrating through the support part along the axial direction; the elastic element comprises a first end and a second end that are opposite to each other along the axial direction; the first end is in contact fit with the valve sheet, and the second end is in contact fit with the support part of the second valve core; the valve sheet is configured to move along the axial direction relative to the second valve core under an action of the elastic element so as to form a circulation channel between the valve sheet and the second valve core; and the first valve core is configured to move along the axial direction relative to the second valve core to adjust a size of the circulation channel.

20. The damping valve device according to claim 19, wherein the valve sheet is configured to be fixed in the axial direction relative to the first valve core under the action of the elastic element.

21. The damping valve device according to claim 19, wherein a shape of the valve sheet comprises a disc shape.

22. The damping valve device according to any one of claims 19 to 21, wherein a side of the first valve core close to the valve sheet comprises a first end face, and a shape of the first end face comprises a ring shape; a side of the second valve core close to the valve sheet comprises a second end face, and a shape of the second end face comprises a ring shape;
an orthographic projection of the first end face on a reference plane at least partially falls within an orthographic projection of the valve sheet on the reference plane, and an orthographic projection of the second end face on the reference plane at least partially falls within the orthographic projection of the valve sheet on the reference plane; and
the reference plane is perpendicular to the axial direction.

23. The damping valve device according to claim 22, wherein a radial dimension of the valve sheet is greater than or equal to a radial dimension of the first end face and greater than or equal to a radial dimension of the second end face.

24. The damping valve device according to claim 22, wherein the first valve core comprises a first guide shaft that extends along the axial direction towards the second valve core; and the valve sheet and the elastic element are sleeved on the first guide shaft.

25. The damping valve device according to claim 24, wherein a guide hole extending along the axial direction is disposed in the support part of the second valve core; and the guide hole is fit with the first guide shaft such that the guide hole plays a role in guiding a motion of the first guide shaft along the axial direction.

26. The damping valve device according to claim 22, wherein a second guide shaft is disposed on the support part of the second valve core and extends along the axial direction towards the first valve core; and the valve sheet and the elastic element are sleeved on the second guide shaft.

27. The damping valve device according to claim 26, wherein a blocking structure is further disposed at an end of the second guide shaft close to the first valve core, and the blocking structure is configured to block the valve sheet from separating from the second guide shaft.

28. The damping valve device according to any one of claims 19 to 27, wherein the valve sleeve comprises a circulation hole penetrating through an outer sidewall and an inner sidewall of the valve sleeve; and the circulation hole at least partially overlaps with the valve sheet in a radial direction of the valve sleeve.

29. The damping valve device according to claim 28, further comprising:
a third valve core, located at a side of the first valve core away from the second valve core in the axial direction and configured to move along the axial direction relative to the first valve core,
wherein the first valve core comprises a first body part and a second body part; the second body part is closer to the second valve core than the first body part; an outer diameter of the second body part is greater than an outer diameter of the first body part; a portion of the second body part that is not overlaid by the first body part is close to a surface of the third valve core, a lateral surface of the first body part, and an inner wall of the valve sleeve to form an accommodating cavity;
the first body part comprises a pressure relief channel; a first port of the pressure relief channel faces the third valve core; the third valve core is configured to cover or open the first port; a second port of the pressure relief channel is communicated with the accommodating cavity;
the second body part comprises an intercepting channel. the intercepting channel penetrates through the second body part; and the accommodating cavity is communicated with the circulation hole through the intercepting channel.

30. The damping valve device according to any one of claims 19 to 29, further comprising:
a control unit, located at a side of the first valve core away from the second valve core,
wherein the first valve core is in sliding fit with the valve sleeve along the axial direction, and the second valve core is fixedly connected with the valve sleeve; and
the control unit is connected with the first valve core to control the first valve core to move along the axial direction relative to the second valve core.

31. The damping valve device according to any one of claims 1 to 30, further comprising a restoring valve, wherein the restoring valve comprises:
a sleeve part, comprising a tubular portion and a valve seat connected to an opening at one end of the tubular portion, the valve seat comprising a first circulation hole and a second circulation hole that penetrate through the valve seat;
an upper restoring circulation valve sheet, located at a side of the valve seat in an extension direction of the first circulation hole and the second circulation hole and located within the tubular portion, and configured to cover the first circulation hole; and
a lower restoring circulation valve sheet, located at a side of the valve seat opposite to the upper restoring circulation valve sheet and configured to cover the second circulation hole,
wherein the upper restoring circulation valve sheet comprises a hollowed-out part and exposes the second circulation hole through the hollowed-out part to form a first circulation channel from an inside of the restoring valve to an outside of the restoring valve;
a gap is formed between an edge of the upper restoring circulation valve sheet and an inner wall of the tubular portion; and the gap is communicated with the second circulation hole through an interval between the upper restoring circulation valve sheet and the valve seat to from a second circulation channel from the inside of the restoring valve to the outside of the restoring valve.

32. The damping valve device according to claim 31, wherein an opening of the first circulation hole close to the upper restoring circulation valve sheet comprises a flange: and the flange protrudes from the valve seat towards the upper restoring circulation valve sheet and supports the upper restoring circulation valve sheet such that the interval is formed between at least part of the upper restoring circulation valve sheet located outside the flange and the valve seat.

33. The damping valve device according to claim 31, wherein the restoring valve further comprises a columnar structure penetrating through the upper restoring circulation valve sheet, the valve seat, and the lower restoring circulation valve sheet; two ends of the columnar structure comprise a first limiting part and a second limiting part that protrude radially; and the first limiting part is located at a side of the upper restoring circulation valve sheet away from the valve seat and the second limiting part is located at a side of the lower restoring circulation valve sheet away from the valve seat to limit positions of the upper restoring circulation valve sheet and the lower restoring circulation valve sheet in an axis direction of the columnar structure.

34. The damping valve device according to claim 33, wherein the restoring valve further comprises a conical spring located between the first limiting part and the upper restoring circulation valve sheet and comprising a first end having a small diameter and a second end having a large diameter; the first end is abutted against the first limiting part, and the second end is abutted against the upper restoring circulation valve sheet; and the second end at least partially overlaps with the first circulation hole in an axis direction of the tubular portion.

35. The damping valve device according to claim 33. wherein the upper restoring circulation valve sheet comprises a penetration hole in a middle that allows the columnar structure to pass therethrough; and the hollowed-out part of the upper restoring circulation valve sheet comprises a plurality of hollowed-out sub-parts, and the plurality of hollowed-out sub-parts are uniformly arranged at a peripheral of the penetration hole.

36. The damping valve device according to claim 35, wherein the penetration hole is communicated with the plurality of hollowed-out sub-parts.

37. The damping valve device according to claim 31. wherein the lower restoring circulation valve sheet comprises a plurality of sub-sheet structures stacked between the valve seat and the second limiting part; and diameters of the plurality of sub-sheet structures decrease gradually in a direction from the valve seat to the second limiting part.

38. The damping valve device according to claim 33, wherein at least part of an inner edge of the upper restoring circulation valve sheet is in contact with the columnar structure such that the columnar structure limits a position of the upper restoring circulation valve sheet in a radial direction thereof.

39. The damping valve device according to claim 35. wherein the upper restoring circulation valve sheet comprises a plate-like spring structure.

40. The damping valve device according to claim 39. wherein the upper restoring circulation valve sheet comprises a plurality of sub-sheet structures stacked between the valve seat and the first limiting part; and diameters of the plurality of sub-sheet structures decrease gradually in a direction from the valve seat to the first limiting part;
each of the sub-sheet structures comprises a first through hole in a middle and a second through hole located at a periphery of the first through hole; second through holes of the plurality of sub-sheet structures are communicated with one another to form the hollowed-out part; and first through holes of the plurality of sub-sheet structures are communicated with one another to form the penetration hole.

41. The damping valve device according to claim 40, wherein a sub-sheet structure of the plurality of sub-sheet structures closest to the first limiting part is a first sub-sheet structure, and other sub-sheet structures of the plurality of sub-sheet structures between the first sub-sheet structure and the valve seat are second sub-sheet structures;
a positioning protrusion protruding towards the valve seat is disposed at a periphery of the first through hole of the first sub-sheet structure; a positioning groove is formed in a sidewall of the first through hole of each of the second sub-sheet structures; and the positioning protrusion of the first sub-sheet structure is inserted into positioning grooves of the second sub-sheet structure.

42. The damping valve device according to any one of claims 1 to 30, further comprising a restoring valve comprising:
a sleeve part, comprising a tubular portion and a valve seat connected to an opening at one end of the tubular portion, the valve seat comprising a first circulation hole and a second circulation hole that penetrate through the valve seat;
an upper restoring circulation valve sheet, located at a side of the valve seat in an extension direction of the first circulation hole and the second circulation hole and located within the tubular portion, and configured to cover the first circulation hole; and
a lower restoring circulation valve sheet, located at a side of the valve seat opposite to the upper restoring circulation valve sheet and configured to cover the second circulation hole,
wherein the upper restoring circulation valve sheet comprises a hollowed-out part and exposes the second circulation hole through the hollowed-out part to form a first circulation channel from an inside of the restoring valve to an outside of the restoring valve;
the upper restoring circulation valve sheet comprises a first positioning groove; the restoring valve further comprises a positioning structure; and at least part of the positioning structure is located within the first positioning groove such that the upper restoring circulation valve sheet is positioned along a circumferential direction of the upper restoring circulation valve sheet relative to the valve seat.

43. The damping valve device according to claim 42, wherein the valve seat comprises a second positioning groove disposed corresponding to the first positioning groove: and at least part of the positioning structure is disposed within the first positioning groove and within the second positioning groove to circumferentially position the upper restoring circulation valve sheet relative to the valve seat.

44. The damping valve device according to claim 43. wherein the upper restoring circulation valve sheet comprises a first penetration hole in a middle; the valve seat comprises a second penetration hole disposed corresponding to the first penetration hole; the lower restoring circulation valve sheet comprises a third penetration hole disposed corresponding to the first penetration hole and the second penetration hole;
the restoring valve further comprises a columnar structure passing through the first penetration hole, the second penetration hole, and the third penetration hole; the first positioning groove is located in a sidewall of the first penetration hole; and the second positioning groove is located in a sidewall of the second penetration hole.

45. The damping valve device according to claim 44. wherein the positioning structure is disposed on the columnar structure, or the positioning structure and the columnar structure are integrally formed.

46. The damping valve device according to claim **44,** further comprising a snap ring sleeved on the columnar structure, and the snap ring comprises the positioning structure.

47. The damping valve device according to claim 42, wherein the positioning structure is disposed on the valve seat, or the positioning structure and the valve seat are integrally formed.

48. The damping valve device according to any one of claims 42 to 47, wherein an opening of the first circulation hole close to the upper restoring circulation valve sheet comprises a first flange, the first flange protrudes from the valve seat towards the upper restoring circulation valve sheet and supports the upper restoring circulation valve sheet; a first intercepting groove recessed towards the valve seat is formed in a sidewall of the first flange close to the upper restoring circulation valve sheet; and the first intercepting groove is communicated with the first circulation hole to form a first intercepting channel.

49. The damping valve device according to any one of claims 42 to 47, wherein the upper restoring circulation valve sheet comprises a plurality of first sub-sheet structures stacked in the extension direction of the first circulation hole and the second circulation hole; a second intercepting groove is formed in a peripheral wall of a first sub-sheet structure of the plurality of first sub-sheet structures closest to the valve seat; and the second intercepting groove is communicated with the first circulation hole to form a second intercepting channel.

50. The damping valve device according to any one of claims 42 to 47, wherein an opening of the second circulation hole close to the lower restoring circulation valve sheet comprises a second flange, the second flange protrudes from the valve seat towards the lower restoring circulation valve sheet and supports the lower restoring circulation valve sheet; a third intercepting groove recessed towards the valve seat is formed in a sidewall of the second flange close to the lower restoring circulation valve sheet; and the third intercepting groove is communicated with the second circulation hole to form a third intercepting channel.

51. The damping valve device according to any one of claims 42 to 47, wherein the lower restoring circulation valve sheet comprises a third positioning groove disposed corresponding to the second positioning groove; and at least part of the positioning structure is further located within the third positioning groove such that the lower restoring circulation valve sheet is positioned along a circumferential direction of the lower restoring circulation valve sheet relative to the valve seat.

52. The damping valve device according to claim 51, wherein the lower restoring circulation valve sheet comprises a plurality of second sub-sheet structures stacked in the extension direction of the first circulation hole and the second circulation hole; a fourth intercepting groove is formed in a peripheral wall of a second sub-sheet structure of the plurality of second sub-sheet structures closest to the valve seat; and the fourth intercepting groove is communicated with the second circulation hole to form a fourth intercepting channel.

53. A shock absorber, comprising the damping valve device according to any one of claims 1 to 52.
